# EUROPEAN PATENT APPLICATION

(11) **EP 1 052 824 A2**
(43) Date of publication of application: **15.11.2000**
(21) Application number: 00110154.2
(22) Date of filing: 12.05.2000
(51) Int. Cl.: H04L 29/06, H04Q 7/24

(54) **Radio server system**

(30) Priority: 14.05.1999 JP 13502399
(71) Applicant: MITSUBISHI MATERIALS CORPORATION, Chiyoda-ku, Tokyo 100 (JP)
(72) Inventor: Tari, Kazuyoshi, Mitsubishi Material Corporation, Omiya-shi, Saitama 330-0835 (JP); Unoki, Hiroyuki, Mitsubishi Material Corporation, Omiya-shi, Saitama 330-0835 (JP); Nagira, Tumoru, Mitsubishi Material Corporation, Omiya-shi, Saitama 330-0835 (JP)
(74) Representative: HOFFMANN - EITLE

(57) **Abstract**

The present invention relates to a radio server system. The radio server system is operated the basic components represented by a radio server, a base station radio and a mobile radio. The radio server is used to connect a mobile terminal to the Internet by establishing radio communication between the base station radio, that is connected to the radio server, and the mobile radio, that is connected to the mobile terminal. The radio server includes: a backbone input/output section for exchanging packet data with the Internet; a base station input/output section for exchanging packet data with the base station radio that communicates with the mobile radio by radio signals; a connection processing section for connecting the mobile terminal to the Internet; and a memory section for storing data required by the connection processing section. The base station radio connects the mobile terminal to the radio server by establishing radio communication with the mobile terminal, and includes: a radio server input/output section for exchanging packet data with the radio server; a mobile radio input/output section for exchanging packet data with the mobile radio by radio signals; a connection processing section for connecting the mobile radio to the radio server; and a memory section for storing data required by the connection processing section. The mobile radio establishes radio communication with the base station radio connected to the radio server, and includes: a base station input/output processing section for exchanging packet data with the base station radio; the mobile terminal input/output processing section for exchanging packet data with the mobile terminal; a connection processing section for connecting the mobile terminal to the base station radio; a memory section for storing data required by the connection processing section.

## Description

### BACKGROUND OF THE INVENTION

### Field of the Invention

The present invention relates to a radio server for providing a wireless connection for a terminal to the Internet, a base station radio and a mobile radio.

This application is based on a patent application No. Hei 11-135023 filed in Japan, the content of which is incorporated herein by reference.

### Description of the Related Art

In recent years, needs for mobile computing have been increasing. Mobile computing exchanges data by connecting a computer to the existing Internet using mobile telephone circuit and the like. Because the circuit used for connection is based on mobile telephone circuits, it has an advantage that communication can be made from mobile locations, such as automobile.

However, in the conventional communication apparatus, the communication protocol being used is based on fixed communication devices, and therefore, it has not been possible to use the system when a mobile terminal device moves out of its subnet district. Also, because telephone circuitry is used, there have been problems such as lengthy waiting for obtaining a connection or inaccessibility to the circuit when the line is congested.

### SUMMARY OF THE INVENTION

It is an object of the present invention to provide a radio communication system comprised at least of a radio server, a base station radio, a mobile radio and a mobile terminal to enable the mobile terminal to be connected without a telephone circuit to the Internet.

According to the present invention, the object has been achieved in a radio server, to connect a mobile terminal to the Internet by establishing radio communication between a base station radio, that is connected to the radio server, and a mobile radio that is connected to the mobile terminal, comprising: a backbone input/output section for exchanging packet data with the Internet; a base station input/output section for exchanging packet data by radio signals between the mobile radio and the base station radio; a connection processing section for connecting the mobile terminal to the Internet; and a memory section for storing data required by the connection processing section.

Also, according to the present invention, the object has been achieved by the use of a base station radio to connect a mobile terminal to a radio server by establishing radio communication with the mobile terminal, comprising: a radio server input/output section for exchanging packet data with the radio server; a mobile radio input/output section for exchanging packet data with the mobile radio by radio signals; a connection processing section for connecting the mobile radio to the radio server; and a memory section for storing data required by the connection processing section.

Also, according to the present invention, the object has been achieved by the use of a mobile radio to establish radio communication with a base station radio that is connected to a radio server comprising: a base station input/output processing section for exchanging packet data with the base station radio; a mobile terminal input/output processing section for exchanging packet data with a mobile terminal; a connection processing section for connecting the mobile terminal to the base station radio; and a memory section for storing data required by the connection processing section.

Additionally, the present invention provides an advantage that the present invention enables a computer to access the Internet to exchange data without the use of a telephone circuit. Also, because radio signals are used for communication, the Internet can be accessed from a mobile location such as an automobile. Also, because a fixed protocol for a fixed communication system is not used, the present system provides an advantage that a terminal is free to move from one subnet district to another subnet district without interrupting ongoing communication.

It should be noted that the reference numerals recited in the claims do not affect the interpretation of the claims.

### BRIEF EXPLANATION OF THE DRAWINGS

Figure 1 is a block diagram of an overall configuration of a first embodiment of the radio communication system of the present invention.
Figure 2 is a block diagram of the configuration of the radio server 1-n shown in Figure 1.
Figure 3 is a block diagram of the configuration of the base station radio 2-n shown in Figure 1.
Figure 4 is a block diagram of the configuration of the mobile radio 3-n shown in Figure 1.
Figure 5 is a diagram to explain authentication and route processing.
Figure 6 is a diagram to explain authentication and route processing.
Figure 7 is a diagram to explain authentication and route processing.
Figure 8 is a diagram to explain authentication and route processing.
Figure 9 is a diagram to explain authentication and route processing.
Figure 10 is a diagram to explain authentication and route processing.
Figure 11 is a diagram to explain authentication and route processing.
Figure 12 is a diagram to explain authentication and route processing.
Figure 13 is a diagram to explain authentication and route processing.
Figure 14 is a diagram to explain cooperative algorithm processing.
Figure 15 is a diagram to explain cooperative algorithm processing.
Figure 16 is a diagram to explain cooperative algorithm processing.
Figure 17 is a diagram to explain cooperative algorithm processing.
Figure 18 is a diagram to explain cooperative algorithm processing.
Figure 19 is a diagram to explain cooperative algorithm processing.
Figure 20 is a diagram to explain access and packet processing.
Figure 21 is a diagram to explain access and packet processing.
Figure 22 is a diagram to explain access and packet processing.
Figure 23 is a diagram to explain access and packet processing.
Figure 24 is a diagram to explain access and packet processing.
Figure 25 is a diagram to explain roaming/handoff processing.
Figure 26 is a diagram to explain roaming/handoff processing.
Figure 27 is a diagram to explain roaming/handoff processing.
Figure 28 is a diagram to explain roaming/handoff processing.
Figure 29 is a diagram to explain roaming/handoff processing.
Figure 30 is a diagram to explain roaming/handoff processing.
Figure 31 is a diagram to explain roaming/handoff processing.
Figure 32 is a diagram to explain roaming/handoff processing.
Figure 33 is a diagram to explain roaming/handoff processing.
Figure 34 is a diagram to explain in-range search processing.
Figure is a diagram to explain in-range search processing.
Figure 36 is a diagram to explain in-range search processing.
Figure 37 is a diagram to explain in-range search processing.
Figure 38 is a diagram to explain dual scanning processing.
Figure 39 is a diagram to explain dual scanning processing.
Figure 40 is a diagram to explain dual scanning processing.
Figure 41 is a diagram to explain dual scanning processing.
Figure 42 is a diagram to explain PUSH service processing.
Figure 43 is a diagram to explain PUSH service processing.
Figure 44 is a diagram to explain PUSH service processing.
Figure 45 is a diagram to explain PUSH service processing.
Figure 46 is a diagram to explain PUSH service processing.
Figure 47 is a diagram to explain broadcast processing.
Figure 48 is a diagram to explain broadcast processing.
Figure 49 is a diagram to explain broadcast processing.
Figure 50 is a diagram to explain broadcast processing.
Figure 51 is a diagram to explain broadcast processing.
Figure 52 is a diagram to explain broadcast processing.
Figure 53 is a diagram to explain multicasting processing.
Figure 54 is a diagram to explain multicasting processing.

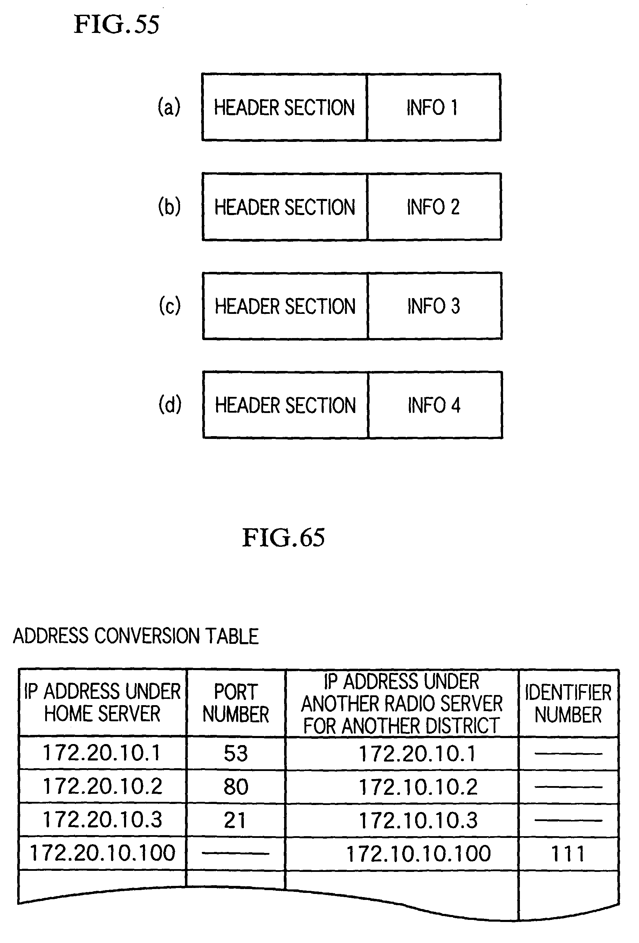

Figure 55 is a diagram to explain multicasting processing.
Figure 56 is a diagram to explain remote NAT processing.
Figure 57 is a diagram to explain remote NAT processing.
Figure 58 is a diagram to explain DHC relay agent processing.
Figure 59 is a diagram to explain DHC relay agent processing.
Figure 60 is a diagram to explain DHC relay agent processing.
Figure 61 is a diagram to explain DHC relay agent processing.
Figure 62 is a diagram to explain pseudo-proxy processing.
Figure 63 is a diagram to explain pseudo-proxy processing.
Figure 64 is a diagram to explain pseudo-proxy processing.
Figure 65 is a diagram to explain pseudo-proxy processing.
Figure 66 is a diagram to explain search-and-call processing.
Figure 67 is a diagram to explain search-and-call processing.
Figure 68 is a diagram to explain search-and-call processing.
Figure 69 is a diagram to explain search-and-call processing.
Figure 70 is a diagram to explain search-and-call processing.
Figure 71 is a diagram to explain search-and-call processing.
Figure 72 is a diagram to explain time correction processing.
Figure 73 is a diagram to explain search-and-call processing.
Figure 74 is a diagram to explain search-and-call processing.
Figure 75 is a diagram to explain remote control processing.
Figure 76 is a diagram to explain remote control processing.
Figure 77 is a diagram to explain remote control processing.
Figure 78 is a diagram to explain malfunction processing.
Figure 79 is a diagram to explain malfunction processing.

### DESCRIPTION OF THE PREFERRED EMBODIMENTS

It should be noted that the following embodiments are presented for illustrative purposes only, and are not intended to restrict the invention in any manner. It should also be noted that combinations of the features explained in the embodiment may not necessarily be required in all cases.

In the following, a first embodiment of the radio server, base station radio and mobile radio will be explained with reference to the drawings. Also, in the following presentation, "connected" refers to a wired connection and "communicate" generally refers to communication by radio signals.

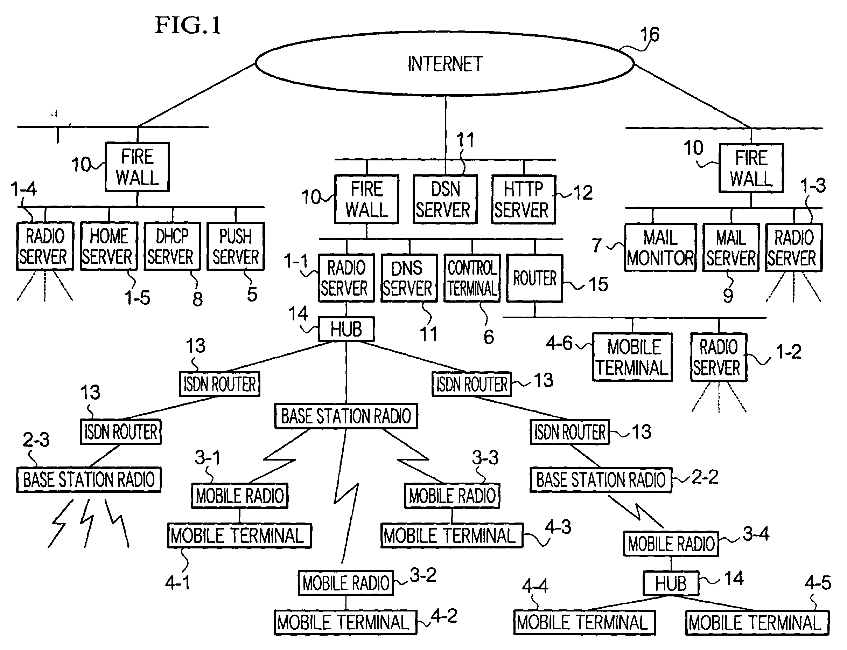

Figure 1 is a block diagram of the overall configuration of the embodiment. The system includes: radio servers 1-1~1-5 individually connected to the network; base station radios 2-1∼3 connected to the radio server 1-1; mobile radios 3-1-4 to establish radio communication with a base station radio 2-n; mobile terminals 4-1~5 connected to the mobile radio 3-n for connecting to the Internet by way of the radio server 1-n; a PUSH function server 5; a control terminal 6; a mail monitor 7; a DHCP server 8; a mail server 9; a firewall server 10 (indicated as firewall in Figure 1); a DNS server 11; an HTTP server 12; an ISDN router 13; a HUB 14; a router 15; and Internet 16.

In Figure 1, the base station radio 2-n and the mobile radio 3-n communicate with each other by radio signals, but communications between other devices are carried out though wires. Also, the base station radio 2-n to be connected to radio servers 1-2, 1-3, 1-4 is omitted. Also, the base station radio to communicate with the mobile radio 3-1 is not limited to a particular base station radio 2-1, it may be any of the base station radios 2-n. Further, the methods and devices for connecting to ISDN router 13 and HUB 14 may be changed as necessary.

Also, the number of devices other than radio server 1-n may be increased or decreased to suit the needs.

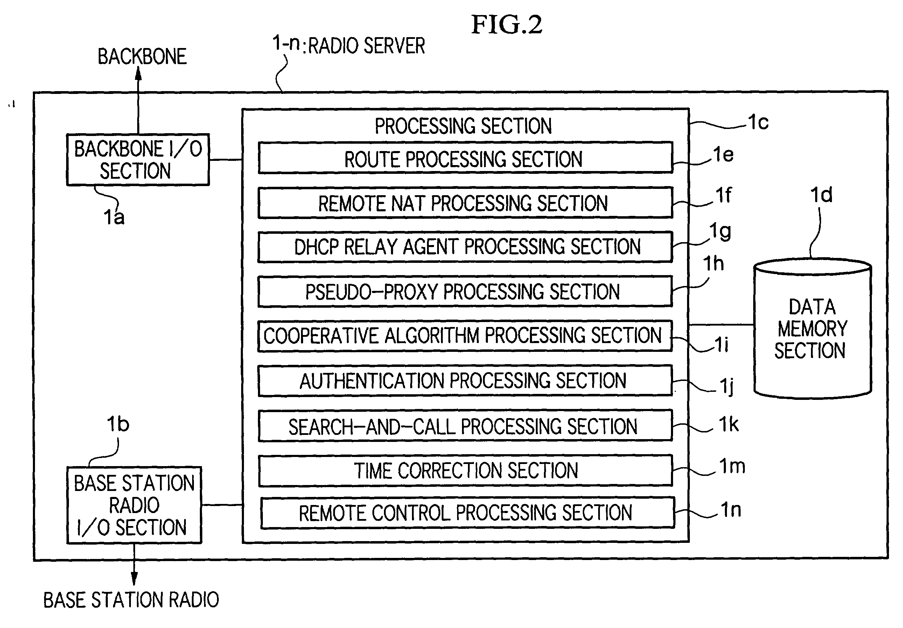

Figure 2 is a block diagram of the configuration of the radio server 1-n shown in Figure 1. The system includes: a backbone input/output device 1a, which means that the devices are located on the Internet side in relation to the radio server 1-n; an input/output device 1b located on the base station side for performing tasks related to data input/output between the radio server 1-n and the base station radio 2-n; a processing section 1c of the radio server 1; and a data memory section 1d for storing data necessary for the processing section 1c to perform functions. The processing section 1c is comprised by: a route processing section 1e; a remote NAT processing section 1f; a DHCP relay agent processing section 1g; a pseudo-proxy processing section 1i; an authentication processing section 1j; a search-and-call processing section 1k; time correction processing section 1m and a remote control processing section 1n. Details of each processing will be explained later.

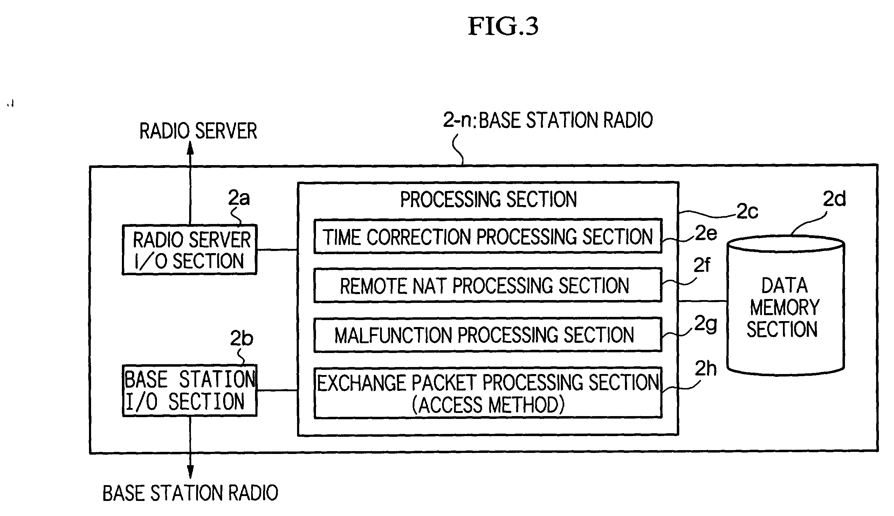

Figure 3 is a block diagram of the configuration of the base station radio 2-n shown in Figure 1. The configuration includes: an input/output device 2a located on the radio server side for performing tasks related to data input/output with the radio server 1-n; an input/output device 2b located on the mobile radio side for performing tasks related to data input/output between the base station radio 2-n and a mobile radio 3-n; a processing section 2c of the base station radio 2-n; and a data memory section 2d for storing data necessary for the processing section 2c to perform functions. The processing section 2c is comprised by: a time correction processing section 2e; a remote control processing section 2f; a malfunction processing section 2g; and a packet processing section 2h. Detailed steps of each processing will be explained later.

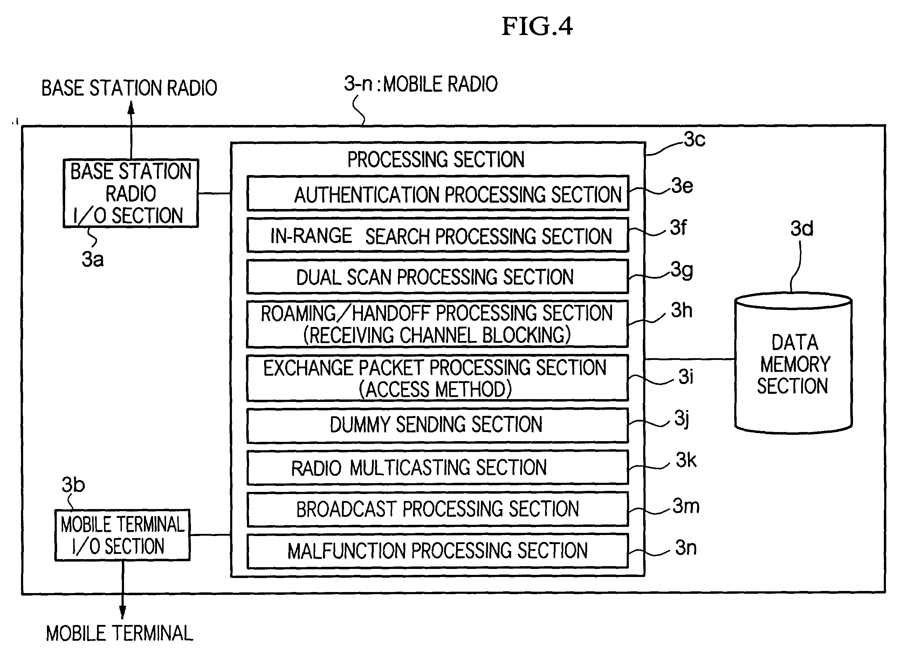

Figure 4 is a block diagram of the configuration of the mobile radio 3-n shown in Figure 1. The configuration includes: an input/output device 3a located on the radio server side; an input/output device 3b located on the mobile radio side for performing tasks related to data input/output between the mobile radio 3-n and a mobile terminal 4-n; a processing section 3c of the mobile radio 3-n; and a data memory section 3d for storing data necessary for the processing section 3c to perform functions. The processing section 3c is comprised by: an authentication processing section 3e; an in-range search processing section 3f; a dual scan processing section 3g; a roaming/handoff section 3h; a packet processing section 3i; dummy processing section 3j; a radio IP multicast processing section 3k; a broadcast processing section 3m; and malfunction processing section 3n. Details of each processing will be explained later.

Next, each processing procedure will be explained in succession using practical examples.

### [Authentication and Route Processing]

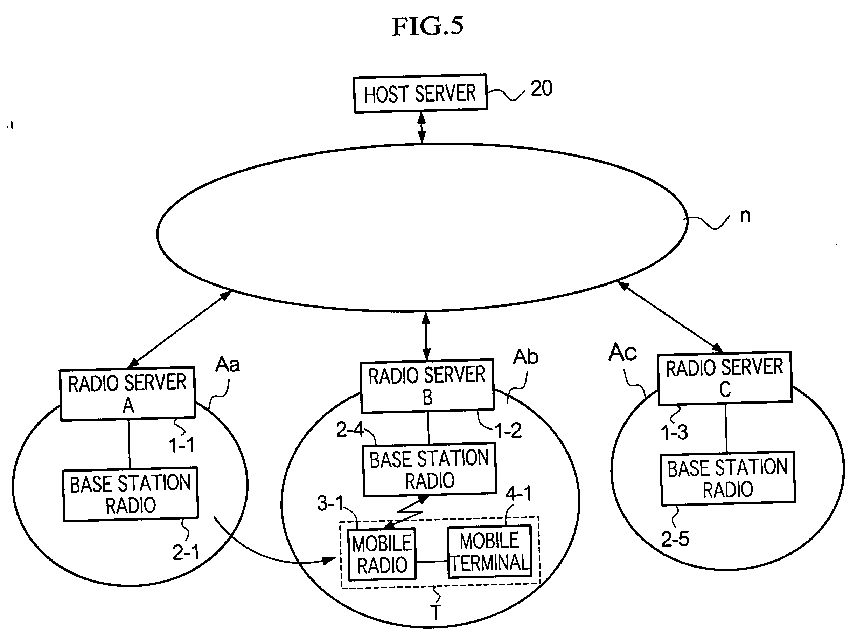

Figure 5 is a block diagram of the configuration of an embodiment. Included in the configuration are: a host server 20; a network n to which the host server 20 is connected; a radio server 1-n connected to the network n; subnetworks Aa, Ab, Ac operating under the control of the radio server 1-n; a base station radio 2-n connected to the radio server 1-n, and a plurality of base station radio 2-n are served by one radio server 1-n (in the diagram, only one radio server 1-n is shown for one base station radio 2-n); a terminal device T communicates with the radio server 1-n by radio signals, and is a general descriptive term to include a mobile radio 3-1 and a mobile terminal 4-1 connected to the mobile radio 3-1.

Here, the host server 20 may be a radio server 1-n that communicates with the terminal by radio signals, or may not necessarily have the radio capability.

In the most block diagrams of this specification, these are not full described drawings, that is, the elements, for example, a fire wall, various server such as mail server, rooter etc. which are generally used in conventional broadcasting Internet communication, are omitted fittingly. So, these drawings should be interpreted as the omitted elements are present in case by case. Further, it is obvious that the connection between a radio server and Internet is possible with each radio server respectively or with an assemblage of every radio server.

The terminal device T may have as its home radio server any of the radio servers 1-n connected to the network n. The home radio server for the terminal T shown in Figure 1 is the radio server C1-3, in this case.

Next, the operation of the radio server, base station radio and mobile radio will be explained with reference to the diagrams.

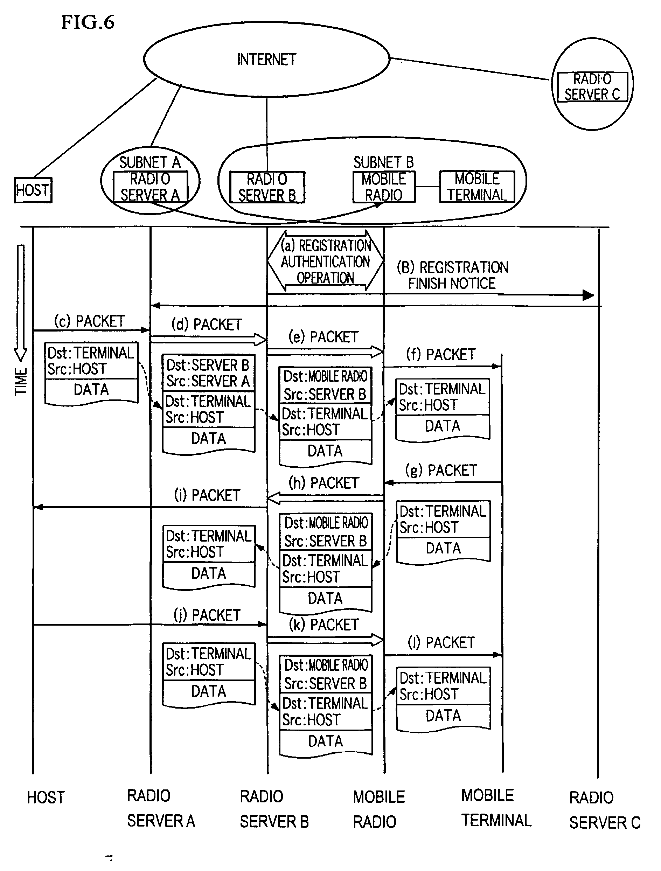

Figure 6 is an illustration of the operation of the radio server, base station radio and mobile radio with the passage of time. In Figure 6, "Dst" represents an IP address of the receiver, and "Sr" represents an IP address of the sender.

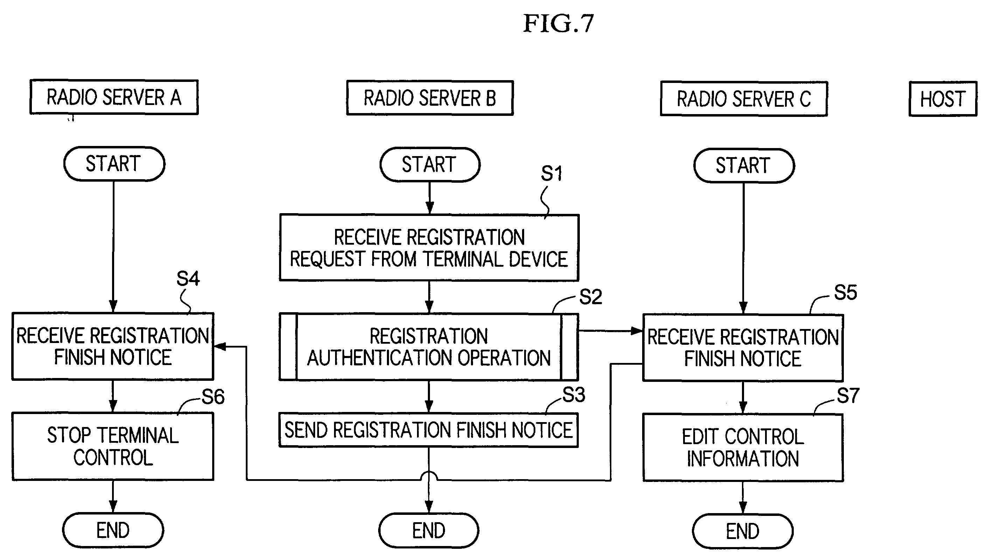

Figures 7, 8 and 9 are flowcharts showing the operational steps of the radio server, base station radio and the mobile radio.

In this case, the home radio server for the terminal device T is the radio server C1-3, and currently, the terminal device T is assumed to be operating under the control of the radio server A1-1.

First example relates to a case of the terminal device T moving from a subnetwork Aa of the radio server A1-1 to another subnetwork Ab of the radio server B1-2.

Since it is necessary again to do new request and authentication of registration when the terminal device T moves to another different server range, first, the terminal device T sends a request to the radio server B1-2, to obtain a terminal registration approval and an IP address for the mobile radio 3-n (refer to Figure 6A and step S1 in Figure 7). In response, radio server B1-2 issues a registration notice and an IP address (refer to sequence (a) in Figure 6, and step S2 in Figure 7). These steps enable the mobile radio 3-n to operate under the control of the radio server B1-2.

The steps for issuing the registration approval for the mobile radio 4-n and IP address will be explained later.

Next, radio server B1-2 notifies radio server C1 -3 which is its home radio server that the terminal device T has moved from the control district of the radio server A1-1 to the control district of the radio server B1-2, and notifies the radio server C1 -3 that the terminal device T has moved from the district under the control of radio server A1-1 to the district under the control of the radio server B1-2 and that registration authentication step has been completed (Figure 6, sequence (a), and step S3 in Figure 7).

Next, the radio server C1-3 which is the home radio server responds to the registration completion notice from the radio server B1-2 by notifying the radio server A1-1 that the terminal device T has moved to a district under the control of radio server B1-2 (step S5 in Figure 7). Thus, the radio server A1-1 receives the registration completion notice (step S4 in Figure 7), and ceases to control terminal device T (step S6 in Figure 7). Also, the radio server C1 -3 (home radio server) records that the terminal device T is under the control of the radio server B1-2 and edits the control information (step S7 in Figure 7).

Also, by notifying the radio server A1-1, that the terminal device T has moved, by way of radio server C1-3 which is its home radio server, the home server is able to know where the terminal device T is operating currently.

By following such steps, the terminal device T is able to relocate itself to any district under the control of other radio servers.

Next, the operation of the host server 20 to send a packet to the terminal device T will be explained with reference to Figures 4 and 6.

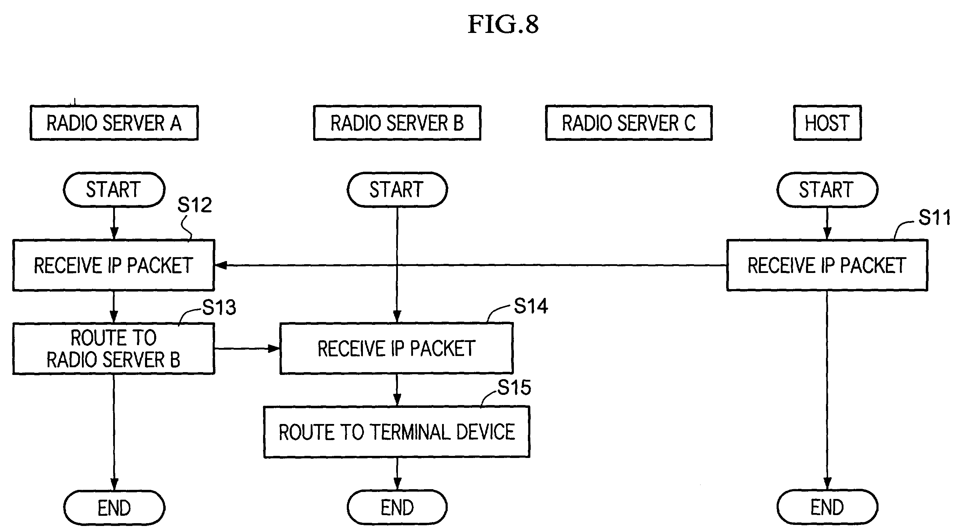

First, the host server 20 sends an IP packet by way of the network n (step S11, Figure 8). At this time, because the host server 20 has not been informed that the terminal device T is not under the control of server B1-2, the packet sent from the host server 20 is sent to the radio server A1-1 that the terminal device had previously been connected (Figure 6, sequence (c)).

When the radio server A1-1 receives the packet (Figure 8, step S12), the packet is routed to the radio server B1-2 (Figure 8, step S13, Figure 6, sequence (d)), which receives the packet (Figure 8, step S14). The radio server B1-2 further routes the packet to the mobile radio 3-1 of the terminal device T that is currently under its control (Figure 8, step S15), and sends the packet to the mobile radio 3-1 (refer to Figure 6, sequence (e)). The packet is further sent to the mobile terminal 4-1 (Refer to Figure 6, sequence (f)).

By following the steps described above, the terminal device T can receive the packet sent from the host server 20.

Next, the operation of sending a packet from the terminal device T to the host server 20 will be explained with reference to Figures 6, 9 and 10.

First the mobile terminal 4-1 sends a packet to the mobile radio 3-1 (Figure 6, sequence (g)). Then, the mobile radio 3-1 sends the received packet by way of the radio server B 1-2 (Figure 6, sequence (h)).

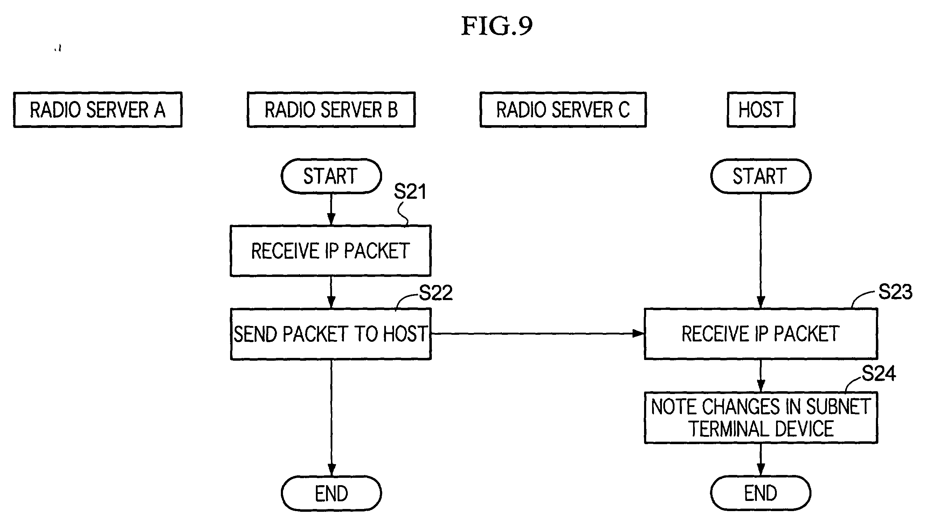

Next, the radio server B1-2 receives the packet (Figure 9, step S21), and routes it to the host server 20, and sends the IP packet received from the terminal device T to the host server 20 (Figure 6, sequence (i), Figure 9, step S22).

Next, the host server 20 receives the packet (Figure 9, step S23). At this time, the host server 20 is able to know that the terminal device T is under the control of the radio server B1-2 based on the address of the original sender of the packet (Figure 9, step S24), and therefore, all the packet received henceforth will be sent directly to the radio server B1-2.

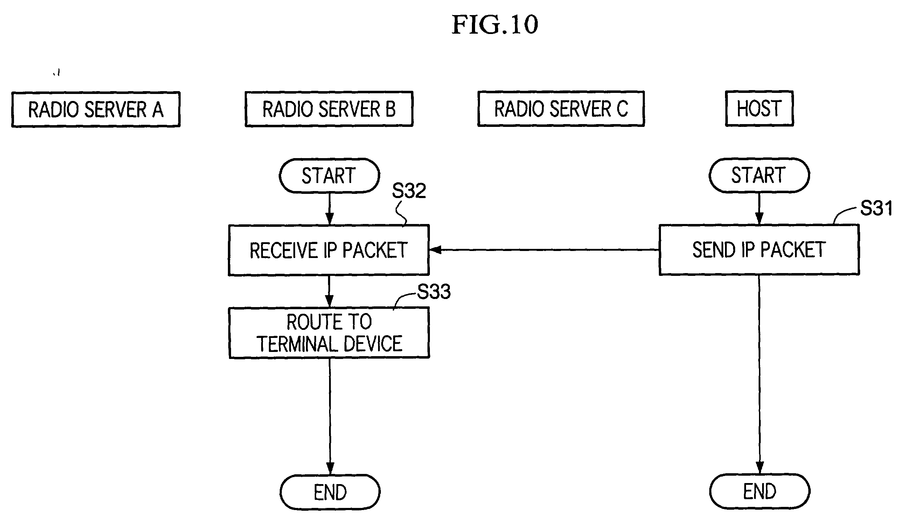

Next, when the host server 20 sends a packet to the radio server B1-2, first, the packet is sent to the radio server B1-2 (Figure 6, sequence (j), Figure 10, step S10).

Next, the radio server B1-2 receives the packet (Figure 10, step S32), and sends the packet to the mobile radio 3-1 (Figure 6, sequence (k)) by routing it to the terminal device T (Figure 10, step S33). The packet is further sent to the terminal device T(Figure 6, sequence (1).

Accordingly, the system is arranged so that IP packet is re-routed to the terminal device T only when the packet transfer process has been completed, so that there is no need to inform all the host terminals every time the terminal device T moves from one control district to another control district. Therefore, convergence of signal traffic in the communication circuits is prevented.

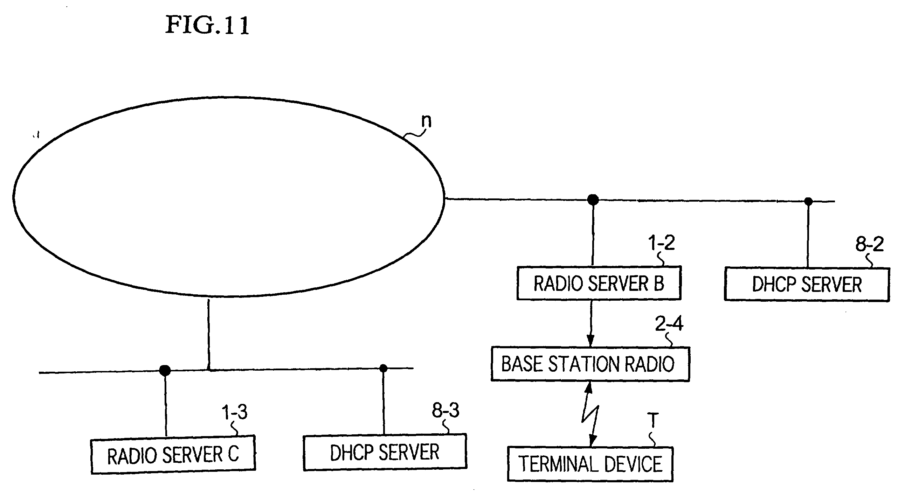

Next, the operation of issuing an IP address for the mobile terminal 4-n will be explained with reference to Figure 11. As stated before, a server, rooter or firewall etc. which has not direct relation to this explanation is omitted in Fig 11. And in this case, there is no problem if a DHCP server is present at the same hardware including a radio server.

First, the terminal device T outputs an IP address request to the radio server B1-2 at the time of turning on the power to the terminal.

Next, the radio server B1-2 deduces the home radio server of the terminal device T that sent the request (in this case, radio server C is the home radio server), and outputs an IP address request to the radio server C1 -3.

Next, the radio server B1-2 outputs an IP address allocation request to DHCP server 8-3 (server for issuing IP address) connected to the radio server C1-3. Then, in response, the DHCP server issues an IP address useable currently, and notifies this IP address to the radio server 1-3.

Next, the radio server C1 -3 forwards the IP address issued to the terminal device T by way of the radio server B1-2.

Here, when the radio server B1-2 is the home radio server of this terminal device T, the DHCP server 8-2 may issue the IP address.

By following the steps described above, the IP address issued by the radio server C1-3 can be used by the terminal device operating under the control of the radio server B1-2, therefore, the terminal device T appears as though it is operating under the control of radio server C1 -3 so that the packet can be sent to the terminal device T by way of the radio server B1-2.

Accordingly, when the terminal device T outputs an IP address request, the system is organized such that even when the radio server that the terminal device T is currently attempting to contact is not the home radio server, an IP address can be issued from the home radio server by way of the contacted radio server, and therefore, the terminal device T can be connected to ant radio server without altering the setting of the IP address of the terminal device T.

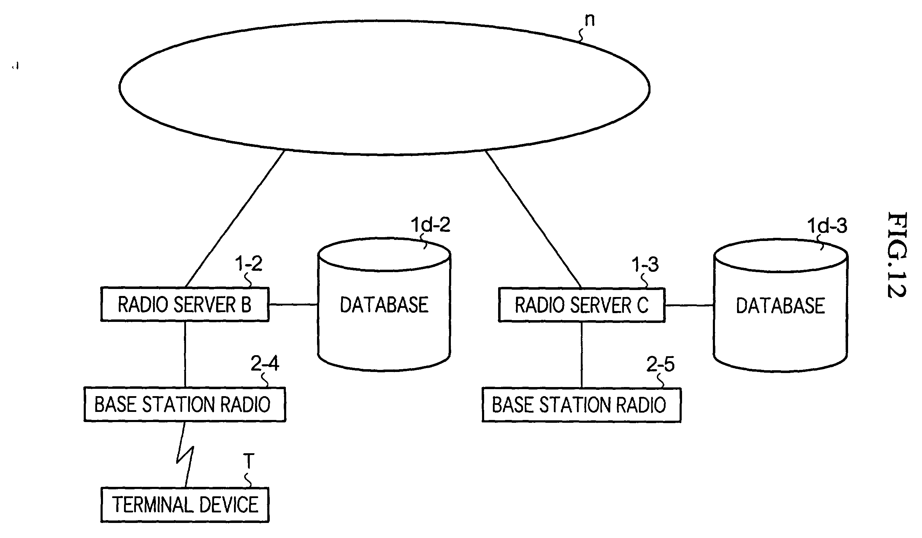

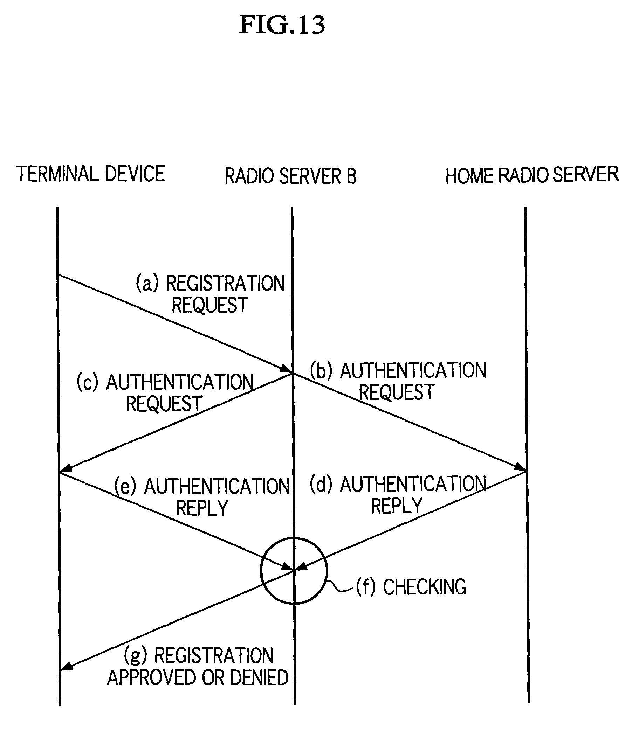

Next, the operation of registration authentication process will be explained with reference to Figures 12 and 13.

First the terminal device T sends its identity number and the registration request (Figure 13, sequence (a)) to the radio server B1-2.

Next, the radio server B1-2 searches through the database 1d-2, connected to the radio server B1-2, to find out whether or not there is authentication data for the terminal device T that is requesting a registration. If there is no authentication data in the database 1d-2, it is considered that the radio server B1-2 is not the home radio server for this terminal device T, and deduces its home radio server from the identity number received, and outputs an authentication request to this home radio server (in this case, radio server C1 -3) (Figure 13, sequence (b)).

At this time, the radio server B1-2 sends out an authentication request by attaching a random number generated by the radio server B1-2 and the identity number of the terminal device T requesting a registration, and the random number is also sent to the terminal device T (Figure 13, sequence (c)).

Next, the radio server C1 -3 (home radio server) receives the authentication request, and concurrently, performs authentication computation using the random number received and the identity number.

Next, the radio server C1 -3 returns the result of authentication processing to the radio server B1-2 (Figure 13, sequence (d)).

In the meantime, the terminal device T performs authentication processing using the random number received from the radio server B1-2, and returns the result to the radio server B1-2 (Figure 13, sequence (e)).

Next, the radio server B1-2 checks the results of authentication processing received from the radio server C1-3 and the terminal device T (Figure 13, sequence (f)). Then, if the results match, the registration request is approved (Figure 13, sequence (g)). If the results do not match, the request is considered improper, and the registration request is denied.

Also, if the authentication data are present in the database 1d-2, the requesting radio server is the home radio server, therefore, the authentication operation consists only of [registration request] (Figure 13, sequence (a)), [authentication request] (Figure 13, sequence (c)), [authentication response] (Figure 13, sequence (e)) and [registration acceptance] (Figure 13, sequence (g)).

Accordingly, authentication of terminal registration request can be carried out even when the terminal device is under the control of a radio server that is not its home radio server.

Further, by using the foregoing combination of a radio server, a base station radio and a mobile radio, the terminal device can carry out communications from any districts that it may move into, so that the system can be applied to messaging (e-mail, netnews, FTP (file transfer protocol), voice mail, web delivery, CTI (computer telephony integration), Internet phone), broadcasting, telemetering, ITS (intelligent transport system). Also, if routing function is used, "push" type communication can be performed.

### [Cooperative Algorithm]

To operate the communication system within the operating range of each base station radio in a district, it is necessary to use a communication frequency that does not interfere with the communication frequencies used by other base station radios located within their operating ranges.

However, there are times when it is necessary to switch the operating frequency, because of initial power-on or by intrusion of interference signals inside the operational district. In such cases, there is a danger of switching on a frequency without considering the frequencies used by other base station radios, resulting in generating interference signals and causing mutual modulations, thereby causing disturbances between the mobile terminal and base station radios. Cooperative algorithm resolves such a problem.

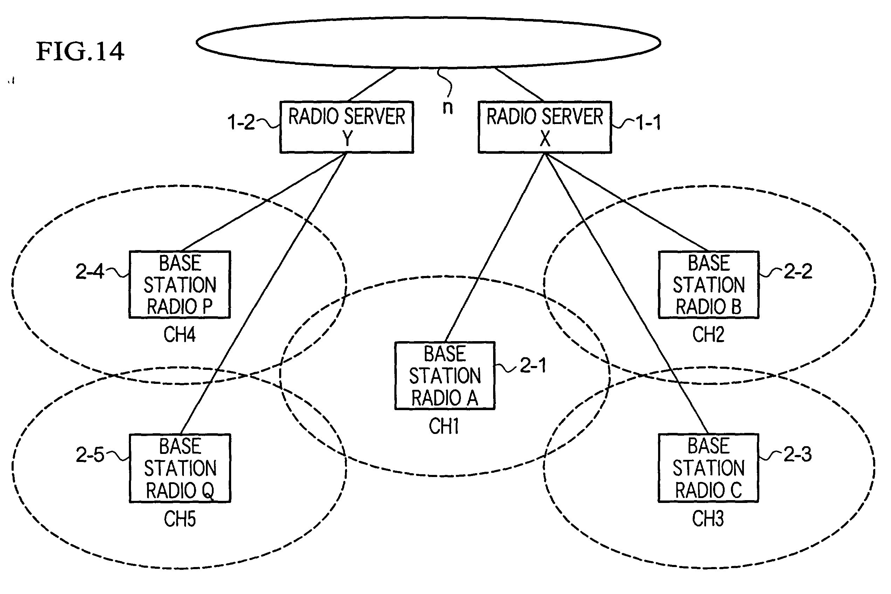

Figure 14 is a block diagram of the configurations of the radio server and the base station radio. The system includes radio servers 1-1 and 1-2, referred to as X and Y, respectively, and connected individually to the network n.

The system further includes base station radios 2-1~2-5, where the base station radios 2-1~2-3 are connected to radio server 1-1 while the base station radios 2-4, 2-5 are connected to radio server 1-2. The base station radios 2-1~2-5 are designated by A, B, C, P and Q, respectively, and can communicate with the mobile terminal (not shown) when it is located within the operating ranges of each base station radio shown by dotted lines in Figure 14. Here, an operating range of the base station radio is given by a radius, representing the distance that the base station radio can receive signals sent from the mobile terminal.

Also, the frequencies (referred to as channels henceforth) that can be used by the individual base station radios 2-1~2-5 to communicate with the mobile terminal are CH1~CH6, and each base station radio communicates with the mobile terminal located within its operating range by using one of the channels.

Also, radio servers 1-1, 1-2 are provided with functions for performing channel allocation and channel switching for the controlled base station radios. And, the device for performing these functions (referred to as channel selection section) includes a memory device for storing channels used by all the base station radios, and, also includes a frequency allocation device for determining and assigning channels to be used by the controlled base station radios, based on the contents of the memory device.

Accordingly, individual base station radios communicate with the mobile radios located within the operating range of the corresponding base station radios using the channels selected by the frequency allocation device of the radio servers controlling the individual base station radios. Here, individual radio servers determine the channels to be used by the controlled base station radios according to the following criteria.
(1) To select channels that are not being used by adjacent base station radios.
(2) When there are many channels meeting the criterion (1), to select channels such as less mutual interference occurs by considering primary adjacent base stations radios as well as secondary adjacent base stations that are neighbors of the primary adjacent base station radios.

Also, radio servers 1-1, 1-2 are each provided with a notice device for notifying channel information, including controlled base station radios and corresponding channels used by these base station radios, to other radio servers by way of the network n. Also, radio servers 1-1, 1-2 are each provided with a memory editing device for altering the contents stored in the memory device according to the channel information sent by other radio servers.

Accordingly, radio server 1-1 notifies channel information of controlled base station radios to the radio server 1-2, and radio server 1-2 notifies channel information for the controlled base station radios 2-4, 2-5 to radio server 1-1. And, each radio server edits the currently used channels of the base station radios stored in the memory device, according to the notified channel information.

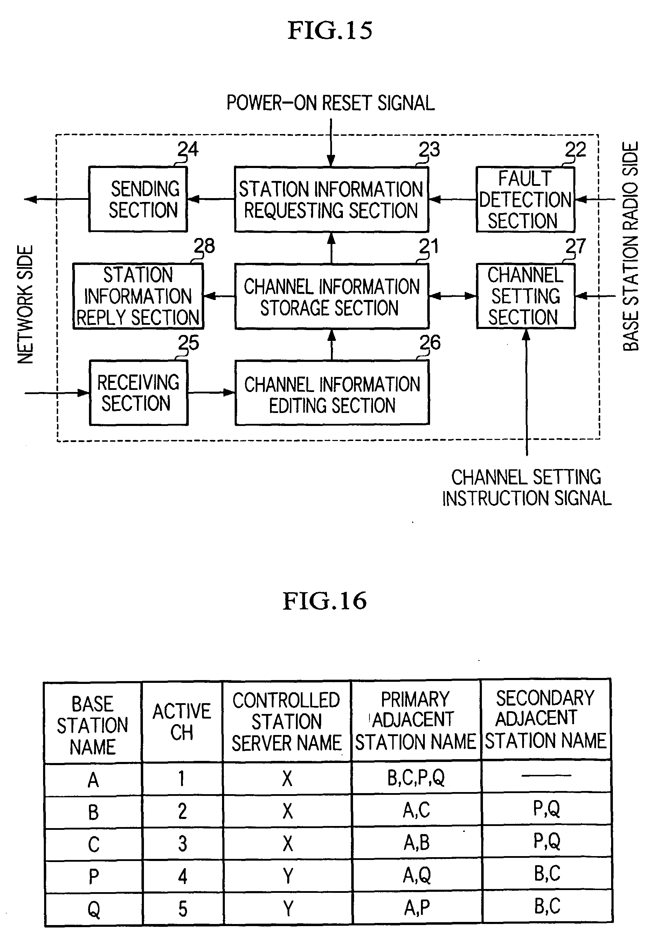

Next, specific examples of the operation of the channel selection section will be presented with reference to Figures 15∼19.

Figure 15 is a block diagram of the configuration of the channel selection section in the radio servers 1-1, 1-2, and includes a channel information memory section 21. As shown in the table in Figure 16, the columns headings indicate, from the left, radio server, active channel, control server name, primary adjacent base station radio, and secondary adjacent base station radio. The memory section stores channel data for each base station radio A, B, C, P and Q, corresponding to these headings: that is, currently active channels, radio server names under control, names of primary neighbor base station radios, and the names of secondary neighbor base station radios.

A fault detection section 22 is provided to detect faults occurring inside the operating range of controlled base station radios, and identify the name of the faulty base station radio. A station information requesting section 23 outputs channel information request signals to all other radio servers, by referencing the contents stored in the memory section 21, to obtain channel information including names of the controlled base station radios and active channels. This action is started under the following conditions: when its own power-on signal or reset signal is turned on, or when a fault is detected by the own fault detection section 22.

A sending section 24 sends a channel information request signal output from the station information requesting section 23 to the network n. Signals are received in the signal reception section 25, and receives channel information sent from other radio servers through the network n and channel information request signals sent from other radio servers.

A channel information editing section 26 edits the data in the table under the heading of active channel when the signal reception section 25 received channel information sent from other radio servers in accordance with the station information request section 53 of the own server. In responding to the channel information request signal output from the station information requesting section 23, channel information of those base station radios, under the control of radio servers that are not sending channel information, will not be changed.

A channel setting section 27 determines channels to be set or switched by the controlled base station radios, when the contents of the channel information memory section 21 is edited by the channel information editing section 26, according to the changed contents provided by the channel information memory section 21, and transmits the instructions. Also, the channel setting section 27 accepts and carries out instruction for setting an active channel upon receiving instructions from an operator specifying an active channel to be used by a controlled base station radio. When the channel setting is completed, the contents of the channel information memory section 21, under the heading of active channel for the relevant base station radio specified by the operator, is edited to the changed channel.

When a channel information request signal is received in the signal reception section 25, a station information reply section 28 transmits channel information for own controlled base station radios, through the sending section 24, by referencing the contents in the channel information memory section 21 to the radio server that sent the channel information request signal.

Next, the operation of the channel selection section will be explained. First example relates to a case of the radio server 1-2 in operation and the power is turned on in the radio server 1-1. It is supposed that the channels used by the base station radio 2-4, 2-5 under the control of the radio server 1-1 are CR4, CR5, and the channels used by the base station radio 2-1, 2-2, 2-3 immediately before the power is turned off in the radio server 1-1 are respectively, CH1, CH2, CH3. It is also supposed that CH6 is not being used by any of the base station radios.

First, when the power is turned on in the radio server 1-1, the station information requesting section 23 sends channel information on the base station radio 2-4, 2-5 to the radio server 1-2 through the sending section 24, according to the contents of the channel information memory section 21. In the radio server 1-2, the station information response section 17 references the channel information memory section 21 to obtain active channels of the controlled base station radio 2-4, 2-5, and sends the data including the name of the base station radios to the radio server 1-1 through the sending section 24.

When the channel information is received in the signal reception section 25 of the radio server 1-1, the channel information editing section 26 edits active channels for the base station radio 2-4, 2-5 stored in the information memory section 21. When the data are changed, the channel setting section 27 determines the channels to be assigned to the base station radio 2-1, 2-2 according to the contents of the channel information memory section 21.

In other words, the channel setting section 16 in the radio server 1-1 selects, for each base station radio 2-1, 2-2, 2-3, channels that do not interfere with the active channels being used by the base station radios under the control of the radio server 1-1 according to the conditions (1)∼(2) described above. The method of selecting channels that do no interfere with the active channels being used by the base station radios under the control of the radio server 1-2 will be explained later. Also, the steps to be taken when a reset signal is received in the station information requesting section 23 are the same as those described above.

Next, the operation of the system when a fault is found inside the operating range of the base station radio will be explained. A first example relates to a case of the fault detection section 22 in the radio server 1-1 finding a fault generated within the operating range of the radio server 2-1 (active channel CH1). In this case, the station information requesting section 23 makes an inquiry to the radio server 1-2 on the active channels being used by the base station radio 2-4, 2-5, according to the contents of the channel information memory section 21.

Responding to the inquiry received in the receiving section 25, station information reply section 28 of the radio server 1-2 obtains active channels stored in the channel information memory section 21, and sends channel information on each of the base station radios under the control of the radio server 1-2 to the radio server 1-1 from the sending section 24.

When the signal reception section 25 of the radio server 1-1 receives the channel information, the channel information editing section 26 edits the contents in the channel information memory section 21, after which, the channel setting section 27 selects channels not being used by the adjacent stations according to the edited contents of the channel information memory section 21 (channel selection condition (1) described earlier). Here, the channel having the fault is CH1, and the channels being used by the peripheral base station radio 2-2, 2-3, 2-4, 2-5 are respectively CH2, CH3, CH4, CH5, the only channel not being used is CH6.

Therefore, the channel setting section 27 instructs the base station radio 2-1 to use CH6. Also, the channel setting section 27 switches the active channel for the base station radio 2-1 from CH1 to CH6.

In the state described above, the following example relates to a case of the fault detection section 22 in the radio server 1-2 detecting a fault occurring within the operating range of the base station radio 2-4 (active channel CH4). In this case, first, the station information requesting section 23 of the radio server 1-2 makes an inquiry to the radio server 1-1 on the currently active channels being used by the base station radios 2-1, 2-2, 2-3, according to the contents of the channel information memory section 21.

The station information reply section 28 in the radio server 1-1 responds to the inquiry received through the signal reception section 25, and sends channel information, through the sending section 24, on each of the base station radios 2-1∼2-3 to the radio server 1-2.

Then, when the signal reception section 25 of the radio server 1-2 receives the channel information, the channel setting section 27 selects channels that are not being used by the peripheral base station radios (channel selection condition (1) described earlier). Here, the channel having the fault is CH4 and the active channels for the base station radio 2-4 and the primary peripheral base station radios 2-1, 2-5 are respectively CH6, CH5, so that CH1~3 are useable channels.

Next, the channel setting section 27 selects from the channels CH1~CH3 those channels that will not cause mutual modulation interference with the channels being used by other base station radios (channel selection condition (2) described earlier). That is, in the case described above, channels generated from a combination of the following pair of channels that do not cause mutual interference are selected.
(i) CH5 (active channel for base station radio 2-5) and CH6 (active channel for base station radio 2-1)
(ii) CH5 and CH2 (active channel for base station radio 2-2)
(iii) CH5 and CH3 (active channel for base station radio 2-3)
(iv) CH6 and CH2
(v) CH6 and CH3
(vi) CH2 and CH3

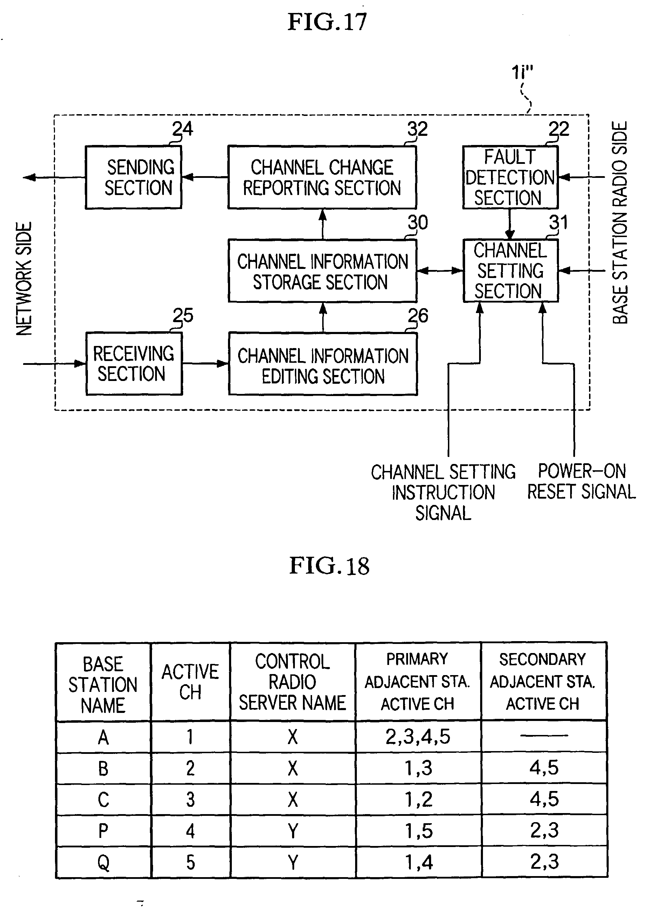

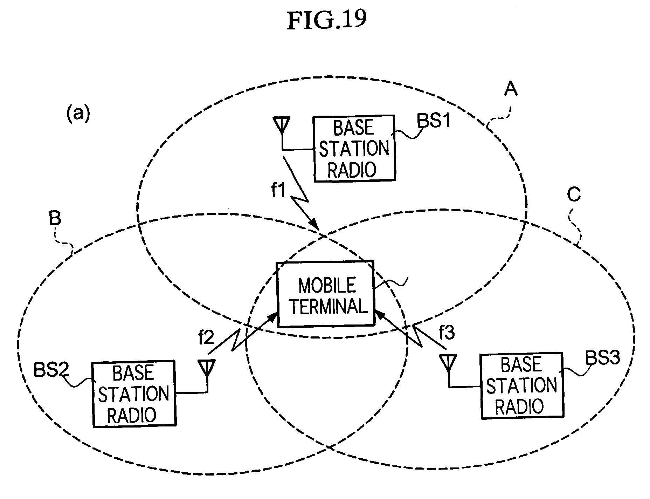

Next the operation of the channel selection section in each radio server will be explained with reference to Figures 18, 19. In the channel selection section described above, channel information of base station radios under the control of other radio servers was collected before setting or changing the active channels for the base station radios under its own control, but in this embodiment, a radio server performs channel setting and changing of its own base station radios before performing the same tasks for the base station radios under the control of other radio servers.

Figure 17 is a block diagram of the configuration of channel selection section, and those parts that are the same as those shown in Figure 15 are given the same reference notations, and their explanations are omitted. The differences between the two configurations are as follows.

First, in the channel information memory section 30, as shown in the table in Figure 18, the columns headings indicate, from the left, radio server, active channel, control server name, primary peripheral base station radio, and secondary peripheral base station radio. The memory section stores channel data for each base station radio A, B, C, P and Q, corresponding to these headings: that is, currently active channels, radio server names under control, names of primary neighbor base station radios, and the names of secondary neighbor base station radios.

A channel setting section 31 determines channels to be set or switched for the controlled base station radios, according to the changed contents provided by the channel information memory section 30, and transmits the instructions, when the power-on signal or reset signal is input, or a fault is detected in the controlled base station radios.

A channel change reporting section 32 notifies channel information, through the sending section 24, to the primary peripheral radio servers connected to the network 3, when instructions are given by the channel setting section 31 to change or switch the active channel to be used by the controlled base station radios, by referencing the contents of the channel information memory section 30.

Next, the operation of the channel selection section shown in Figure 17 will be explained. First example relates to a case of the radio server 1-2 in operation and the power is turned on in the radio server 1-1. It is supposed that the channels used by the base station radio 2-4, 2-5 under the control of the radio server 1-2 are CH4, CH5, and the channels used by the base station radio 2-1, 2-2, 2-3 immediately before the power is turned off in the radio server 1-1 are respectively, CH1, CH2, CH3. It is also supposed that CH6 is not being used by any of the base station radios.

First, when the power is turned on in the radio server 1-1, and a power-on signal is input in the channel setting section 31, the channel setting section 31 sends instructions to use the channels that are stored in the channel information section 30 and were used just before the power is turned off in the controlled base station radios. In this case, immediately prior to turning the power off, the base station radio 2-1, 2-2, 2-3 were using CH1, CH2, CH3, respectively, and therefore, instruction is that these channels are to be used for the controlled base station radios.

When the channel setting section 31 completes the instructions, the channel change reporting section 32 references the contents of the channel information memory section 30, and channel information on the controlled base station radios is sent to other radio servers from the sending section 24.

In the meantime, the radio server 1-2 is already under operation, and the channel information editing section 26 receives channel information sent from the radio server 1-1 through the signal reception section 25, and edits the contents of channel information on the base station radio 2-1, 2-2, 2-3 stored in the channel information memory section 30.

The process described above will be performed also when a reset signal received in the channel setting section 20.

Next, the operation of the system when a fault is detected within an operating range of the base station radio will be explained. For example, if the fault detection section 22 of the radio server 1-1 detects a fault within the operating range of the base station radio 2-1 (CH1), the channel setting section 31 instructs the channel to be switch to the base station radio 2-1, according to the contents of the channel information memory section 30. In this case, the primary peripheral base station radio 2-2 ~2-5 are using channels CH2~CH5, and base station radio 2-1 is using CH1 so that, the channel that can be used by the base station radio 2-1 is inevitably CH6.

The channel setting section 31 changes all the items designated as CH1 to CH6 in the channel information memory section 20. In other words, the stored value of CH1 is entered under the headings of "active CH" for "base station radio name" and the under the heading of "primary peripheral base station radios active CH" for B, C, P, Q.

Then, when the editing process in the channel information memory section 30 is completed, the channel change reporting section 32 notifies the radio server 1-2, through the sending section 24, that the active channel for the base station radio 2-1 has now been changed to CH6. Accordingly, the channel information editing section 26 edits the contents related to active channel in the channel information memory section 30 of the base station radio 2-1 from CH1 to CH6.

In the operating state described above, the following example relates to a case of the fault detection section 22 of the radio server 1-2 finding a fault within the operating range of the base station radio 2-5 (active channel is CH5). In this case, the channel setting section 31 of the radio server 1-1 selects channels not being used by the primary peripheral base station radios (channel selection condition (1) described earlier), according to the contents of the channel memory section 30.

In this case, the fault is detected in CH5, and because the channels used by the primary peripheral base station radios (base station radios 2-1, 2-4) are CH6, CH4, and therefore, CH1 ~CH3 are useable channels.

Next, the channel setting section 31 selects from the useable channels CH1∼CH3 those channels that are not subject to mutual modulation interference by channels used by other base station radios (channel selection condition (2) described earlier). That is, in the above case, channels that are not affected by the mutual modulation distortion caused by the following combination of two channels.
(i) CH4 (active channel for base station radio 2-4) and CH 6 (active channel for base station radio 2-1)
(ii) CH4 and CH2 (active channel for base station radio 2-2)
(iii) CH4 and CH3 (active channel for base station radio 2-3)
(iv) CH6 and CH2
(v) CH6 and CH3
(vi) CH2 and CH3

### [Access Methods and Packet Processing]

Preferred embodiments related to these topics will be explained in the following with reference to the drawings. However these topics are not to be limited to the following example.

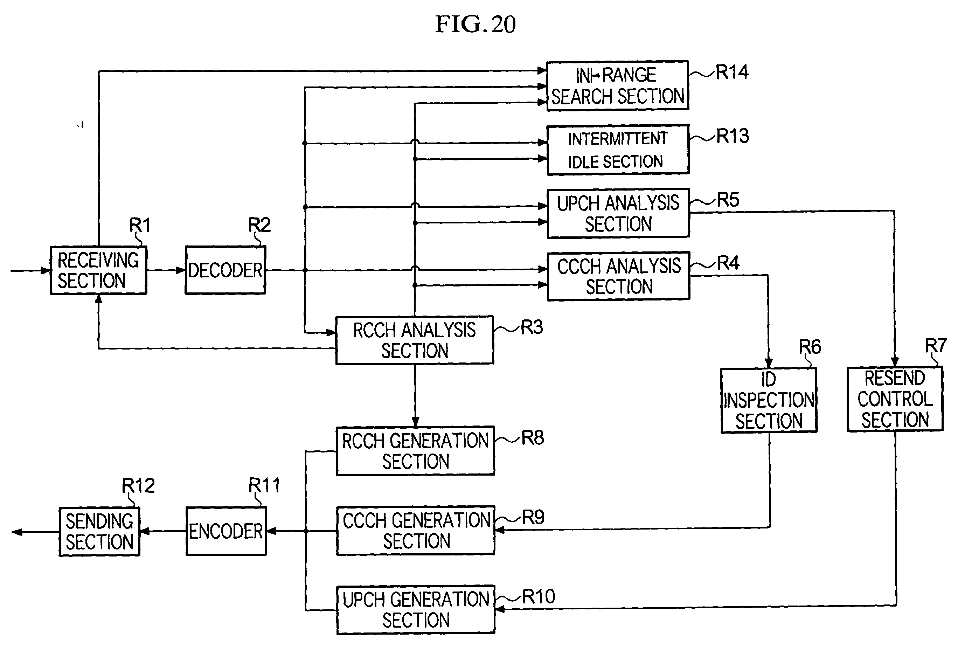

Figure 20 is a block diagram of the configuration of an embodiment of the mobile radio and the base station radio. The mobile radio and the base station radio in this embodiment are those used in the conventional radio communication technology, and the details will be explained later.

First, an outline of the present embodiment will be explained. The present system of communication by mobile radio and base station radio uses a single frequency for upward and downward communication. Therefore, the control channel (CCH) for carrying the control signals and communication channel (TCH) for carrying data use the same frequency. Also, the present system is a semi-duplex system in which the base station radio uses the duplex communication method and the mobile radio uses the simplex communication method. The base station radio is constantly sending down-packet (in the down-channel), and the mobile radio constantly monitors down-information, and sends data, as necessary, in the up-channel. Communication between the base station radio and mobile radio is by the digital sense multiple access (DSMA) method. The DSMA method is based on receiving idle/busy state of the TCH as digital signals, which are analyzed to indicate whether a channel is available.

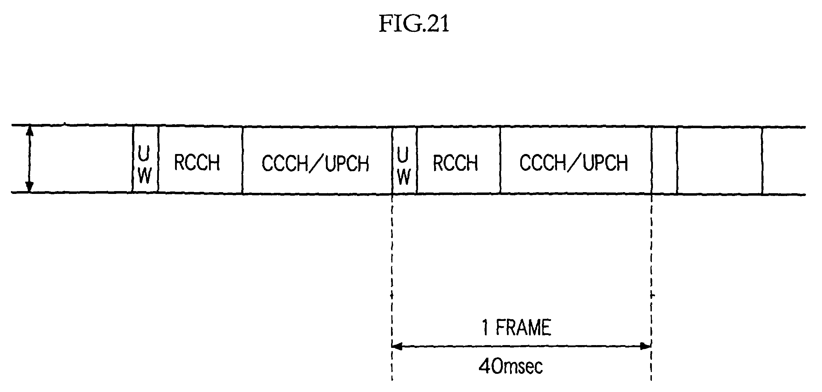

Next, the nature of packets sent by the mobile radio and base station radio will be explained. In the following presentation, if the distinction between the mobile radio and base station radio is not necessary, they will be simply referred to as radios. As shown in Figure 21, the sending channel of each radio sends successive packets in the form of a frame containing one group of UW (unique word) and RCCH (radio control channel) followed by another group of (common control channel) or UPCH (user packet channel). UW is at the leading end of each frame, and consists of a bit string used to synchronize with other frames, and is defined by a bit string of a given value. RCCH is used to show the state of a channel, idle or busy, and contains ID information for specifying the destination radio as well as information related to CCCH/UPCH that follows. RCCH is sent from the base station radio and is received by all the mobile radios.

CCCH includes control information such as call and connection requests and the data length of the outgoing data. CCCH output from the mobile radio sometimes contain information on peripheral base stations such as their channel information, and is received by more than one mobile radios specified by RCCH. UPCH contains data to be sent to a destination radio, and is received by more than one mobile radios specified by RCCH, when the packet is sent from a base station radio.

Here, RCCH corresponds to the first data recited in claim 1, and CCCH and UPCH correspond to the second data.

Next, the configurations of the mobile radio and base station radio, and their operation will be explained. In this embodiment, the configurations of the mobile radio and the base station radio are the same.

The basic structure of the mobile radio includes: a receiving section R1 connected to RCCH analysis section R3 for receiving incoming signals; a decoder R2 connected to receiving section R1; an RCCH analysis section connected to decoder R2; a CCCH analysis section R4 connected to decoder R2 and RCCH analysis section R3; a UPCH analysis section R5 connected to decoder R2 and RCCH analysis section R3; an ID inspection section R6 connected to CCCH analysis section R4; a resend control section R7 connected to UPCH analysis section R5; an RCCH generation section R8 connected to RCCH analysis section R3; a CCCH generation section R9 connected to ID inspection section R6; a UPCH generation section R10 connected to resend section R7; an encoder R11 connected to each of RCCH generation section R8, CCCH generation section R9 and UPCH generation section R10; and sending section R12 connected to encoder R11. This embodiment further comprises an intermittent idle section R13 connected to decoder R2 and RCCH analysis section R3 and in-range searching section R14 connected to receiving section R1, decoder R2 and RCCH analysis section R3.

The receiving section R1 receives radio signals (sending packet) and outputs received data, and also detects the electric field strength of received radio signals and outputs field strength data.

The decoder R2 analyzes received data to determine whether they are RCCH, CCCH or UPCH, and transfers received data to one of the respective analysis sections, RCCH analysis section R3, CCCH analysis section R4 or UPCH analysis section R5.

The RCCH analysis section R3 analyses RCCH, and if it judges that the received packet is addressed to itself, controls the receiving section R1 so as to receive CCCH/UPCH that follows RCCH. Here, "addressed to itself" includes those packets addressed only to the station, as well as those addressed to the groups containing the base station and reports addressed to all the mobile radios. Next, if it judges that the packet is not addressed to the station, it controls the idle waiting section R13 and in-range search section R14 to perform intermittent standby and in-range searches during the periods of operation of CCCH/UPCH. This process will be explained in more detail later. The processes of intermittent standby and in-range searches are not conducted concurrently, either can be selectively executed by choice. Also, the RCCH analysis section R3 switches receiving channel of the receiving section R1 for in-range searches, and provides timing signals to store electrical field strength data in the in-range search section R14.

The RCCH analysis section R3 immediately controls the RCCH generation section R8 in such a way that, as soon as a connection request accompanied a RCCH by is received from the mobile radio in the base station radio, status information "busy" is included in the RCCH. The mobile radio judges whether packet sending is possible, base on the status information included in the RCCH. If the status is idle, packet sending is possible while busy status means packet sending is not possible. Further, if a distance index, indicating the distance from the mobile radio, is included in the channel information stored in the CCCH analysis section R4, the RCCH analysis section R3 controls the operation of the receiving section R1 so as to prioritize channel search operation, according to the distance index, and to begin receiving channels starting with the closest base station radio. This is because of a higher probability that a mobile radio located within the operating range of a base station will move to another operational district that is closer to the currently-connected base station.

The CCCH analysis section R4 analyzes messages contained in CCCH. Depending on the message, if packet sending is necessary, ID (identification of the receiver) contained in CCCH is examined and appropriate information is sent. For example, in the case of a base station radio, after receiving a connection request, the request is accepted and authorization is sent, or after receiving an authentication response, registration approval is sent. Also, based on the data length of scheduled sending data contained in CCCH (connection request and the like), the section R4 also controls the receiving section R1 so as to continuously receive frame trains (a group of frames comprising one set of data having a specified data length, where each frame contains UPCH comprised by sending data). Also, when peripheral station information is received, it commands the section R4 to store channel information (frequency and the like) contained in the peripheral station information in the memory section (not shown).

The UPCH analysis section R5 analyzes data contained in UPCH. If there are errors in the data, and if errors are not possible to be corrected, the resend control section 7 is operated so as to send a resend request to return the section containing the errors, after the frame trains are received.

The ID inspection section R6 examines whether or not the ID contained in CCCH is authentic.

The resend control section R7 controls the UPCH generation section 10 to contain a resend request in the packet.

The RCCH generation section R8 generates RCCH to be sent. At this time, it refers to the information sent from the RCCH analysis section R3.

The CCCH generation section R9 generates CCCH to be sent. At this time, it refers, as necessary, to the information sent from the CCCH analysis section R4 obtained through the ID inspection section R6.

The UPCH generation section R10 generates UPCH to be sent. At this time, it refers, as necessary, to the information sent from the UPCH analysis section R3 obtained through the resend control section R7.

The encoder R11 prepares a sending packet comprised by a frame, which contains successive bit strings comprised by a synchronizing UW, an RCCH generated by the RCCH generation section R8 and a CCCH generated by the CCCH generation section R9 or a UPCH generated by the UPCH generation section R10.

The sending section R12 sends sending packet received from the encoder R11.

Intermittent idle section R13 is controlled by the RCCH analysis section R3 and performs intermittent standby operation (sleep or stop operation) of CCCH/UPCH to reduce power consumption.

The in-range search section R14 is also controlled by the RCCH analysis section R3, and performs in-range searches during the operation of CCCH/UPCH. In-range searches refer to an operation to acquire field strengths of adjacent base stations by successively scanning their out-channels during the operation of CCCH/UPCH that follows outputting of RCCH, and during this period measures the electrical field strength. The in-range search section R14 stores field strength data output from the receiving section R1, during the operation of CCCH/UPCH, in the memory section (not shown). An example of the method of memorizing may be to store an average value of past ten measurements of the field strength, or a strongest value of the past ten measurements. Here, the in-range search section R14 stores channel information on the main peripheral base station radios. Also, the base station radio periodically outputs adjacent station information including channel and station status information including traffic information, and the in-range search section R14 stores this information for use in in-range search operations.

By conducting searches to obtain field strengths emitted from the peripheral base stations beforehand, when the mobile radio moves out of the sphere of the current base station radio and when it is judged, based on the station status information, that the use of the base station is difficult, the field strength data stored in the memory section can be used to scan the channels from various base stations having field strength levels sufficient for signal reception in the order of their field strength level. This method avoids scanning for base stations that are not applicable, and permits a rapid detection of those channels of the base station radios that are within a communicable zone.

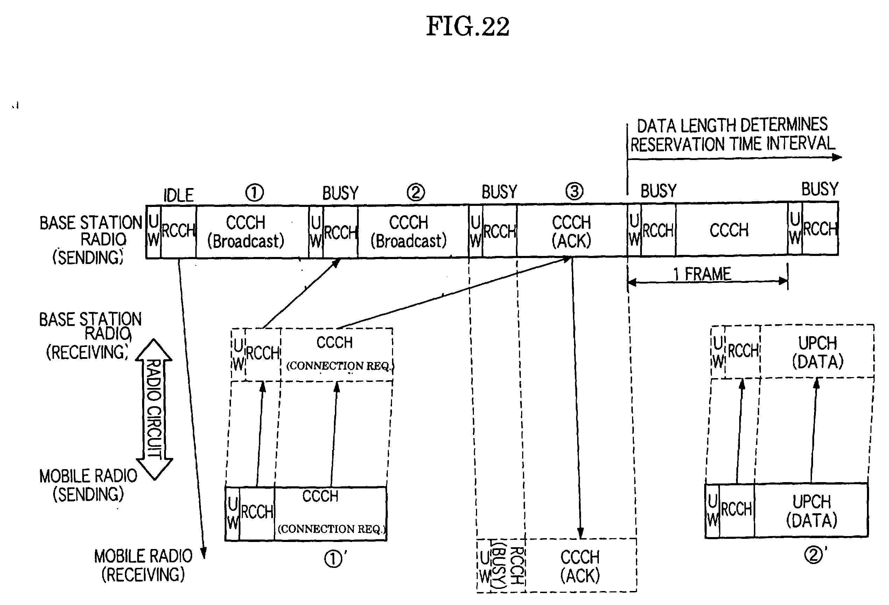

Next, the operation of the mobile radio (mobile station) and the base station radio (base station) for responding to a connection request to the base station will be explained with reference to Figure 22.

The receiving section R1 of the mobile radio receives first RCCH contained in sending packet ① from the base station radio. The RCCH is sent to the RCCH analysis section R3 by way of the encoder R2, and the RCCH analysis section R3 analyzes the strings and recognizes that the base station radio is idle. The RCCH generation section R8 and CCCH generation section R9 prepare data for sending packet ① 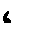 containing a connection request (ENQ) CCCH and the sending packet ① 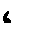 is synthesized by the encoder R11 and is sent by the sending section R12. Here, the connection request contains data length of the scheduled sending data.

The receiving section R1 in the base station radio sending packet ① 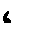 sent from the mobile radio. RCCH contained in packet ① 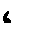 is sent through the decoder R2 to the RCCH analysis section R3, which analyzes the RCCH and recognizes that the sending packet ① 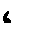 is a connection request, because of the information contained in CCCH. The RCCH generation section R8 enters busy status in RCCH contained in the sending packet ②, which is sent out immediately after transmitting the sending packet ① 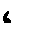 , thereby preventing the mobile radios from accessing this base station. Here, CCCH contained in the sending packet ② is broadcasting data to all mobile radios. The receiving section R1 in the base station radio further receives CCCH following the sending packet ① 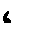 . And, this CCCH is sent through decoder R2 to the CCCH analysis section R4, which accepts the connection request.

Next, the CCCH generation section R9 in the base station radio enters a connection response (ACK) in CCCH. This CCCH is entered in the sending packet ③ by the encoder R11 and is sent to the mobile radio that sent the connection request. And, based on the data length contained in the connection request, it reserves signal reception reservation in order to secure an interval long enough to receive at least a frame train sent from the mobile radio. In other words, the base station radio sends sending packet having busy status in RCCH so as to prevent other mobile radios from accessing the base station.

For example, if the data length of the sending packet is n (bits), and if the bit length that can be contained in UPCH is m bits, at least the duration required to receive a frame train of [n/m] size is reserved. Here, [ ] indicates a rounded function that rounds off at the decimal. Also, as shown in Figure 22, after entering busy status, it is preferable for the base station radio to reserve, in addition to reserved duration for [n/m] frames, a duration sufficient to receive further data (a duration equal to two frames), and so to enter busy status in the time slots of RCCH, so that sending packet ① 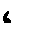 as well as sending packet ③ can be received.

The receiving section R1 in the mobile radio, upon receiving sending packet ③ containing a connection response from the base station radio, sends RCCH and CCCH to their respective RCCH analysis section R3 and CCCH analysis section R4 through the decoder R2. Then, when the CCCH analysis section R4 finds that CCCH is a connection response, the RCCH generation section 8 and UPCH generation section R10 generates data comprised by frame trains containing data of a specific data length. The encoder R11 synthesizes and transmits the frame trains.

The process described above summarizes the operation of the base station radio in responding to a connection request made by a mobile radio.

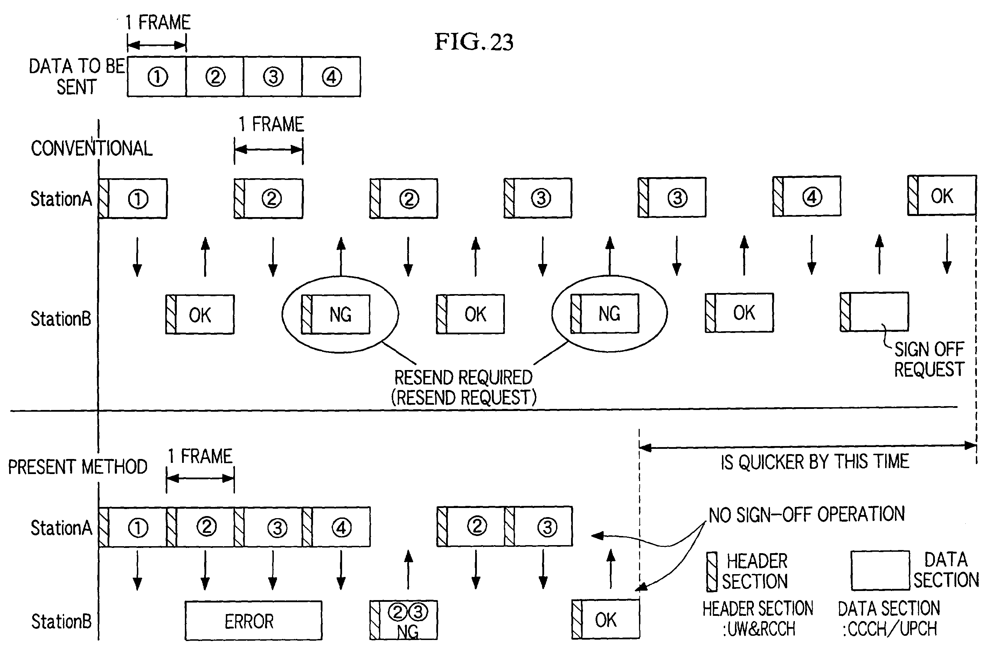

Next, the present transmission method between the mobile radio and base station radio will be compared with the conventional method with reference to the example shown in Figure 23.

Figure 23 shows a response by each base station for sending data that require four frames from station A to station B. Stations A, B respectively, represent a mobile radio and a base station radio.

In the conventional method shown in the upper portion, data are sent in one frame device from station A to station B. Station B sends a signal reception signal (OK) upon receiving each frame, or a resend request signal when there is an error in the data (frames ②, ③ ) to station A. The process is completed by sending a disconnection request.

In the present method shown in the lower section in Figure 23, station A sends data contained in four frames continually. Station B, as described above, knows that data length is four frames, based on the connection request in CCCH, so that it is able to receive data contained in four frames. When a certain amount of data are received, error frames ②, ③ are detected and corrected by the UPCH analysis section R5, and if the errors are not correctable, the resend control section R7 sends a sending packet containing a resend request to station A. Station A receives the resend request from station B, and returns requested frames ②, ③. When the frames ②, ③ are received correctly, station B sends a signal reception signal to complete the series of operations.

According to the present method, because the data length of the sending data has been sent already to the receiver, the number of exchanges, such as signal reception and resend signals, can be reduced compared with the conventional method, thereby facilitating the communication process. Also, there is no need for severing operation required in the conventional method.

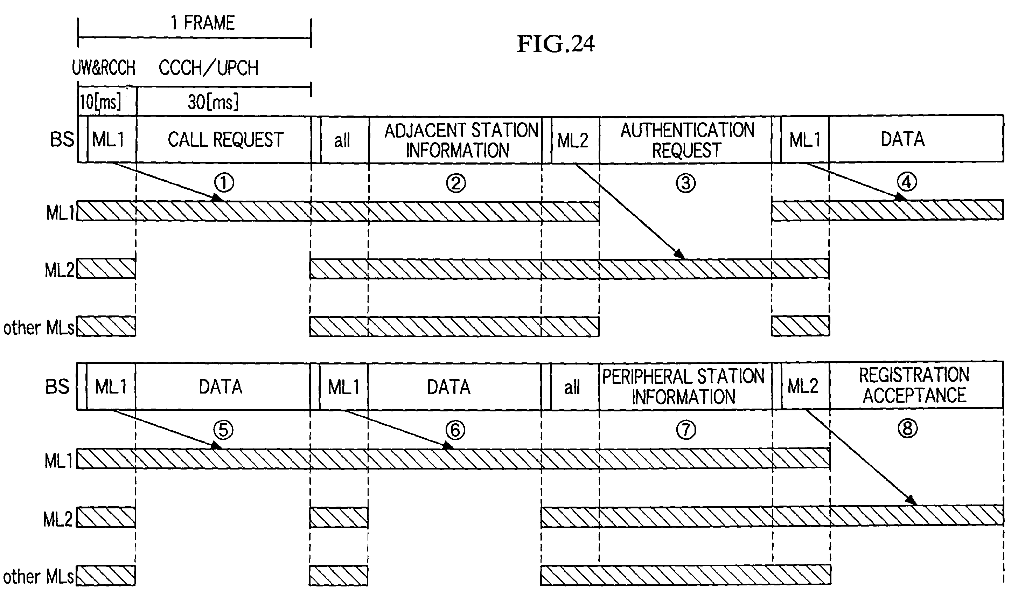

Next, the response operation of mobile radios ML1, ML2, other MLs to sending packet from the base station radio BS will be explained with reference to Figure 24.

Frame ① represents a call request to a mobile radio ML1, and the RCCH analysis section R3 in each mobile radio analyzes RCCH and only the mobile radio ML1 receives CCCH (call request) that follows RCCH. At this time, other mobile radios ML2, other MLs are in the intermittent standby state or conducting in-range searches due to the operations of the intermittent idle section R13 and in-range search section R14.

The next frame ② is addressed to all the mobile radios, and the RCCH analysis section R3 in each mobile radio analyzes RCCH, and all the mobile radios receive data inclusive of CCCH (adjacent station information).

Frame ③ is an authentication request, and is addressed to the mobile radio ML2, so that the RCCH analysis section R3 in all the mobile radios analyze RCCH, and only mobile radio ML2 receives CCCH (authentication request). At this time, other mobile radios ML1, other MLs are in the intermittent standby state or conducting in-range searches due to the operations of the intermittent idle section R13 and in-range search section R14.

Next, frames ④, ⑤, ⑥ addressed to the mobile radio ML1 are output from the base station radio, and the RCCH analysis section R3 in each mobile radio analyzes RCCH in the packet, and only the mobile radio ML1 receives RCCH. Mobile radio ML1 knows on the basis of the data length contained in the call request in CCCH of frame ① that the incoming data are three frames long, and three frames are accepted continually by the mobile radio ML1. At this time, other mobile radios ML2, other MLs are in the intermittent standby state or conducting in-range searches due to the operations of the intermittent idle section R13 and in-range search section R14.

Next frame ⑦ is addressed to all the mobile radios, and the RCCH analysis section R3 of each mobile radio analyzes RCCH, and all the mobile radios receive CCCH (peripheral base station information).

The last frame ⑧ is a registration acceptance and is addressed to the mobile radio ML2, so that the RCCH analysis section R3 in each mobile radio analyzes RCCH, and only the mobile radio ML2 receives CCCH (registration acceptance). At this time, other mobile radios ML1, other MLs are in the intermittent standby state or conducting in-range searches due to the operations of the idle waiting section R13 and in-range search section R14.

### [Roaming/Handoff]

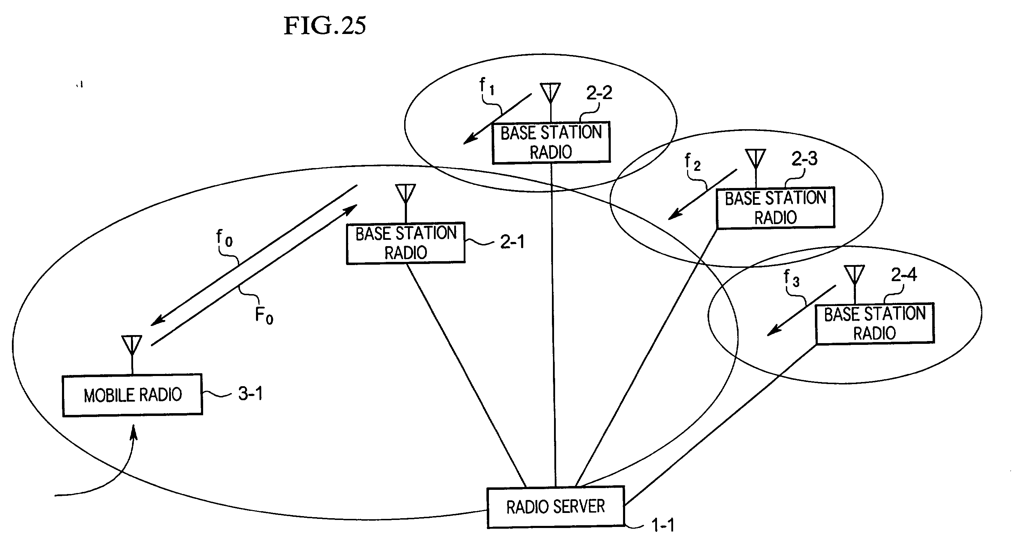

An embodiment of the system related to the above topics will be presented in the following with reference to Figure 25.

Figure 25 is a block diagram of the configuration of the overall system comprised by: a radio server 1-1 including computer and is connected to a plurality of base station radios 2-1~2-4 are connected by wire, in this case only four radios, base station radio 2-1~ 2-4 are shown as an example; a mobile radio 3-1 for communicating with the base station radio 2-1 by radio signals. The base station radio 2-1 uses a sending frequency f0 and the mobile radio uses a sending frequency F0. Notations f1∼f3 relate to sending frequencies used by respective base station radio 2-2 ∼ 2-4.

In the following explanation, the sending frequency, f0~f3, used by the base station radios 2-1~2-4 is referred to as down-frequency and the sending frequency, F0~F4, used by the mobile radio is referred to as up-frequency.

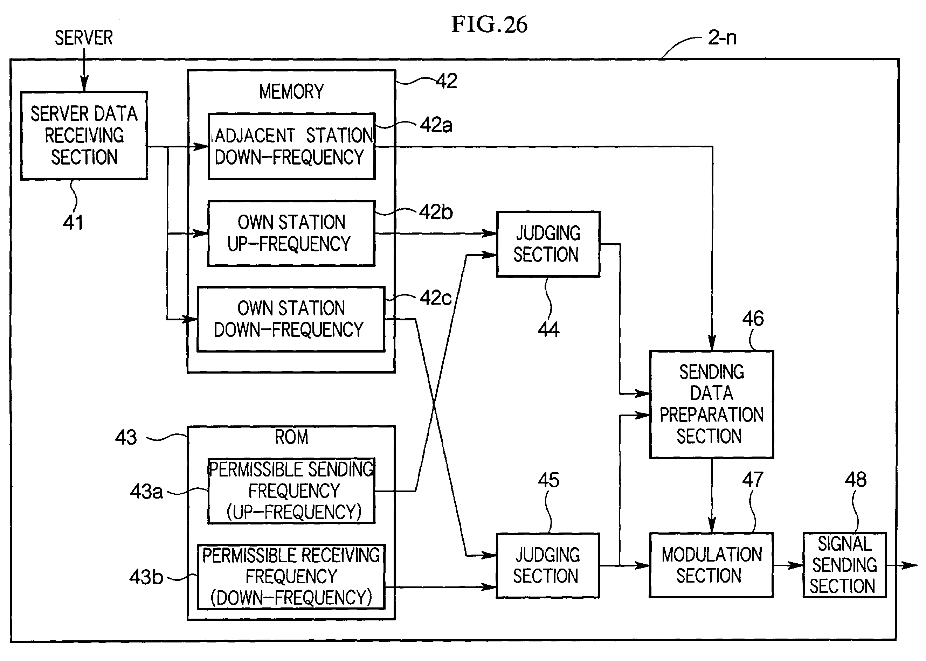

Figure 26 is a block diagram of the configuration of the base station radios 2-1~2-4 shown in Figure 25. The system includes: a server data receiving section 41 for received data sent by the radio server 1-1; a memory section 42 for storing data sent by the server data receiving section 41; a ROM for storing operational frequencies and stores a plurality of receiving frequencies (up-frequency) 43a and sending frequencies (down-frequency) 43b; data judging sections 44, 45 for comparing data sent by the radio server 1-1 with the stored data in ROM in the base station radio B-n and outputting the results; a sending data preparation section 46 for preparing sending data for the base station radio B-n on the basis of results from the judging sections 44, 45; a modulation section for modulating the sending data; and a signal sending section 48 for sending data modulated by the modulation section 47.

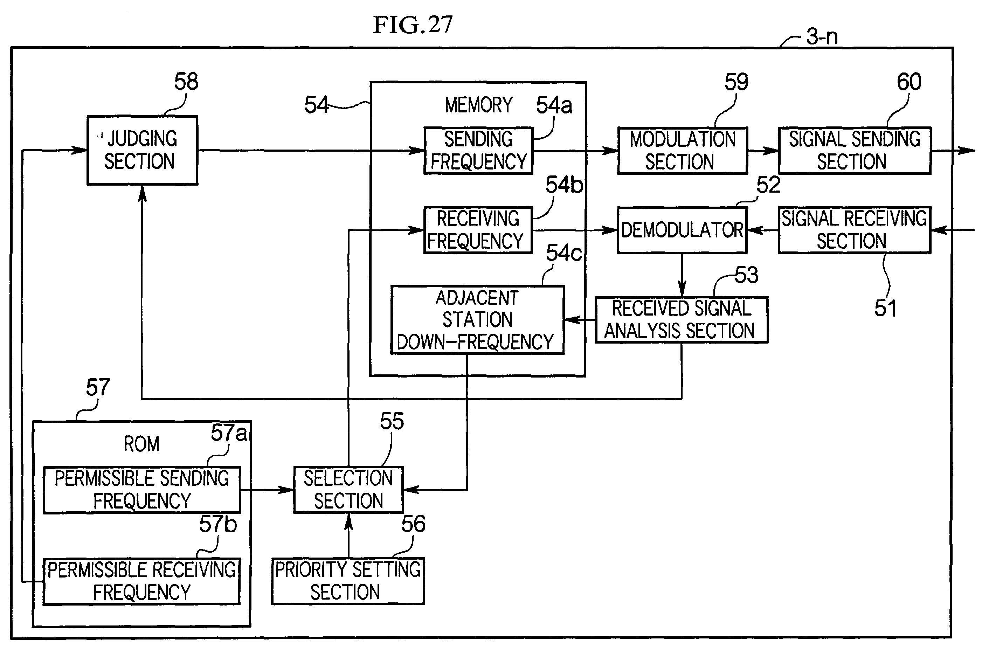

Figure 27 is a block diagram of the mobile radio 3-1, shown in Figure 25, that includes: a signal receiving section 51 for receiving signals sent by the base station radio B-n; a decoder 52 for decoding received data; a received signal analysis section 53 for analyzing the decoded data; a memory section 54 for storing operational frequencies; a selection section 55 for selecting an operational frequency; a priority setting section 56 for setting priority order of the frequencies selected by the selection section 55; a ROM 57 for storing operational frequencies; and a frequency judging section 58 for judging the operational frequency.

Next, the operation of radio server 1-1, base station radios 2-1~3 and mobile radio 3-1 will be explained with reference to the drawings. In this case, base station radio 2-1 is used to represent other base stations.

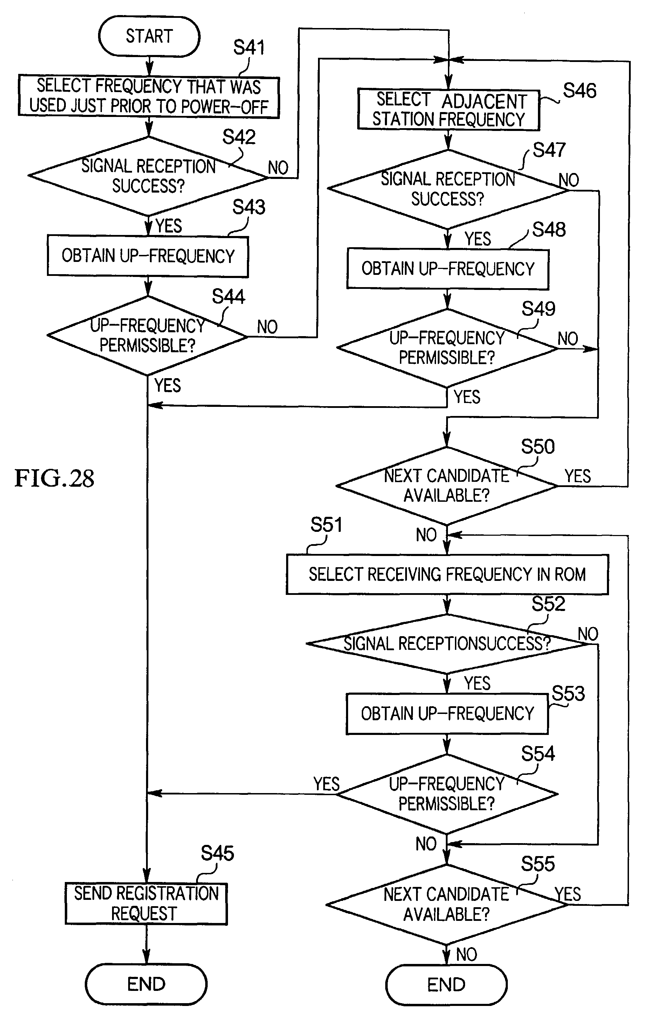

Figure 28 is a flowchart for the operation of the mobile radio 3-1.

First, the radio server 1-1 informs operational frequency to be used by each of the base station radios 2-1 ~4 under its control. At this time, the radio server 1-1 broadcasts the same information to all the base station radios 2-1~4. Accordingly, the radio server controls the frequencies used by other base stations.

Next, the operation of the base station radio 2-1 will be explained.

The server data receiving section 41 provided in the base station radio 2-1 receives down-frequency sent by the radio server 1-1. Then, the server data receiving section 41 stores received information in memory section 42, in which the information received from the peripheral stations (in this case, base station radio 2-2 ~2-3) is stored in memory by dividing the data into peripheral station down-frequency 42a, own station up-frequency 42b and own station down-frequency 42c.

Next, the data judging section 44 compares the up-frequency 43a stored in ROM 43 and own station up-frequency 42b stored in memory section 42. If the result shows that the own up-frequency 42b given by the radio server 1-1 is a useable frequency, this up-frequency 42b is sent to the sending data preparation section 46.

Parallel with the above step, the data judging section 45 compares the down-frequency 43b stored in ROM 43 with the own down-frequency 42c stored in the memory section 42. If the result shows that the own down-frequency 42c given by the radio server 1-1 is a useable frequency, this down-frequency 42c is sent to the sending data preparation section 46 and the modulation section 47.

Next, the sending data preparation section 46 converts the information on the up-and down-frequencies received from the data judging sections 44, 45 into sending data. At the same time, the sending data preparation section 46 also converts down-frequencies for the peripheral base stations down-frequencies 42a stored in the memory section 42 into sending data. Then, the sending data preparation section 46 forwards the sending data obtained by conversion to the modulation section 47.

Next, the modulation section 47 modulates the sending data prepared by the sending data preparation section 46 using the down-frequency received from the data judging section 45. The modulated sending data are sent from the signal sending section 48 by radio signals.

Next, the operation of the mobile radio 3-1 will be explained.

First, the demodulation section 52 attempts to receive the signals received in the signal receiving section 51 using a frequency of the receiving frequency 54b stored in the memory section 54 (step S41). This receiving frequency 54b is the frequency that this mobile radio had been using just prior to receiving the present signals.

Next, the demodulation section 52 judges whether or not signal reception has been possible (step S42), and if it was successfial, received signals are demodulated and the results are forwarded to the received signal analysis section 53. Next, the received signal analysis section 53 analyzes received signals and stores down-frequencies of the adjacent base stations in the memory section 54, and obtains an up-frequency (step S43) and forwards this up-frequency to the frequency judging section 58.

Next, the frequency judging section 58 reads out permissible sending frequencies 57b stored in ROM 57, and compares the up-frequency received from the received signal analysis section 53, and judges whether or not transmission is possible using this up-frequency (step S44). This judging is performed on the basis of matching the received up-frequency with the permissible frequency 57b stored in ROM 57. If the result shows that transmission is possible, the frequency judging section 58 stores this frequency in the memory section 54. Then, the modulation section 59 sends the registration request from the mobile radio 3-1 using the sending frequency stored in the memory section 54 (step S45).

Transmission of registration request is performed by the modulation section 59 by obtaining the sending frequency stored in the memory section 54 and sending the data from the signal sending section 60 using this frequency.

Accordingly, by using the frequency which had been used just prior to turning the power off to obtain the up-frequency, when the mobile radio has not moved out of the operating range of the radio server, communication can be started without having to go through the process of selecting a frequency.

On the other hand, if in step S42, signal reception is not possible or, in step S44, if the up-frequency is not the permissible frequency, the selection section 55 reads out down-frequencies 54c of the adjacent base stations stored in the memory section 54, and selects a receiving frequency in the order of priority stored in the priority setting section 56 (step S46). At this time, the selection section 55 compares the receiving frequency selected by the selection section 55 and the permissible frequency 57a stored in the memory section 57, and if the selected receiving frequency 57a is the permissible frequency, this receiving frequency is stored in the memory section 54.

Next, the demodulation section 52 judges whether or not signal reception was possible using the receiving frequency 54b stored in the memory section 54 (step S47), and if it was successfial, the received signals are demodulated, and forwarded to the received signal analysis section 53.

Next, the received signal analysis section 53 analyzes the received signal and stores the down-frequency of the peripheral base station in the memory section 54, and obtains an up-frequency (step S48) and forwards this up-frequency to the frequency judging section 58.

Next, the frequency judging section 58 reads out permissible sending frequencies 57b stored in ROM 57, and compares the up-frequency received from the received signal analysis section 53, and judges whether or not transmission is possible using this up-frequency (step S49). This judging is performed on the basis of matching the received up-frequency with the permissible frequency 57b stored in ROM 57. If the result shows that transmission is possible, the frequency judging section 58 stores this frequency in the memory section 54. Then, the modulation section 59 sends the registration request from the mobile radio 3-1 using the sending frequency 54a stored in the memory section 54 (step S45).

Next, when signal reception is not possible in step S47, and when the frequency is not the permissible frequency in step S49, the processing steps between step S46∼S49 are repeated (step S50).

Next, when there are no down-frequency candidates in step S50, the selection section 55 reads out the permissible frequencies 57a stored in ROM 57, and selects a permissible receiving frequency (step S51) according to the priority order stored in the priority setting section 56, and stores this permissible receiving frequency in the memory section 54.

Next, the demodulation section 52 judges whether or not signal reception was possible using the receiving frequency stored in the memory section 54 (step S52), and if it was successful, the received signals are demodulated and forwards the data to the received data analysis section 53.

Next, the received signal analysis section 53 analyzes received signal, and stores down-frequency of the peripheral base station in the memory section 54, and obtains an up-frequency (step S53) and forwards this up-frequency to the frequency judging section 58.

Next, the frequency judging section 58 reads out permissible sending frequencies 57b stored in ROM 57, and compares the up-frequency received from the received signal analysis section 53, and judges whether or not transmission is possible using this up-frequency (step S54). This judging is performed on the basis of matching the received up-frequency with the permissible frequency 57b stored in ROM 57. If the result shows that transmission is possible, the frequency judging section 58 stores this frequency in the memory section 54. Then, the modulation section 59 sends the registration request from the mobile radio 3-1 using the sending frequency 54a stored in the memory section 54 (step S45).

Next, when signal reception is not possible in step S52, and when the frequency is not the permissible frequency in step S54, the processing steps between steps S51∼S54 are repeated (step S55). Further, in step S55, when there are no other candidates for the receiving frequency, this mobile radio 1-3 cannot communicate inside this district, therefore, another attempt is made by moving to another district to repeat the steps shown in Figure 28.

Here, it is assumed that the contents of the memory section 54 remain even when the power is turned off in the mobile radio 3-1.

Next, the configuration and operation of another embodiment of the mobile radio 3-1 will be explained.

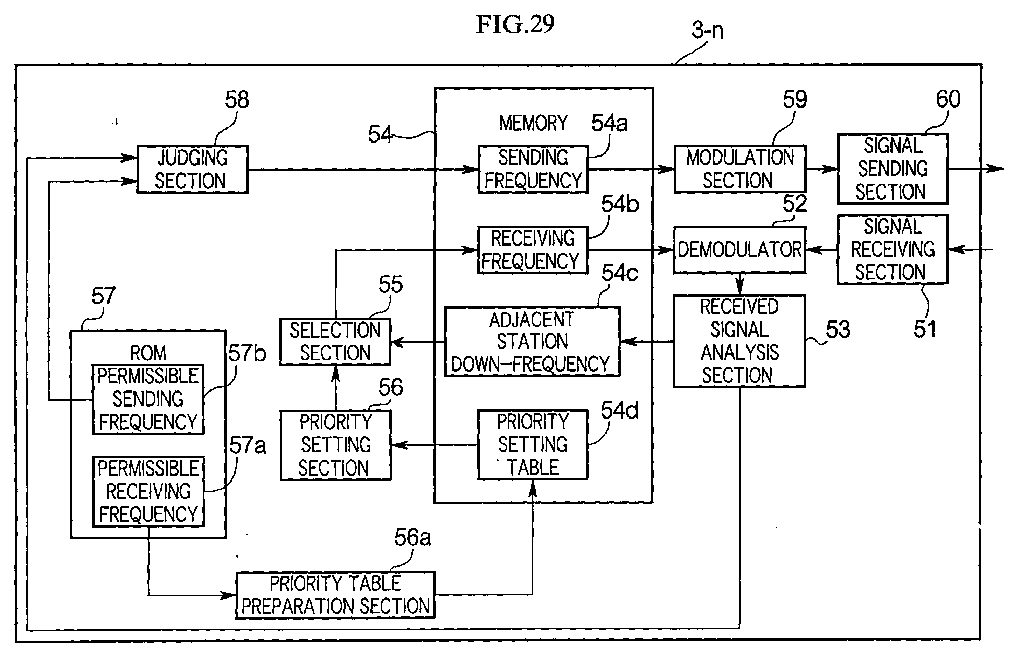

Figure 29 is a block diagram of the configuration of a mobile radio 3-1. The differences of the this configuration and that shown in Figure 27 are that a priority table 54d is provided in the memory section 54 and that a priority table generation section 56a, for generating a priority table 54d, on the basis of permissible receiving frequencies 57a stored in ROM 57, is provided.

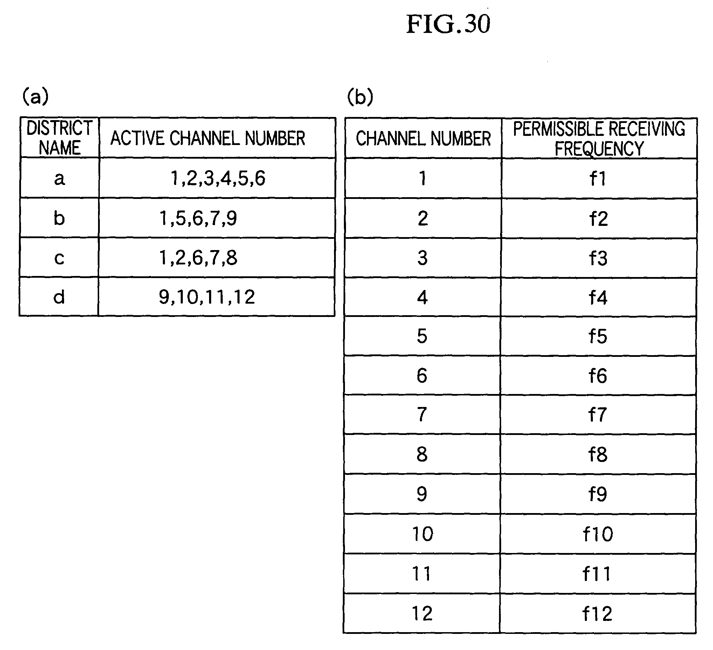

Figure 30 is an example of the structure of the table containing the permissible receiving frequencies 57a stored in ROM 57 shown in Figure 29. As shown in this table, permissible receiving frequencies 57a are comprised by two tables. Permissible channel table shown in Figure 30A includes a district name field and a channel number field. The district name is used to distinguish the districts in which the radio server 1-1 and the base station radios 2-1~3 shown in Figure 25 are operating, so that for one radio server 1-1, there is a controlling district name. In this example, it is assumed that there are four base station radios 2-1~3 and it is assumed that they are designated by the respective district names [a], [b], [c], [d]. Channel numbers define channels that can be used in each district, and in the district [a] for example, channel numbers 1, 2, 3, 4, 5 and 6 are operable.

Also, the frequency table shown in Figure 30 (b) includes the channel number field and the permissible receiving frequency field. The channel numbers are logical numbers allocated to each permissible receiving frequencies, and it is assumed, in this case, that the mobile radio 3-1 is able to use permissible receiving frequencies f1∼f12 corresponding to channel numbers 1~12.

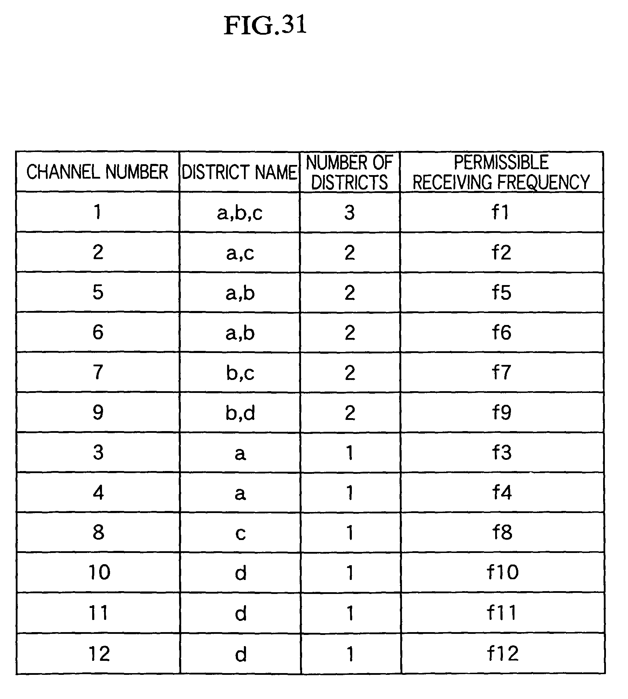

Figure 31 shows a structure of the priority table 54d stored in the memory section 54 shown in Figure 29. As shown in this diagram, the priority table 54d includes a channel number field, a district name field, a number of districts field, a permissible receiving frequency field. The district names relate to those districts using the frequencies of the assigned channel numbers. The number of districts relates to the number of district using the frequencies of the assigned channel numbers. For example, in Figure 31, channel number 1 is used in-ranges a, b, c, so that the number of district is three.

Next, the operation of another embodiment of the mobile radio 3-1 will be explained with reference to the drawings.

First, when the power is turned on for the mobile radio 3-1, the priority table generation section 56a generates a priority table 54d in the memory section 54 by referencing the permissible receiving frequencies 57a stored in ROM 57. The process of generating the priority table 54d will be explained in the following.

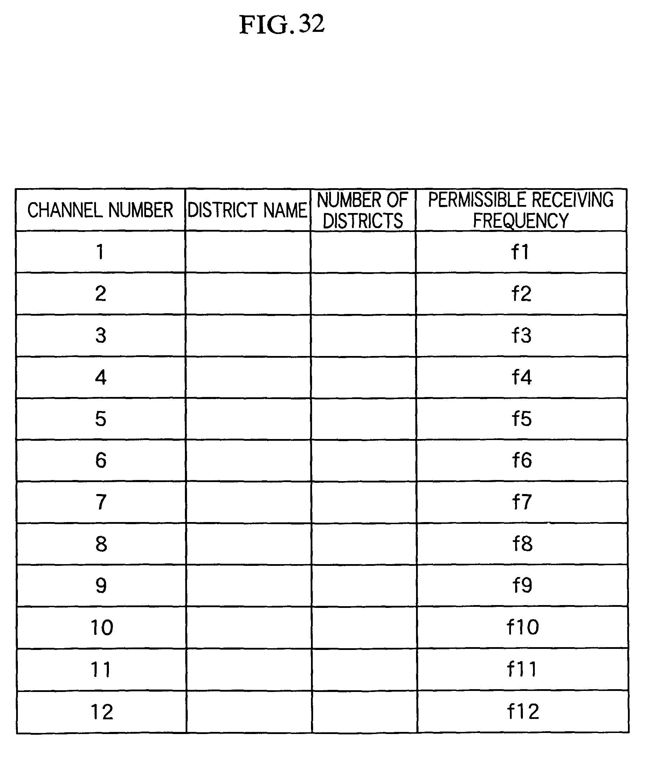

First, the priority table generation section 56a reads out the contents of the permissible receiving frequency table (refer to Figure 30B) of the permissible receiving frequencies 57a stored in ROM 57, and enters the values in the respective fields in the priority table 54d. At this point, the channel numbers and permissible receiving frequencies become listed in respective fields of the priority table 54d, as shown in Figure 32.

Next, the priority table generation section 56a reads out the useable channel table (Figure 30, section (a)) of the permissible receiving frequencies 57a stored in ROM 57, and enters them in the respective fields in the priority table 54d. At this time, the priority table generation section 56a extracts district names using the channel numbers and enters district names in the district name field. In the example shown in Figure 30, channel number [1] is operating in-range names [a], [b] and [c], therefore, [a], [b], [c] are entered in the district name field corresponding to channel [1] in the priority table 54d.

By repeating this step, the district names using channel numbers [1]~[12] are entered in the district name field. When the data entry process is completed, the priority table generation section 56a counts the number of districts using each channel number and the results are entered in the number of districts field. At this point, for each channel number, the district names using the channel number and the number of districts using each channel number become listed in the priority table 54d.

Next, the priority table generation section 56a rearranges the data using the number of districts as the sort key so that the table shows a descending order of the number of districts. This sorting process of the table results in rearranging the data in the order of usage of district names in the priority table 54, resulting in preparing the priority table 54d shown in Figure 31.

By following the steps described above, the priority table 54d shown in Figure 31 is prepared, according to the data in the permissible receiving frequency table and the permissible channel table listing the permissible receiving frequencies 57a shown in Figure 30.

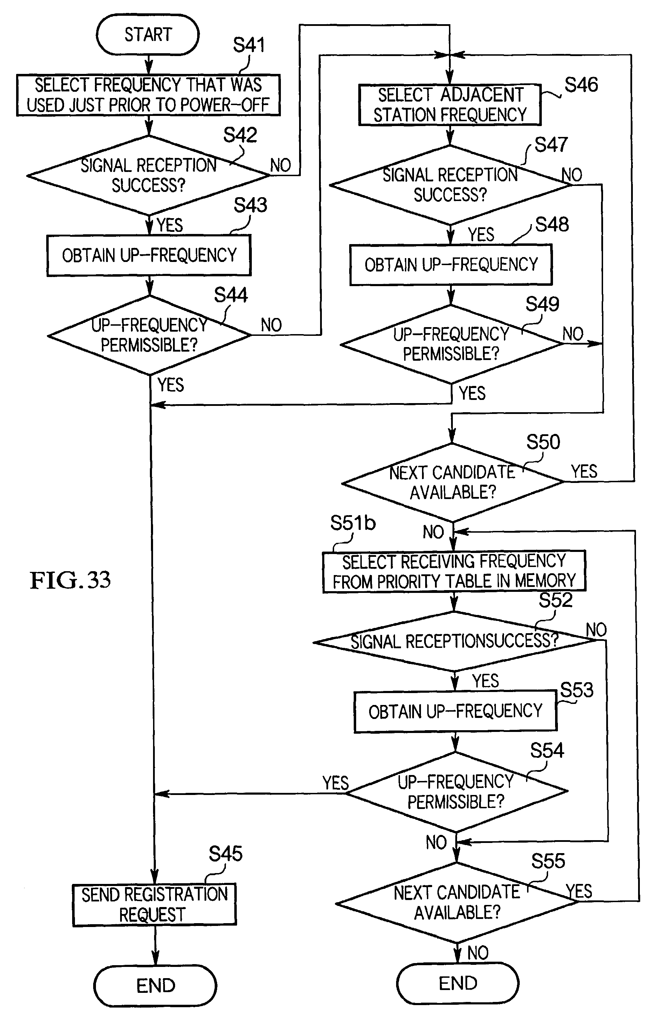

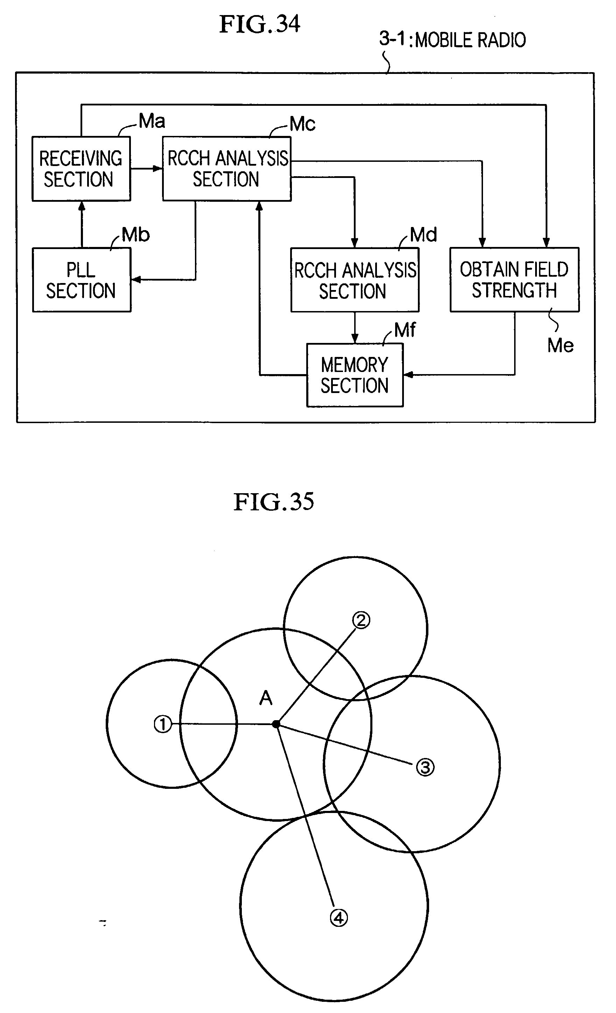

Next, the operation of the mobile radio 3-1 shown in Figure 29 will be explained with reference to Figure 33. The difference between the flowcharts shown in Figures 35 and 30 is that the step of selecting a permissible receiving frequency stored in ROM (step S51) is replaced with the step of selecting a permissible receiving frequency in the priority table (step S51b) stored in the memory section.

In the flowchart shown in Figure 33, steps S41~S50 are the same as the steps S4~S50 in Figure 28, therefore, explanations are omitted.

In Figure 33, step S41 is executed after the priority table 54d is generated.

In step S50, when there are no candidates for a down-frequency, the selection section 55 checks from the top data in the priority table 54d stored in memory section 54, through the priority setting section 56, and selects a frequency corresponding to a channel number and assigns this frequency as the receiving frequency (step S51b) and stores this frequency in the memory section 54.

Next the demodulation section 52 judges whether or not the signal reception by using the receiving frequency 54b stored in the memory section 54 was successful (step S52), and if successful, the received signals are demodulated and are forwarded to the received signal analysis section 53.

Next, the received signal analysis section 53 analyzes the received signal, and stores down-frequencies of the peripheral base station radios in the memory section 54 and obtains an up-frequency (step S53) which is forwarded to the frequency judging section 58.

Next, the frequency judging section 58 reads the permissible sending frequencies 57b stored in ROM 57, and compares them with the up-frequency received from the received signal analysis section 53, and checks whether the up-frequency received is permissible for signal transmission (step S54). This judgment is based on whether the received up-frequency matches any of the sending frequencies 57b stored in ROM 57. If the result indicates that it can be sent, the frequency judging section 58 stores the up-frequency in the memory section 54. Then, the modulation section 59 uses the sending frequency 54a stored in the memory section 54 to send the registration request from the mobile radio 3-1 (step S45).

Next, if signal reception was not possible in step S52 or if the up-frequency is not the permissible frequency in step S54, steps S51~S54 are repeated (step S55). Further, in step S55, if there are no other permissible receiving frequencies, the mobile radio 3-1 is not able to use this district so that it is necessary to move to another district, and re-execute the steps shown in Figure 33.

In Figure 33, steps S41~S44 and S46~S50 may be skipped, and after preparing the priority table 54d, step S51b may be executed immediately afterward.

As described above, because the steps are arranged so that a table is prepared in which channel numbers are arranged in an order of the number of districts having a large number of channel numbers (permissible receiving frequencies) and signal reception is attempted using the table, frequency selection can be performed efficiently.

Here, it is assumed that usable channels are already stored in the ROM at the time of starting to use the mobile radio 3-1.

### [In-range Search]

Figure 34 is a block diagram of the configuration of an embodiment of the mobile radio 3-1. First, sending packet output from the base station radio 2-n will be explained. The sending channel of the base station radio 2-n sends successive packets in the form of a frame containing one group of UW (unique word) and RCCH (radio control channel) followed by another group of CCCH (common control channel) or UPCH (user packet channel) that follows the UW and RCCH group. UW is at the head of each frame, and is a bit string used to synchronize with other frames, and is defined by a bit string of a given value. RCCH is used to show the state of a channel, idle or busy, and contains information for specifying the destination mobile radio, and is received by all the mobile radios. CCCH is comprised of control information (call request and the like) and channel information for the adjacent base station radio 2-n, and is received by more than one mobile radio specified by RCCH. UPCH is comprised by data to be sent the mobile radio, and is sent to more than one mobile radio specified by RCCH.

The configuration of the mobile radio 3-1 will be explained. The mobile radio 3-1 comprises: a signal receiving section Ma for receiving radio signals (sending packet) and outputting received data as well as detecting electrical field strength of radio signals and output field strength data; a PPL section Mb connected to signal receiving section Ma and switching receiving channel of signal receiving section Ma; a memory section Mf for storing channel information of the base station radio 2-n and field strength data; a field strength acquiring section Me for entering field strength data in the memory section Mf; an RCCH analysis section Mc for analyzing RCCH contained in received data and obtaining address and other data, providing timing signals to the field strength acquiring section Me to memorize field strength data, and for making PLL section Mb to switch the receiving channel of receiving section Ma, based on the channel information stored in the memory section Mf; and a CCCH analysis section Md for analyzing CCCH contained in received data to obtain channel information on peripheral stations, if the packet is judged to be addressed to the mobile radio 3-1 by the RCCH analysis section Mc, to obtain channel information of peripheral base stations and store in the memory section Mf. Here, the PLL section is comprised by a phase locked loop circuit.

It is assumed that the mobile radio 3-1 has channel information of the main base station radio 2-n stored in the memory section Mf before it relocates to another range. Also, the base station radio 2-n or the radio server that control the base station radio 2-n has channel information of the neighboring base station radio 2-n, and channel information is sent by using the sending channel (down-channel). The base station radio 2-n and mobile radio will be explained further later. Also, the RCCH analysis section Mc, CCCH analysis section Md, field strength acquiring section Me serve the respective functions of first data analysis device, second data analysis device and field strength acquiring device.

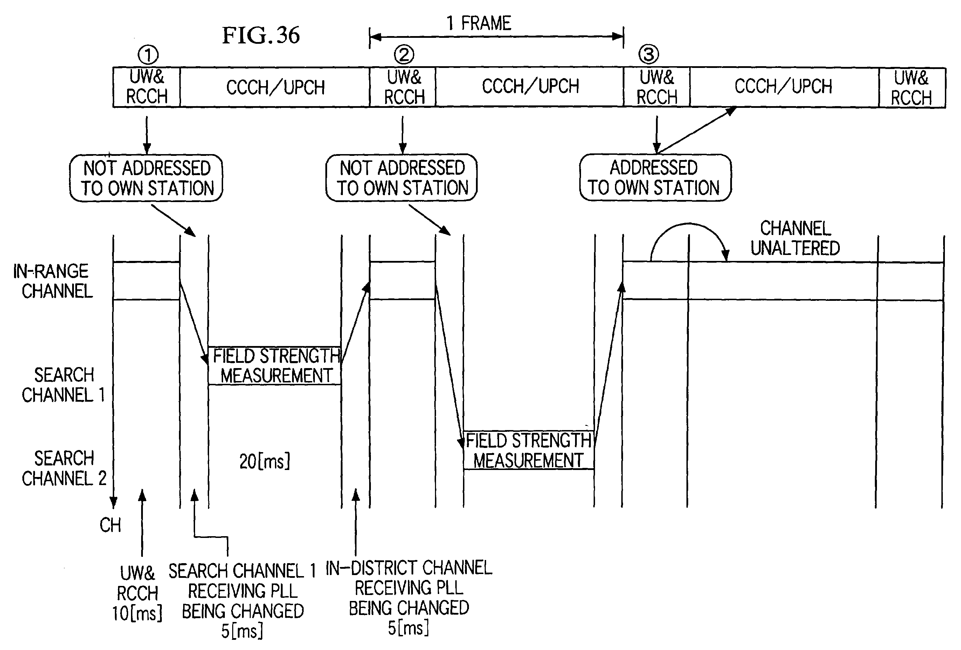

Next, the operation of the mobile radio 3-1 having the structure described above will be explained with reference to Figures 34 to 37. These explanations refer to a case, shown in Figure 35, of operational districts (five districts shown in Figure 35) of a plurality of base station radios 2-n are neighbors, and the mobile radio 3-1 is home radio server within the operating range of the base station radio 2-n. Also, Figure 36 shows data transmission timing for the signals in the down-channel of the base station radio 2-nA and the data contained in the channel, and data transmission timing of other base stations 2-n and the timing for acquiring field strengths of the down-channels of other base station radio 2-n. Also, communication between the base station radio 2-n and the mobile radio is based on the semi-complex method. That is, the base station radio 2-n constantly sends packets using the sending channel (down-channel) and the mobile radio responds to packets addressed to itself by using the up-channel.

The following example relates to a case of the mobile radio 3-1 communicating with the base station radio 2-n by radio signals. First, the receiving section Ma receives down-channel of the base station radio 2-n, and receives RCCH①. The RCCH analysis section Mc analyzes RCCH received by the signal receiving section Ma. Because the data in the frames of RCCH① are not addressed to mobile radio 3-1, 50 that the RCCH analysis section Mc obtains channel information on other base station radio 2-n from the memory section Mf, and controls the PLL section Mb so as to receive down-channel of the base station radio 2-n.

The signal receiving section Ma can start to receive down-channel of the base station radio 2-n when a given amount of lock time (in the case shown in Figure 36, it is 5 ms) has elapsed after the PLL section switches the down-channel. The signal reception section receives search channel 1 (indicted by ① in Figure 35) of the base station radio 2-n. Also, the signal receiving section Ma constantly monitors electrical field strength of radio signals, and outputs measurements to the field strength acquiring section Me. Also, the search channel 1, 2, ... indicate peripheral down-channels (frequencies) of base stations 2-n near the base station A connected to the mobile radio 3-1 by radio signals, and in-range channels refer to the down-channel (frequency) of the base station radio 2-n. The RCCH analysis section Mc controls PLL section Mb so that it is able to know the lock timing of the PLL section Mb, and sends timing signals to specify timing of measuring the electrical field strength to the field strength acquiring section Me. The field strength acquiring section Me records the field strength data sent from the signal receiving section Ma at a given timing in the memory section Mf.

The RCCH analysis section Mc obtains channel information from the base station radio 2-n, after an elapse of time for determining the field strength (in the example in Figure 36, 20 ms), and controls PPL section Mb so as to receive sending channel of the base station radio 2-n. After the lock time of PLL section elapses, the signal receiving section Ma receives the sending channel, shown as in-range channel in Figure 36, of the base station radio 2-n.

Next, the signal receiving section Ma receives RCCH② shown in Figure 36. The operation after signal reception is the same as that for the RCCH① above, but the difference is that, because the search channel 1 shown in Figure 36 has already been received, it further receives another sending channel of the base station radio 2-n (search channel 2 shown in Figure 36 as ②), and obtains its field strength. Accordingly, when the received signal is not addressed to the mobile radio 3-1, it successively scans sending channels for other base station radio 2-n, and obtains their field strengths.

Next, if the received RCCH is addressed to the mobile radio 3-1 (RCCH③ in Figure 36), instead of conducting field strength determination, it proceeds to receive CCCH or UPCH that follows RCCH③. When the data following the RCCH③ is CCCH, it is forwarded from the RCCH analysis section Mc to CCCH analysis section Md, which performs analysis of the data. When CCCH contains channel information of the base station radio 2-n, whose operational district is peripheral to the radio server 2-nA, the CCCH analysis section Md stores this information in the memory section Mf. Here, data addressed to the mobile radio 3-1 includes those data addressed singly to the mobile radio as well as those addressed to all mobile radios.

Also, if the channel information contains an index related to the distance from the base station radio 2-n, the RCCH analysis section Mc, instead of performing field strength measurements, prepares a distance-based search sequence so that the search channel of the base station radio 2-n will be detected first. This is because the mobile radio 3-1 that is located in the operational district of the base station radio 2-nA, has a high probability of moving into the nearest operational district, which is a base station radio 2-n. Also, when CCCH is a call-request addressed to the mobile radio 3-1, it responds to the request through the sending section (not shown). It should be mentioned at this point that channel search can be conducted a maximum of twenty five times per second (or 1,000/40 ms) in the case shown in Figure 36.

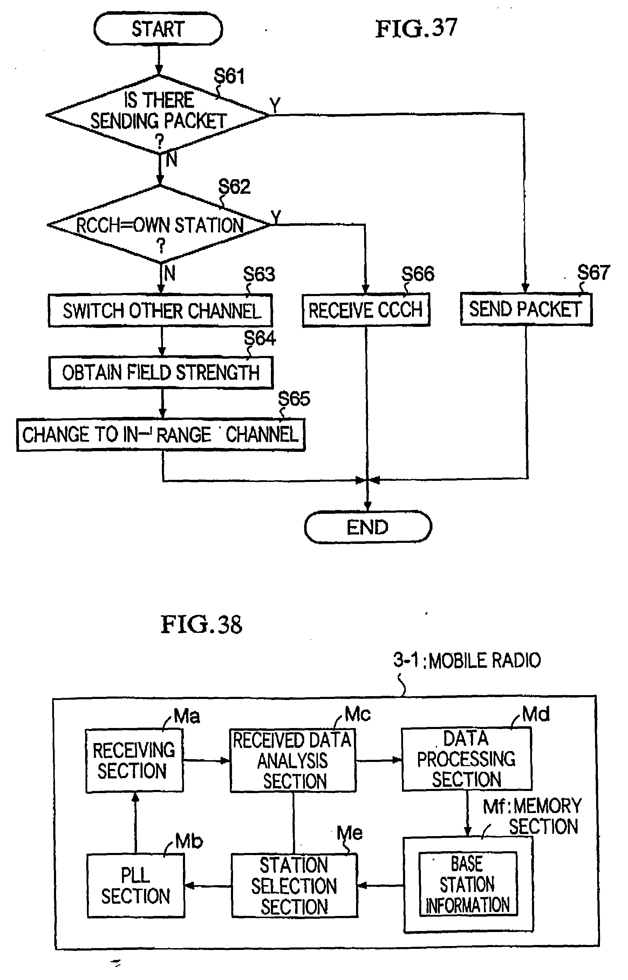

Next, the operation of the mobile radio 3-1 will be explained with reference to the flowchart shown in Figure 37.

First, it examines whether there is a sending packet from the mobile radio 3-1 to the base station radio 2-nA (step S61).

If, in step S61, it judges that there is a sending packet from the mobile radio 3-1 to the base station radio 2-nA, this packet is sent out and the process is finished (step S67).

If, in step S61, it judges that there is no sending packet from the mobile radio 3-1 to the base station radio 2-nA, a packet from the base station radio 2-n is received, and RCCH contained in this packet is analyzed and judges whether or not the packet is addressed to the mobile radio 3-1 (step S62).

If, in step S62, it judges that the packet sent from the base station radio 2-n is addressed to the mobile radio 3-1, CCCH or UPCH that follows the RCCH is received and processed and finishes the process (step S66).

If, in step S62, it judges that the packet sent from the base station radio 2-n is not addressed to the mobile radio 3-1, the receiving channel is switched to other base station radio 2-n (step S63).

Then, the received field strength of the sending channel of the base station radio 2-n is detected and stored (step S64). An example of memory method is either to store an average value of field strength measured for the channel during the past ten times or the highest strength value of the ten measurements.

Then, the receiving channel is switched back to the original channel (in-range channel) of the base station radio 2-n, and the process is finished (step S65).

The mobile radio 3-1 repeats the above process from start to finish.

As described above, the mobile radio 3-1 scans sending channels of the base station radio 2-n based on the channel information stored in the memory section Mf, and performs field strength measurements. In measuring the field strengths, sending channels of the base station radio 2-n can be scanned successively, if CCCH or UPCH interval ≧ {PLL section lock time x 2 + field strength measuring interval}. A numerical example is as follows: one frame period is 40 ms (10 ms for UW & RCCH and 30 ms for CCCH/UPCH) and time required for a field strength measurement is 20 ms, if the PLL lock time is less than 5 ms, it is possible to conduct, within one frame period, signal reception of sending channel of other base station radio 2-n and measure a field strength, and return to the currently connected sending channel of the base station radio 2-n for another signal reception.

Also, when the mobile radio 3-1 moves out of the operational district of the currently connected base station radio 2-nA, scans for the channels having sufficient field strength for signal reception in the order of descending field strength, based, on the field strength data collected in the memory section Mf during the above process. By so doing, there is no need for scanning unreceivable operational channels, and the mobile radio is able to quickly find a useable base station radio 2-n.

### [Dual Scan]

Figure 38 is a block diagram of the configuration of another embodiment of the mobile radio 3-1. The mobile radio 3-1 comprises: a signal receiving section Ma for receiving radio signals and outputting received data; a PPL section Mb connected to signal receiving section Ma for demodulating radio signals; a received data analysis section Mc; a data processing section Md for extracting and storing station information (including channel information and frequencies and the like of base station radios, circuit state, busy or idle, of the communication circuit) by analyzing received data; a station selection section Me for synchronously switching PLL section Mb and received signal analysis section Mc based on station information, and a memory section Mf. Also, the PLL section is comprised by a phase locked loop circuit.

Here, it is assumed that the mobile radio 3-1 has channel information of the main base station radio 2-n stored in the memory section Mf before it relocates to another district. Also, the radio server that is a part of the radio communication system has station information of the neighboring base station radios, and station information is sent by using the sending channel (down-channel). Radio servers and base station radios will be explained further later. Also, the received data analysis section Mc, data processing section Md, station selection section Me serve the respective functions of received data analysis device, data processing device and station selection device.

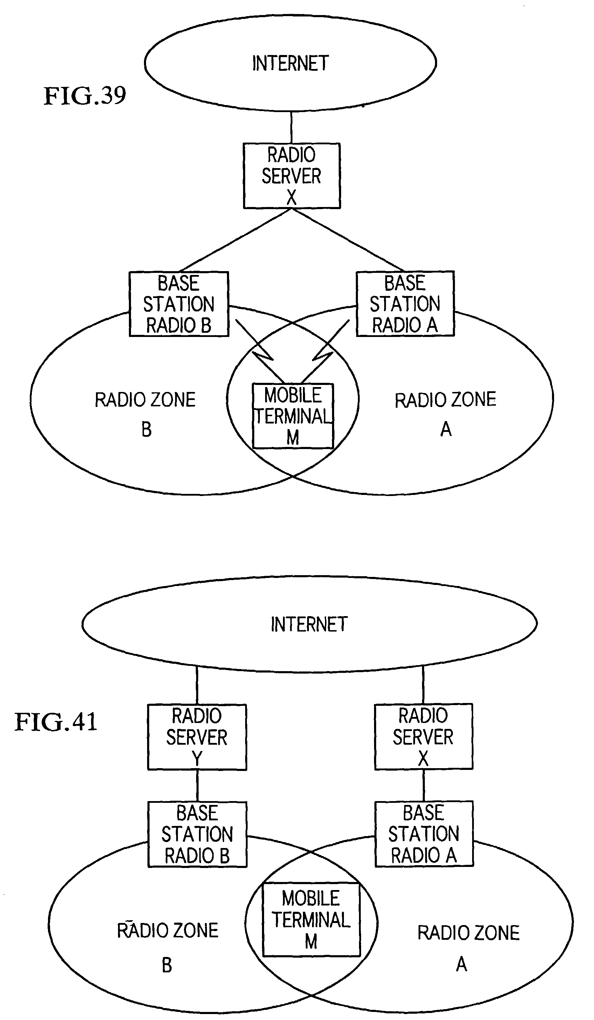

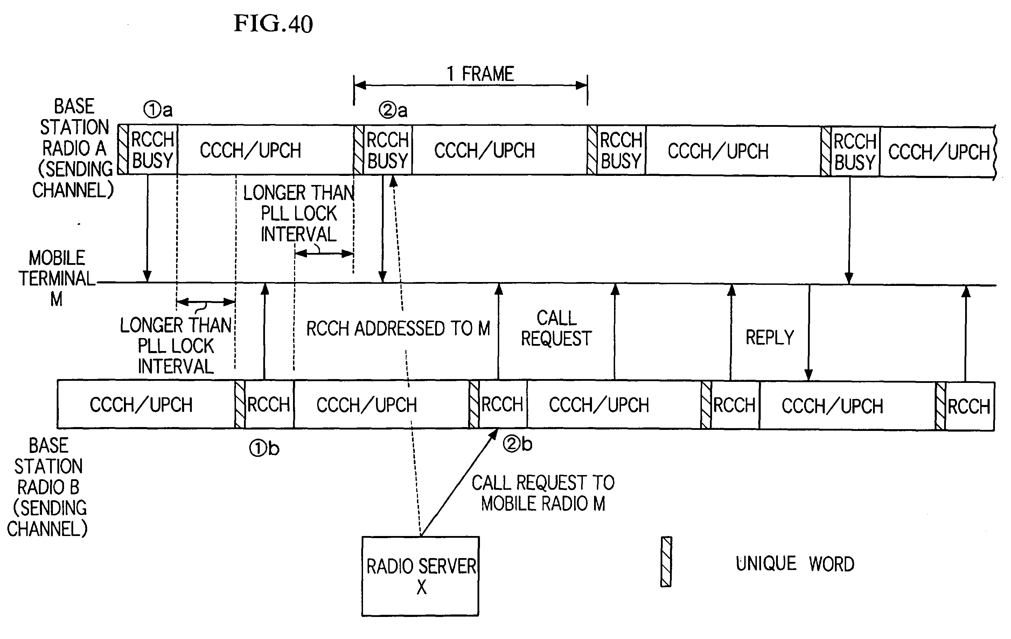

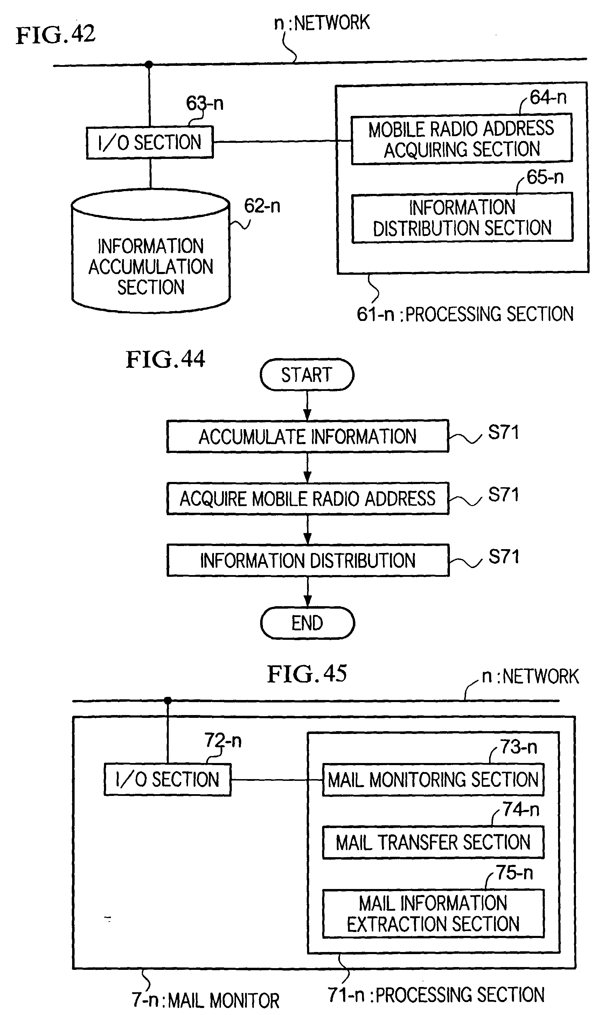

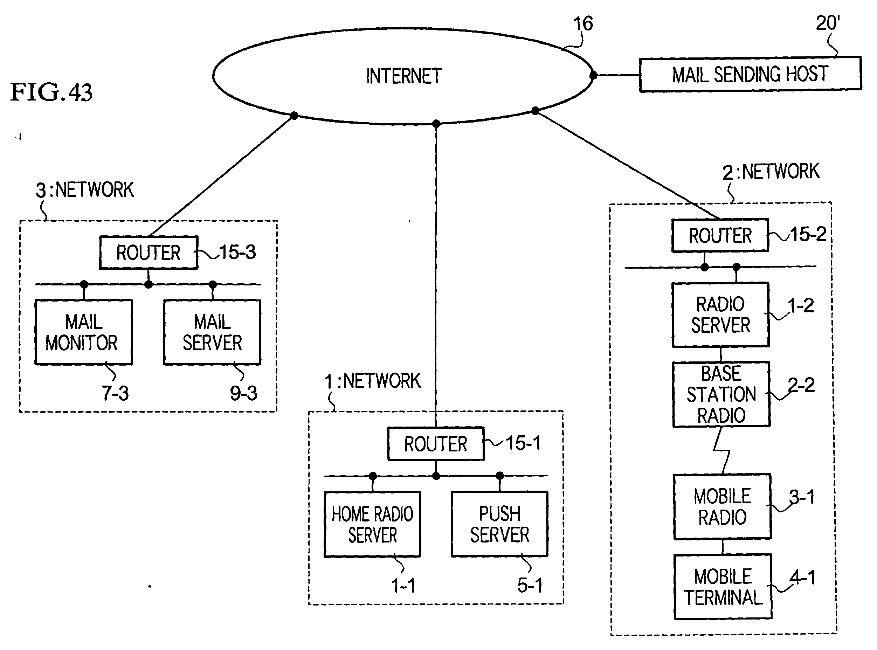

Next, the operation of the mobile radio 3-1 having the structure described above will be explained with reference to Figures 41, 42. These explanations refer to a case, shown in Figure 39, in which the mobile radio is home radio server in a superimposed area of a plurality of operational districts A, B (only two shown) of a plurality of base station radios A, B. Also, Figure 40 shows data transmission timing for the signals and the data contained in the signals in the down-channel transmitted from the two base station radios A, B. Also, communication between the base station radio and the mobile radio is based on the semi-complex method. That is, the base station radio constantly sends packets using the sending channel (down-channel) and the mobile radio responds to packets addressed to itself by using the up-channel.

The sending channel of the base station radios A, B send successive packets in the form of a frame containing one group of UW (unique word) and RCCH (radio control channel) followed by another group of CCCH (common control channel) or UPCH (user packet channel). UW is at the head of each frame, and is a bit string used to synchronize with other frames, and is defined by a bit string of a given value. RCCH is used to show the state of a channel, idle or busy, and contains information for specifying the destination mobile radio, and is received by all the mobile radios. Incidentally, RCCH busy in Figure 40 indicates that the frame is addressed to a mobile radio other than the mobile radio 3-1. CCCH contains control information (call request and the like) as well as information on peripheral base stations such as their channel information, and is received by more than one mobile radio specified by RCCH. UPCH contains data to be sent to a mobile radio, and is received by more than one mobile radio specified by RCCH. UPCH is comprised by data to be sent to the mobile radio, and is sent to more than one mobile radio specified by RCCH.

Radio server X controls base station radios A, B so as to shift data sending timing of base station radios A, B by a certain amount (at least the lock time of PLL section). In Figure 40, the station selection section Me of the mobile radio 3-1 obtains, from the memory section Mf channel information (in this case, channel information on base station radio A) and switches the oscillation frequency of the PLL section Mb so as to be able to receive sending channel of the base station radio A, and sets the received data analysis section Mc so as to enable analysis of received data.

By following such steps, the signal receiving section Ma receives sending channel of the base station radio A, and first obtains RCCH busy① a and demodulates it. The received data analysis section Mc analyzes the received RCCH busy①a. Because RCCH busy①a indicates that the frame is not addressed to the mobile radio 3-1, the received data analysis section Mc commands the station selection section Me to select another station. The station selection section Me obtains, from the memory section Mf, channel information on other channels (in this example, base station radio B), and controls the PLL section Mb and the received data analysis section Mc, as described above for selecting the base station radio A. The signal receiving section Ma can receive and demodulate the sending channel of the base station radio B, after the lock time has elapsed from the time of switching the oscillation frequency by the PLL section Mb. The received data analysis section Mc analyzes received RCCH①b. If, at this time, RCCH①b includes mobile radio 3-1 as its destination address and is followed by CCCH, the data processing section Md extracts station information on adjacent base stations from CCCH and stores in the memory section Mf, and edits the station information stored in the memory section Mf.

The subsequent steps in the operation of the various sections of the mobile radio 3-1 are the same as described above. In Figure 40, it is assumed that an occasion has arisen that the radio server X needs to call the mobile radios 3-1. At this time, because the base station radio A is sending a frame that is not addressed to the mobile radio 3-1, the radio server X sends to the base station radio B a call request for the mobile radio 3-1. The mobile radio 3-1 selects sending channel of the base station radio A and receives RCCH busy②a. However, it finds that the frame is not addressed to the mobile radio 3-1, so that the mobile radio 3-1 further selects sending channel of the base station radio B, and receives RCCH②b. This RCCH②b is addressed to the mobile radio 3-1, and the frame containing this RCCH is extracted and the call request contained in the following CCCH is obtained. Then, the mobile radio 3-1 responds to this call request. Subsequent steps are the same as described above.

Similarly, when a need arises for the mobile radio 3-1 to contact the station, a station having a vacant line can be selected.

In the explanations for Figures 41, 42, two base station radios are mentioned but the practice is to successively scan the sending channels of various base station radios, and select a base station that can provide an operational frequency. Here, if the mobile radio 3-1 is located within the operational range of two base station radios, successive scanning is possible if CCCH or UPCH interval ≧ {PLL section lock time x 2 + UW and RCCH sending/receiving interval). A numerical example is as follows: one frame period is 40 ms (10 ms for UW & RCCH and 30 ms for CCCH/UPCH) and if the PLL lock time is less than 10 ms, it is possible, within one frame period, to receive RCCH contained in the sending channel of a base station radio, and return again to the currently connected sending channel of the base station radio for another signal reception. Also, the example relates to a case of one radio server connected to a plurality of base station radios, and the mobile radio only needs to register/authenticate once with the radio server, and there is no need to repeat the reregister/authenticate procedure with the radio server, every time the base station is switched to the nearest base station.

Next, Figure 41 shows an example of a case in which the mobile radio 3-1 is located in a overlapped area of the operational range A, B of a plurality of base station radios A, B (two shown in Figure 41), and the base station radios A, B are connected to different radio servers X, Y.

In this example, response steps between the signals sent on the sending channels of the base station radios A, B and the sending channel of the mobile radio 3-1 are the same as those in Figure 40. However, because the radio servers are different for the base station radios A, B, when a terminal device connected to the mobile radio 3-1 switches from the radio server X with which it is registered and authenticated to a different base station radio B connected to the radio server Y, registration and authentication are performed with the radio server Y. The terminal device connected to the mobile radio 3-1 completes registration and authentication with the radio server Y by way of the base station radio B, then radio server Y informs radio server X that the terminal connected to the mobile radio 3-1 is registered with the radio server Y. Upon receiving this note, the radio server X deletes the registration of the terminal device connected to the mobile radio 3-1.

Also, the radio servers X, Y have location information of respective base station radios under their control, and additionally, also have location information on base station radios in the overlapped areas of the operational districts of base station radios controlled by other radio servers as well as by radio servers X, Y. Also, each radio server can obtain sending timing of signals in sending channels of the base station radios controlled by other radio servers. And, radio servers X, Y can be synchronized with signals generated from GPS (global positioning system) to control signal transmission timing of the up-channels of the base station radios A, B.

### [Push Service]

Figure 43 shows an example of application of a push-server 5-n and a mail monitoring device 7-n. In this example, three networks n (n=1~3) are connected to the Internet 16 by way of routers 15-n (n=1~3). Network 1 is connected to a home radio server 1-1, and a push-server 5-1. Network N has a radio server 1-2 connected to a base station radio 2-2, and a mobile terminal 4-1 is connected to mobile radio 3-1 which communicates by radio signals with radio server 1-2 by way of the base station radio 2-2. Network 3 is connected to a mail monitor device 7-3 and a mail server 9-3. Also, the radio server 1-n (n=1, 2, ...) controls a specific mobile radio 3-n (n=1, 2, ...) and mobile terminal 4-n (n=1, 2, ...). Also, the home radio server 1-n controls mobile radio 3-n (n=1, 2, ...) and mobile terminal 4-n (n=1, 2, ...). It should be mentioned that the mobile terminal 4-n includes personal computers and dedicated terminals.

Figure 43 shows a case of the terminal device 4-1 controlled by the home radio server 1-1 belonging to network 1 has moved to the operational district of network 2, and is connected to the radio server 1-2 connected to network 2. Although three networks are shown in this example, the number of networks is not limited particularly, and there is also no limit to the number of devices or kinds of devices connected to the network n (n=1, 2, ...). Further, functional server is a general term for servers to provide a particular function, including mail server and news server.

Figure 42 is a block diagram of an example of PUSH type server 5-n. In this example, it is supposed that a plurality of networks n (n=1, 2, ...) are connected to the Internet. Also, communication protocol is TCP/IP, but it is not limited to this method.

The push server 5-n in this embodiment comprises: a processing section 61-n having a mobile radio address acquiring section 64-n and an information distribution section 65-n; an information accumulation section 62-n for storing identification information for the destination mobile terminal 4-n and information to be distributed; and an input/output section 63-n connected to the network n for data input/output. Here, the following information can be used as an identifier of the mobile terminal 4-n: (1) a combination of a subscriber group number, a mobile radio number and a terminal IP address; (2) a combination of a subscriber group number and a mobile radio number; or (3) a combination of a subscriber group number and a terminal IP address. Further, there may be a plurality of mobile radios 3-n that are registered to a subscriber group, and also a plurality of mobile terminals 4-n may be connected one mobile radio 3-n.

When an ID information according to (1) and (3) is used, it is possible to specify the mobile radio 3-n to which a terminal device 4-n is connected. Therefore, it is possible to reliably deliver information to the destination mobile terminal 4-n. When an identifier according to (2) is used, it is possible to specify a mobile radio 3-n to which the mobile terminal 4-n is connected. However, the mobile terminal 4-n itself cannot be specified, so that this method is used to broadcast the same information to all the mobile terminals 4-n connected to the mobile radio 3-n. If a mobile radio 3-n is connected to a mobile terminal 4-n one-on-one, it is possible to deliver only to a specific mobile terminal 4-n.

Also, the mobile radio address acquiring section 64-n corresponds to the mobile radio address acquiring section recited in the claims.

Also, the processing section 61-n is comprised by memory and CPU (central processing device), and it can execute its function by loading an application program in a computer-readable memory and executing the program by computer means. The information accumulation section 62-n is comprised by such non-volatile memory means as hard disc, opto-magnetic disc and the like.

Next, the operation of the push server having the structure described above will be explained with reference to the flowchart shown in Figure 44.

First, information to be distributed to the mobile terminal 4-n and its identifier (a combination mentioned above) are sent by a functional server having an information distributing capability, for example, mail sending host server, news distribution host server and the like, and are stored in the information accumulation section 62-n (step S71). The identifier can be any of the combinations discussed above.

Next, the mobile radio address acquiring section 64-n makes an inquiry to the radio server 1-n in order to specify the radio server 1-n' to which the mobile radio 3-n is currently connected and identified by the IP address of the mobile terminal 4-n. At this time, the push server 5-n sends the identifier for the mobile terminal 4-n. Then, the IP address of the mobile radio 3-n is obtained from the home radio server 1-n (step S72). Here, the push server 5-n and the home radio server 1-n are paired, and can exchange information with each other.

Also, the home radio server 1-n has a table correlating the IP addresses of the mobile radio 3-n and mobile terminal 4-n and identifier information of the receiver mobile terminal 4-n sent from the push server 5-n. And, radio server 1-n' notifies the IP address of mobile radio 3-n to the home radio server 1-n at the stage of registration authentication for the mobile terminal 4-n, and the home radio server 1-n edits the table containing the IP addresses of the mobile radios 3-n for future use. When the push server 5-n requests an IP address of the mobile terminal 4-n, an IP address is returned according to the contents of the table.

Next, the information distribution section 15-n obtains the IP address of the radio server 1-n' from the IP address of the mobile radio 3-n, and sends information scheduled to be sent to the mobile terminal 4-n and its identifier information to the radio server 1-n' (step S73). The radio server 1-n' immediately sends this information to the mobile terminal 4-n. However, when the identifiers listed under (1) and (3) are used for the mobile terminal 4-n, the radio server 1-n' can specify the destination mobile terminal 4-n for delivery of the information so that distribution information is sent to the mobile terminal 4-n. When the identifier mentioned in (2) is used, the radio server 1-n' broadcast information to all the mobile terminal 4-n connected to the mobile radio 3-n.

Here, the network addresses for the radio server 1-n' and the mobile radio 3-n connected to the radio server 1-n' are the same, and the host address of the radio server 1-n' has already been chosen, so that the IP address of the radio server 1-n' can be obtained easily form the IP address of the mobile radio 3-n. For example, if the IP address of the radio server 1-n' is 172.31.0.254, the IP address of the mobile radio 3-n will be 172.31.0.1. The IP address of the radio server 1-n' 17.31.0.254 can be specified from [172.31] in the IP address of the mobile radio 3- n (*.*.0.254 are pre-determined as the host address of the radio server).

Next, mail monitoring device 7-n will be explained with reference to Figure 45.

Figure 45 is a block diagram of the configuration of the mail monitoring device 7-n. The following explanation assumes that a plurality of networks (n=1, 2, ...) is connected to the Internet. Also, it is assumed that the communication protocol is TCP/IP, but it is not limited to this particular method. Also, in this embodiment, the object of processing is e-mails, but other information may be chosen, and information on servers other than the mail server 9-n may be monitored. Also, the present mail monitoring device 7-n is used in conjunction with push server 5-n.

The mail monitoring device 7-n is comprised by a processing section 71-n having a mail monitoring section 73-n, a mail transfer section 74-n and a mail information extraction section 75-n; and an input/output section 72-n for data input/output and is connected to the network n.

The mail monitoring section 73-n accesses mail server 9-n and examines whether new mails are received for the account having the specified mail server 9-n. Then, if a new mail is present, the identifier of the mobile terminal 4-n is generated from the account information. The identifier can be a combination of a subscriber group number, a mobile radio number, a terminal IP address; or a combination of a subscriber group number and a mobile radio number; or a combination of subscriber group number and a terminal IP address. Also, the mail monitoring device 7-n has a table correlating mail account information and identifier information of the mobile terminal 4-n, and generates identifier information using this table.

The mail transfer section 74-n transfers the identifiers of the mobile terminals 4-n receiving distributed mails and new distribution mails to the push server 5-n.

The mail information extraction section 75-n confirms the presence of new mails in the mail server 9-n by the mail monitoring section 73-n, and further confirms the volume of mails, size, type of attachment and the like, at the time of generating the identifier information for the radio server 4-n from the account information. And, information to be transferred to the push server 5-n is prepared according to such information, and is forwarded to the mail transfer section 72-n. For example, when the number of mails and its volume are high, only the title of the mails may be selected.

The functions in the mail monitoring section 7-n may be combined in the mail server 9-n.

Next, the operations of the push server 5-1 and the mail monitoring device 7-1 shown in Figure 43 will be explained.

Mailing host 9-n sends mails including mails addressed to the mobile terminal 4-1 to the mail server 9-3.

The mail monitoring device 7-3 periodically accesses the mail server 9-3 and monitors if there is any new mail. And, if there are new mails, it prepares identifier of the receiving mobile terminal 4-n according to the account information. If the new mail is addressed to the mobile terminal 4-1, for example, the mail monitoring section 7-3 sends the mail and the identifier of the mobile terminal 4-1 to the push server 5-1.

The push server 5-1 sends received information scheduled to be delivered to the mobile terminal 4-1 controlled by the home radio server 1-1 and identifier information of the mobile terminal 4-1 to the information accumulation section 62-1.

And, the push server 5-1 accesses the home radio server 1-1, and makes an inquiry and obtains the IP address of the mobile radio 3-1. At this time, the push server 5-1 sends the identifier information of the mobile terminal 4-1 to the home radio server 1-1, And, the home radio server 1-1 references the table containing IP addresses of the mobile radios 3-n and the mobile terminals 4-n, and the IP address of the mobile radio 3-1 corresponding to this identifier is returned to the push server 5-1.

Next, the push server 5-1, using the IP address of the mobile radio 3-1 obtained, performs the following. If the identifier listed in (2) is being used, information scheduled to be delivered to the mobile terminal 4-1 is transferred to the radio server 1-2. When the identifier listed in (1) or (3) is being used, information scheduled to the delivered to the mobile terminal 4-1 as well as the IP address of the mobile terminal 4-1 are sent.

And, when the radio server 1-2 receives information scheduled to be delivered to the mobile terminal 4-1 and if the IP address of the mobile terminal 4-1 is added to the information, they are sent out immediately to mobile radio 3-1, which immediately transfers the information to the mobile terminal 4-1. It is assumed that the mobile radio 3-1 and the mobile terminal 4-1 correspond one-on-one, in this case.

In the above embodiments, one each of radio server 3-1 and the mobile terminal 4-1 are controlled by the home radio server 1-1 belonging to a network 1, but they may be a plurality of each, and also, for each information scheduled to be distributed to each mobile terminal 4-1, the processing section 61-1 performs the operation described above.

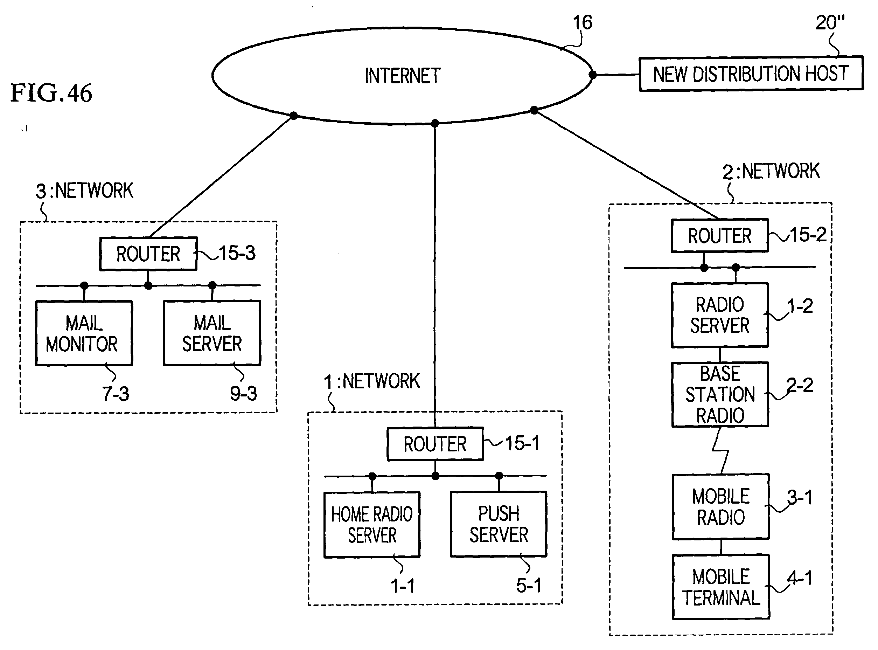

Next, the operation of the push server 5-1 and other devices shown in Figure 46 will be explained. In this embodiment, instead of the mailing host 9-n in Figure 43, news distribution host 20'-n is connected to the Internet. And, the news distribution host 20'-n delivers news to the mobile terminal 4-1. Also, the news distribution host 20'-n has the IP address of the push server 5-1, and is able to send data directly to the push server 5-1.

First, the news distribution host 20'-n sends information for the mobile terminal 4-1 such as news and identifier information of the mobile terminal 4-1 directly to the push server 5-1. And, the push server 5-1 accumulates received information in the information accumulation section 12-1. Subsequent operations are the same as described above.

In this embodiment, distribution information sent from the original sender can be sent to the mobile terminal 4-1 immediately.

### [Broadcasting]

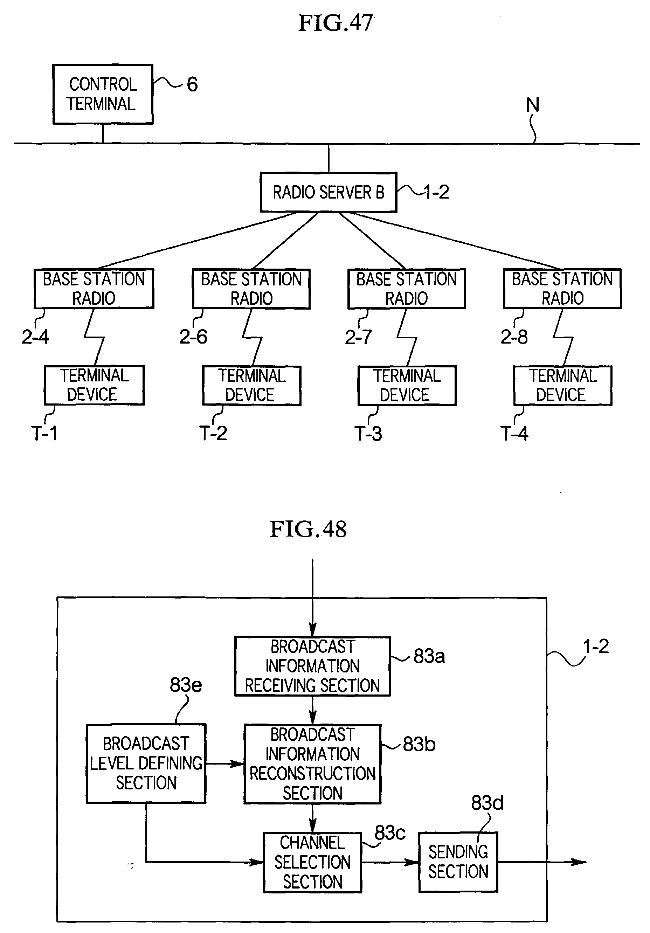

Figure 47 is a block diagram of the overall configuration of an embodiment comprised by: a control terminal 6 for preparing and sending broadcast information; and a radio server B1-2 connected to network N by the control terminal 6. In this block diagram, the location of the control terminal 6 is not limited to the location shown in Figure 47. The radio server B1-2 is connected to four base station radios 2-2, 2-4~2-6, and terminal devices T1~4 are connected respectively to each of the radios 2-2, 2-4~2-6.

Here, for one radio server B1-2, four base station radios 2-2, 2-4~6 are provided, but more than five stations may be connected.

Also, for one base station radio 2-2, one terminal device T-1 is shown but more than two terminal devices 4 may communicate with one base station radio by radio signals.

Next, the operation of broadcasting information from the control terminal 6 will be explained with reference to Figure 47. The same information is distributed to a plurality of terminal devices simultaneously by broadcasting.

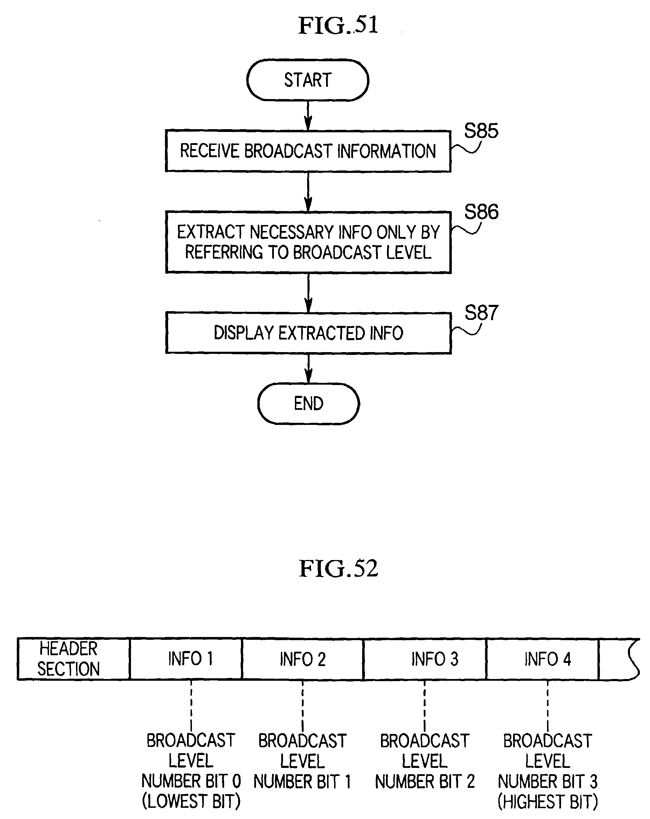

First the operator prepares information to be broadcast using the control terminal 6. An example of the broadcasting format is shown in Figure 52. As shown in this illustration, broadcasting information is comprised by a header section and a plurality of information. In this case, it is assumed that the information is divided into four sections.

The header section includes an identifier to indicate that the information is to be broadcast, network addresses for delivery of information, and the volume of the information files 1~4 that follow the header section.

It is rarely necessary that the same information be broadcast to all the terminal device T-1, so that the broadcast information is divided into a plurality of reception levels according to the subject matter. In the example shown in Figure 52, the information is divided into four groups.

Dividing according to the reception levels can be explained using an example of broadcasting an emergency message according to the type of terminal device as follows: those belonging to individual persons (level 1), those belonging to self-governing bodies (level 3), those belonging to fire departments (level 7), and those belonging to police (level 15).

Accordingly, the terminals receiving broadcasting information is divided into pre-arranged reception levels, and are identified by the level numbers (referred to as broadcast levels).

In the example shown in Figure 52, bits are assigned to information 1~4 to indicate the broadcast levels, so that when the bit is [1], the information is needed by the terminal having this level number. Information 1 is allocated to the lowest bit and information 4 is allocated to the highest bit.

For example, for those terminal requiring only information 1, only the lowest bit is [1] so that the level number is [1]. For those terminals requiring all the information 1∼4, all four bits are [1] so that the level number is [15]. For those terminal requiring no information, level number is [0].

Accordingly, if there are four groups of information, there will be sixteen types of broadcast levels with level number ranging from [0] to [15].

Also, even when there is a large volume of information to be broadcast, number of bits can be increased to increase the number of levels.

Broadcast information is prepared by separating the information into a plurality of levels according to the broadcast levels.

Next, broadcasting terminal 6 broadcasts the prepared information to a specified network N. The network to be broadcast is not limited to the network connected to the broadcasting terminal 6, but can be selected by specifying other network addresses.

The broadcasting terminal 6 may be constructed using a computer device having input/output means.

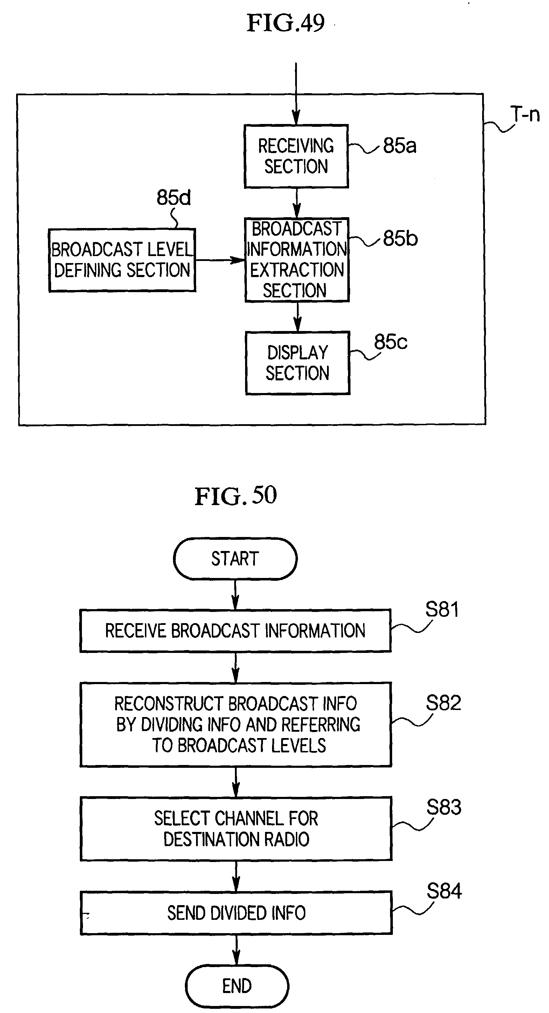

Next, the operation of the radio server B1-2 for distributing the broadcast information to the terminal devices T-1~4 will be explained with reference to Figures 50, 52.

Figure 48 is a block diagram of the configuration of the radio server B1-2, and Figure 50 is a flowchart of the steps taken by the radio server B1-2.

First, a broadcast information receiving section 83 a provided in the radio server B1-2 receives broadcast information distributed by the broadcasting terminal 6 (step S81) and stores this information in a broadcast information receiving section 83a.

At this time, the broadcast information receiving section 83a judges whether or not the packet is broadcast information depending on whether or not the identifier is included in the header to indicate that the packet is broadcast information.

Then, the broadcast information reconstruction section 83b accesses the information stored in the broadcast information receiving section 83a, while referencing the broadcast level defining section 83e, and reconstructs broadcast information so as to match the broadcast levels of the connected the terminal devices T-1~4 (step S82).

Reconstruction of broadcast information means that the types of information not needed by a terminal device T is eliminated so that broadcast information is constructed using only the necessary information.

Also, the broadcast level defining section 83e stores defined level numbers of the broadcast levels and communication channels of the terminal devices T-1~4 currently communicating with the radio server B1-2.

Next, the channel selection section 83c refers to the broadcast level defining section 83e, and selects channels to correspond to the individual terminal devices T-1~4 (step S83) and forwards the reconstructed broadcast information to a sending section 83d.

Next, the sending section 83d transmits the broadcast information through a channel selected by the channel selection section 83c to the individual terminal devices T-1~4 (step S84).

In this case, if packet communication channels are already established between the radio server B1-2 and the terminal devices T-1~4, the channel selection section 83c may transmit the packets by changing the destination addresses to the addresses of the terminal devices T-1~4.

Accordingly, because the radio server B1-2 receives the grouped broadcast information, the radio server B1-2 reconstructs broadcast information according to the broadcast levels of terminal device T, and transmits only the relevant information to the terminal device T, so that the system can operate more efficiently.

Next, the process of selecting broadcast information by the terminal device T will be explained with reference to Figures 47, 49 and 51.

Figure 49 is a block diagram of the configuration of the terminal device T-n, and Figure 51 is a flowchart of the steps taken by the terminal device T shown in Figure 49.

The operation of the terminal device T will be explained with reference to Figures 49 and 51.

First, as described above, broadcast information is prepared by the broadcasting terminal 6, and the information is broadcast within the network N. Then, the radio server B1-2, receiving the broadcast information, distributes the information in the as-received condition to the terminal devices T-1~4.

In the following explanation, because the operation is the same for all the terminal devices T-1~4, terminal device T-1 is chosen as the representative terminal.

When broadcast information is delivered from the radio server B1-2, the receiving section (mobile device) 85a provided in the terminal device T-1 receives this information (step S85), and holds it in the receiving section 85a.

At this time, the receiving section 85a recognizes whether or not the information is broadcast information according to whether or not the broadcast identifier is included in the header section.

Next, the information extraction section 85b accesses the broadcast information stored in the receiving section 85a, while referencing the broadcast level defining section 85d, and extracts only the necessary information for the terminal device T-1 (step S86).

At this time, because the broadcast level of the terminal device T-1 is defined in the broadcast level defining section 5d shown in Figure 52, only the necessary information is extracted from the broadcast information.

Next, the information extraction section 85b displays the extracted information on a display section 85c (step S87).

Accordingly, only the necessary information for the terminal device T- 1 is displayed on the display section 85c provided on the terminal device T-1.

As described above, only the information required by the terminal device T-1 is extracted from the broadcast information so that the information processing efficiency is improved.

Also, because the process of information classification is carried out according to the broadcast level provided in the terminal device T-1, the broadcasting terminal can select what information to be delivered to a terminal device T-1, thus improving the information delivery efficiency.

It should also be noted that broadcast information is not limited to text data, other types of data such as audio data and customized signals are also applicable. In such cases, the display section 85c shown in Figure 49 may be replaced with a speaker device for generating sounds, or an alarm device for generating an alarm sound in response to customized signals.

### [Multicasting]

A multicast system in which same information is distributed to a plurality of terminal device T, will be explained with reference to Figures 47, 53 and 54. In contrast to broadcasting which transmits the same information simultaneously to all the terminal device T, multicasting transmits the same information simultaneously to specified terminal devices.

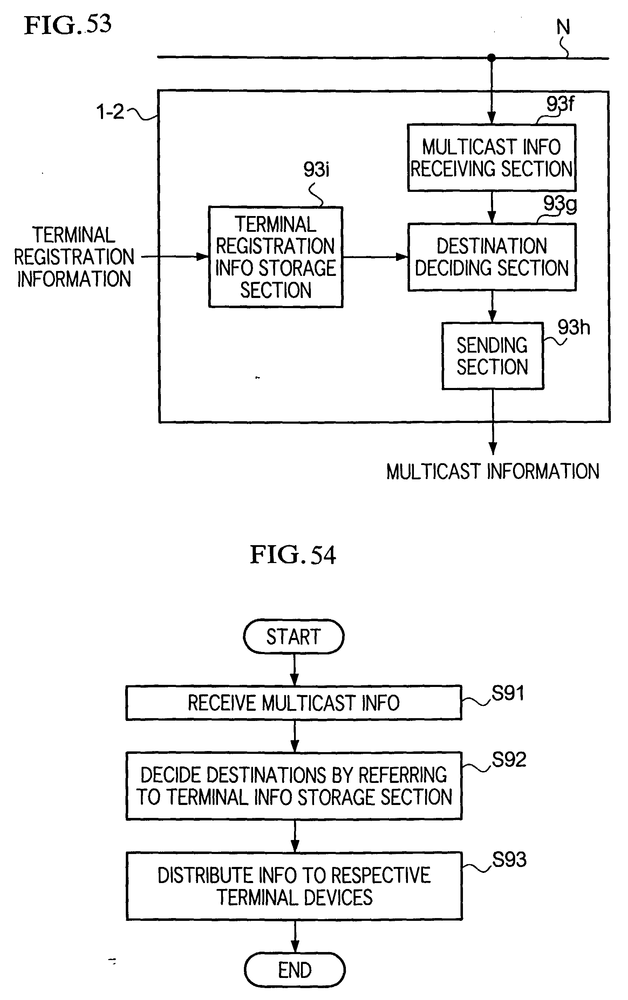

Figure 53 is a block diagram of the configuration of the radio server B1-2, which includes: a multicast information receiving section 93f which received information through a network N; a destination deciding section 93g for determining the delivery destinations; a sending section 93h for sending received information to the terminal device T; and a terminal information memory section 93i for storing information on the home radio server of the terminal device T and a radio server currently being connected.

Figure 54 is a flowchart of the steps of distributing multicast information to terminal device T.

It is assumed that the terminal device T for receiving multicast information have been classified into groups, and are provided with group identifiers ID. The group IDs are managed by the home radio servers for each terminal device T, and a client table containing terminal IDs and group IDs for the terminal device T is included in the terminal information memory section 93i of each home radio server.

First, the terminal device T transmits a terminal registration request to the radio server B1-2. At this time, the terminal device T transmits its terminal ID. In response, the radio server B1-2 carries out terminal registration process as described earlier. Then, the radio server B1-2 reports particulars of the terminal device T to the home radio server, which registers this information. By this process, the home radio server is able to obtain an identification of the radio server currently communicating with the terminal device T that is requesting a terminal registration, and the group ID of the terminal device T.

Next, when the registration process is completed, the home radio server reports to the radio server B1-2 the group ID of the terminal device T registered currently. Upon receiving the group ID, the radio server B1-2 registers the group ID in the terminal information memory section 93i.

Accordingly, this process results in the terminal information memory section 93i in the radio server B1-2 to store a plurality of group IDs for those terminal devices T whose home radio server is the radio server B1-2 as well as those terminal devices T whose home radio servers are other radio servers located in other terminal controlling districts.

Next, the operation, of the radio server B1-2 to receive a multicast packet from a terminal device T and multicasts the packet to specified terminal device T, will be explained in the following.

First, a terminal device T prepares a multicast packet. The packet contains an identifier to indicate that the information is to be multicast, and the address of the destination network and group ID for information distribution. The packet is then transmitted to the destination network. It should be noted that the terminal device T preparing multicast information can be connected to any network and the information can be delivered to any destination network.

Next, the information receiving section 93f provided in the radio server B1-2 receives multicast information (step S91). At this time, the information receiving section 93f judges whether or not the information is multicast information on the basis of whether or not the identifier ID indicating multicasting is included in the header. The received multicast information is stored in the information receiving section 93f.

Next, destination deciding section 93g accesses the multicast information stored in the information receiving section 93f, while referencing the contents of the memory of the terminal information memory section 93i, to decide the delivery destination (step S92). At this time, the destination deciding section 93i selects terminal devices for packet delivery, by extracting the group ID contained in the multicast information, and extracting those terminal devices having the same group ID by referring to the contents of the terminal information memory section 93i. Packet delivery is made to those terminals that are currently communicating with the radio server B1-2 if they have the same group ID.

On the other hand, if a terminal device T whose home radio server is the radio server B1-2 is currently communicating with another radio server and has the same group ID for multicasting delivery, the destination deciding section 93g deduces the radio server which is currently communicating with the terminal device T, and designates this radio server to be a packet delivery destination.

Next, when the delivery destination has been decided, the destination deciding section 93g transmits multicast information received in the information receiving section 93f to individual terminal devices T through the sending section 93h (step S93).

Accordingly, the features of this system are that the reference is made to the terminal information memory section 93i to decide the terminal devices for receiving multicast information, and that the reliability of information delivery is assured because multicast information can be transferred to the correct destination, even when the terminal device T is connected to another radio server.

### [Remote NAT]

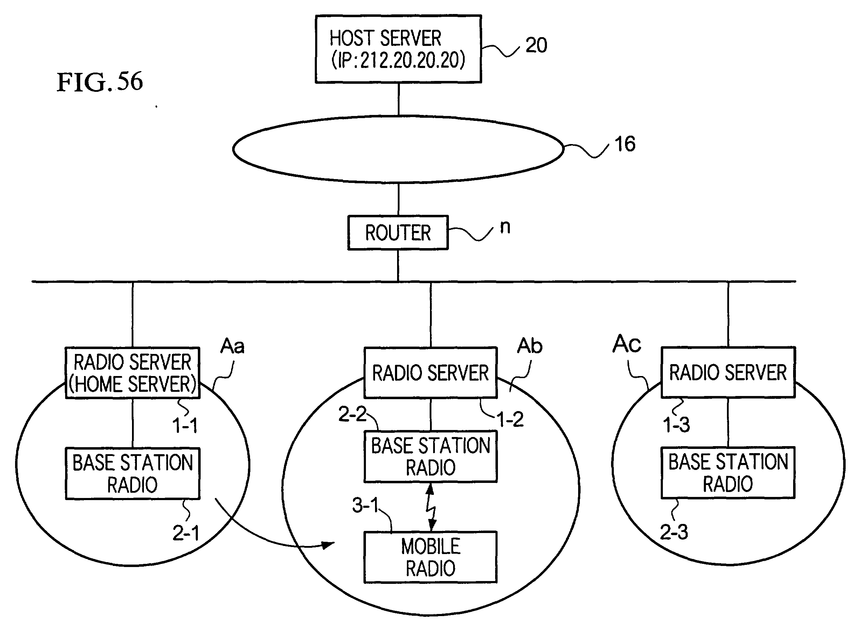

Figure 56 is a block diagram of the overall configuration of the radio server, base station radio and mobile terminal, including a host server 20, which provides a push type information supplying service by way of the Internet 16. Also, this host server 20 has an IP address [212.20.20.20] (shown in the diagram and in the text henceforth as "IP"); a router 3 for routing control of data sent from the Internet to the respective nodes of target destinations.

Radio servers 1-1 ~1-3 are connected to the router 15 and controls sub-networks Aa, Ab, Ac. Each radio server has an Internet IP address and a local IP address for the sub-network that is controlled by each radio server. The base station radios 2-1 ~2-3 are connected to the respective radio servers 1-1 ~1-3. In Figure 56, only one radio server is shown for one base station radio for simplification, but a plurality of base station radios may be connected to one radio server.

A mobile radio 3-1 is connected to any one of the base station radios 2-1~2-3, and communicates with the radio servers 1-1~1-3 by radio signals. For simplification, only one mobile radio 3-1 is shown in Figure 56, but in a real system, clients within the sub-network Aa~Ac represent a plurality of radio servers operating within the operational areas of corresponding base station radios 2-1~2-3.

Also, each radio server has its assigned home radio server, which constantly monitors current location of each mobile radio. For example, if the radio server 1-1 is the home radio server for the mobile radio 3-1 shown in Figure 56, when the mobile radio 3-1 relocates from the control district of the base station radio 2-1 to another control district of the base station radio 2-2 , the mobile radio 3-1 sends the dedicated identifier number allocated to itself and the IP address of the homer server (radio server 1-1) to radio server 1-2 by way of the base station radio 2-2 for terminal registration and authentication.

The radio server 1-2, responding to the terminal registration/authentication from the mobile radio 3-1, selects a suitable IP address to be allocated to the mobile radio 3-1 within the sub-network Ab under its control.

The radio server 1-2 judges whether or not the identifier number received from the registration/authentication process is the identifier number of the mobile radio under its control. If the radio server 1-2 judges that the mobile radio requesting a registration is not one of the mobile radios that it controls, then, the radio server 1-2 transfers the identifier number of the mobile radio 3-1 to the IP address of the home radio server (radio server 1-1, in this case) of the mobile radio 3-1 by way of the Internet 16.

When the radio server 1-1 receives the identifier number, it is stored in memory by correlating the IP address of the sender radio server 1-2 with its IP address. By so doing, it is possible to know that the current location of the mobile radio 3-1 is within the operational district (in this case, the control district of the base station radio 2-2) of the mobile radio 3-1. For example, by providing a mobile radio current location memory section in each radio server so as to store therein all the identifiers of the mobile radios home radio server within its operational district in relation to their IP addresses of their sub-network, current locations of all the mobile radios belonging to the home radio server can be identified.

Next, the configuration of the remote NAT provided in each radio servers 1-1~1-3 will be explained. The radio server 1-n is comprised by: an input/output section 110; a data analysis section 111; an IP address allocation section 112; an address conversion table preparation section 113, an address conversion section 114, and a current location detection section 115 and the mobile radio current location memory section 125.

The current location inquiry signals of the mobile radio described above are signals output from the host server 20 for inquiring the current address of the mobile radio to the home radio server of the mobile radio, and contains at least (1) identifier information to indicate that it is or it is not a current location inquiry signal (inquiry signal hereinbelow) and (2) an identifier number of the mobile radio (it is different from IP address, it is a dedicated number for each mobile radio) attempting to provide the information.

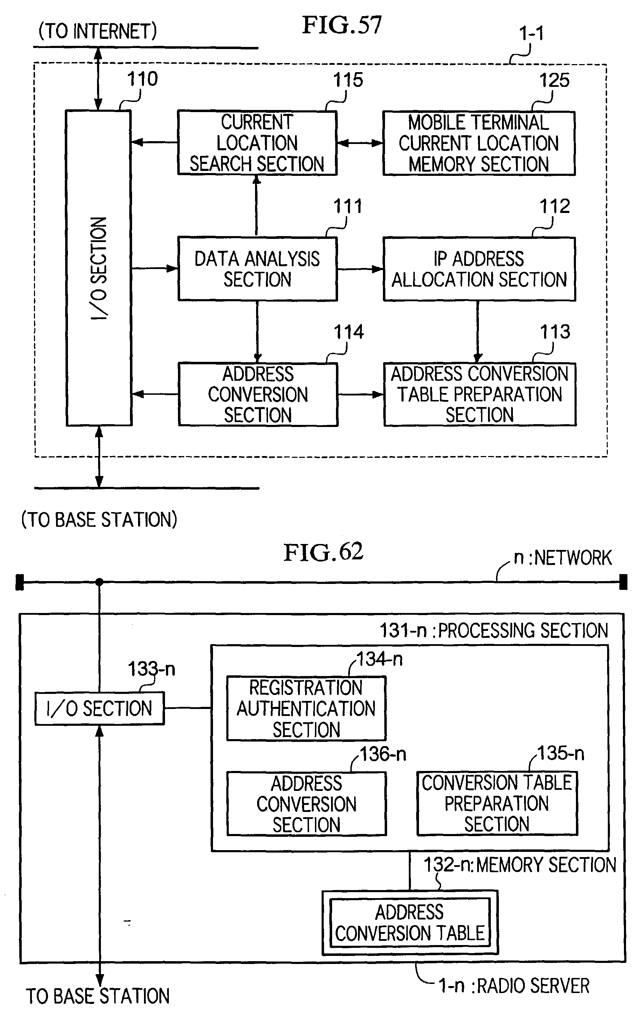

Also, if the received data are current location inquiry signal of the mobile radio, the data analysis section 111 has a current location search section 115 for searching in the current location memory section 125 for the mobile radio (in Figure 57) according to the identifier signal contained in the current location inquiry signal, and a correlating IP address is sent from the input/output section 110 to the host server that sent the current location inquiry signal.

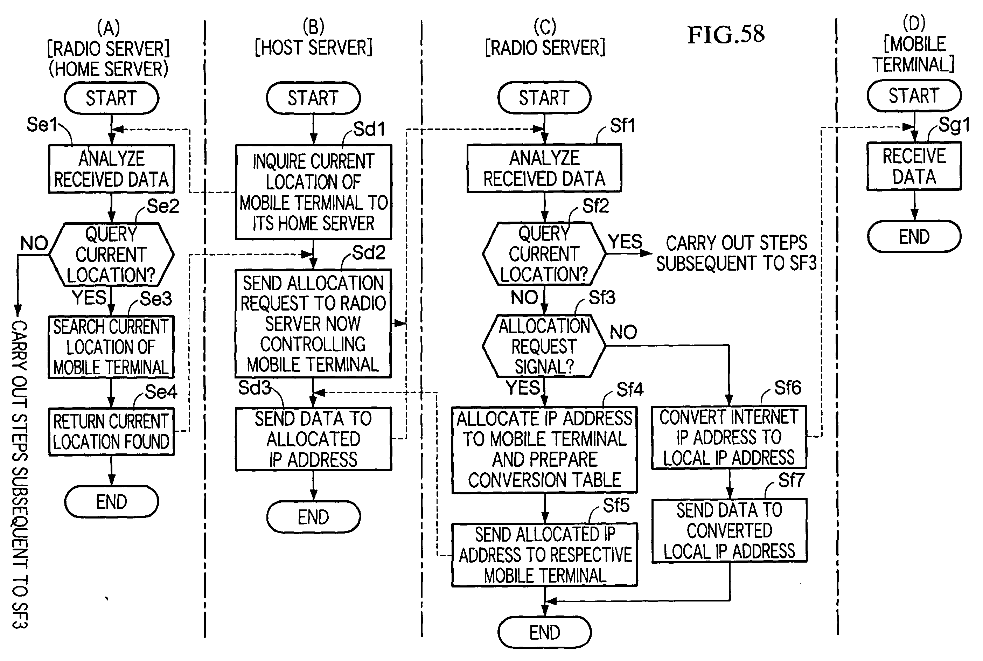

Next, the operation of various sections of the mobile radio 3-1 shown in Figure 56 to perform a push-type service from the host server 20 connected to the Internet 16 will be explained with reference to the flowchart shown in Figure 58. In the flowchart shown in Figure 58, the operation related to radio server 1-1 which is the home radio server for the mobile radio 3-1 is shown in (a); host server 20 in (b); radio server 1-2 in (c); and mobile radio 3-1 in (d). The dotted lines show various data flows.

First, when the host server 20 is providing information to the mobile radio 3-1, it outputs a current location inquiry signal to radio server 1-1, which is the home radio server to the mobile radio 3-1 (step Sd1). The radio server 1-1 receives the signal in the data analysis section 111 which analyzes the data (step Se1).

It judges whether the received data is a current location inquiry signal (step Se2). If it is judges to be a current location inquiry signal, the result is Yes, and it proceeds to the next step (step Se3). In this case, the radio server 1-1 receives a current location inquiry signal, so the result is Yes, and it proceeds to step Se3. Here, if it is judged that the signal is not a current location inquiry signal, then it proceeds to another step and this process is described later.

In step Se3, the current location search section 115 searches the mobile radio current location memory section 125 according to the identifier signal contained in the current location inquiry signal. The current location search section 115 detects an IP address (in this case, it is the IP address for the radio server 1-2) contained in the current location inquiry signal and sends the address to the host server 20 by way of the input/output section 110 (step Se4).

At this time, the process moves to step Sd2 in (b), the host server 20 sends an allocation request signal to the radio server 1-2 that controls sub-network As, in which the mobile radio 3-1 is currently home radio server, so as to allocate an IP address to the mobile radio 3-1 (step Sd2). The radio server 1-2 receives the allocation request signal in the data analysis section 111, which analyzes the data (step Sf1).

If the received data are judged to be the current location inquiry signal (step Sf2), the result is Yes, and it carries out the steps that follows the step Se3, and if the data is judged to be not the current location inquiry signal, the result is No, and it proceeds to step Sf3. Also, if it is judged to be not the current location inquiry signal, it carries out the steps that follows step Se3 shown in (a) in Figure 58.

The contents of the processes carried out in the radio servers 1-1~3 are identical, and, for example, the processes in steps Se1, Se2 shown in (a) and steps Sf1, Sf2 shown in (c) are identical. Therefore, in the radio server 1-2, when the judging result is Yes in step Sf2 in (c), the steps taken are those subsequent to step Se3. In the radio server 1-1, if the judging result is No, the steps taken are those subsequent to step Sf3.

In step Sf2, if it is judged that the received data are not the current location inquiry signal, it proceeds to step Sf3 to judge whether the received data are an allocation request signal. If it is judged that the data are allocation request signal, the result is Yes, and it proceeds to step Sf4. On the other hand, if it is judges that the data are not the allocation request signal, the result is No, and it proceeds to step Sf6. In this case, the radio server 1-2 receives an allocation request signal, the result is Yes, and it proceeds to step Sf4.

In step Sf4, the IP address allocation section 112 selects, from a plurality of IP addresses in memory, one Internet address IP that has not been allocated, and allocated the IP address to the mobile radio 3-1. Then, the address conversion table preparation section 113 relates the IP address of the mobile radio 3-1 and the IP address allocated by the IP address allocation section 112, and stores the data in the address conversion table.

When the new IP address in added to the address conversion table in the address conversion table preparation section 113, it proceeds to step Sf5, and the address conversion section 115 sends the IP address allocated to the mobile radio 3-1 to the host server which is the original sender of the allocation signal.

Accordingly, when the host server 20 receives the IP address allocated to the mobile radio 3-1 from the radio server 1-2, it proceeds to step Sd3 in (a) in Figure 58, and provides the data to the mobile radio 3-1 by sending the received data to the IP address.

When the data are received by the radio server 1-2, it proceeds to step Sf1 in (c), and the received data are analyzed in the data analysis section 111. In this case, the data received by the radio server 1-2 are neither the current location inquiry signal nor allocation request signal, the results of judging in steps Sf2, Sf3 are both No.

It then proceeds to step Sf6, and the address conversion section 114 converts the destination IP address contained in the analyzed received data analyzed by the data analysis section 111 to the IP address of the mobile radio 3-1 according to the address conversion table in the address conversion preparation section 113.

Next, it proceeds to step Sf7, and the address conversion section 114 sends the data sent by the host server 20 to the convened local Internet address, i.e., to the mobile radio 3-1 by way of the input/output section 110 and the base station radio 2-2. By so doing, as shown in (d) in Figure 58, the mobile radio 3-1 receives data provided from the host server 20 (step Sg1).

When the mobile radio 3-1 relocates from the operational district controlled by the base station radio 2-2 to another district controlled by base station radio 2-3, the radio server 1-1 is able to know the current location of the mobile radio 3-1 when the mobile radio 3-1 asks for registration/authentication within the district controlled by the mobile radio 3-2. And, the host server 20 can provide push-type service to the mobile radio 3-1 by having the radio server 1-3, which controls the sub-network Ac, performing the process shown in (c).

Also, if the mobile radio 3-1 is located within the operational district in the sub-network As controlled by the radio server 1-1 (home radio server of the mobile radio 3-1), the same push-type service can be provided by the host server 20 to the mobile radio 3-1 by having the radio server 1-1 performing the steps subsequent to the step Sf3 in (c), as in the case described above.

### [DHCP relay agent]

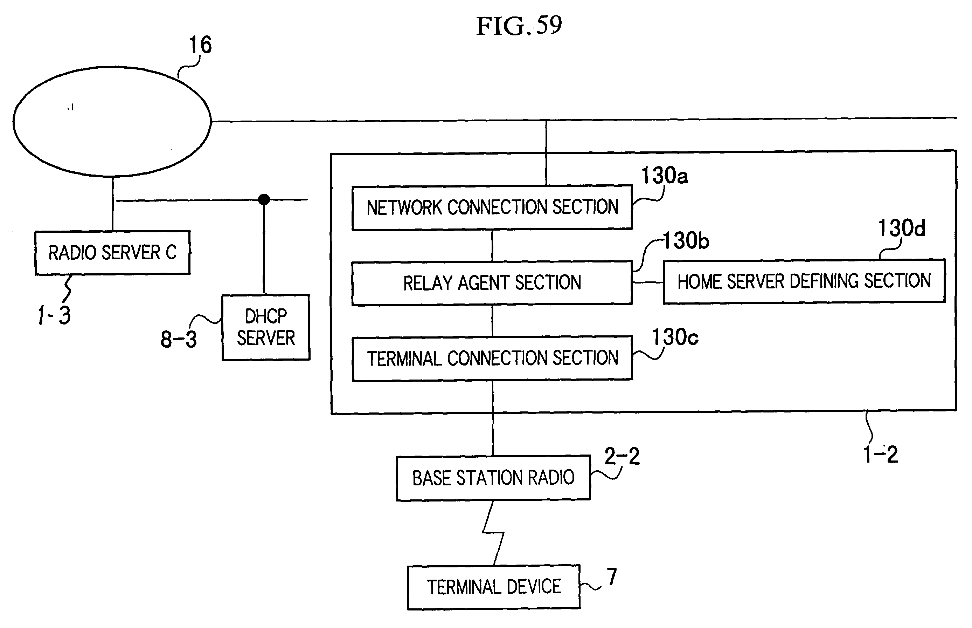

Figure 59 is a block diagram of the radio server B1-2, comprised by: a network connection section 130a for providing a connection for sending packets to the network 2; a relay agent 130b for sending an IP address request signal to DHCP server 8-3 in response to an IP address request sent from a terminal device T, and receives an issued IP address; a terminal connection section 130c for establishing a communication path with the terminal device T by way of the base station radio 2-2; and a home radio server defining section 130d for defining the home radio servers for individual terminal devices T.

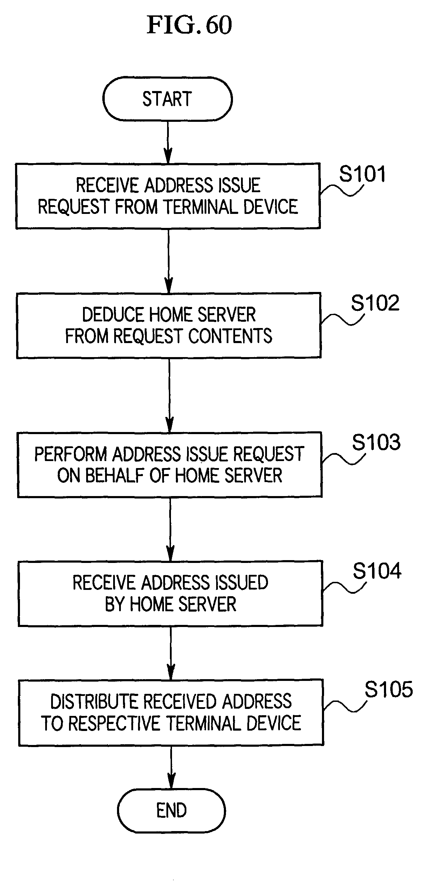

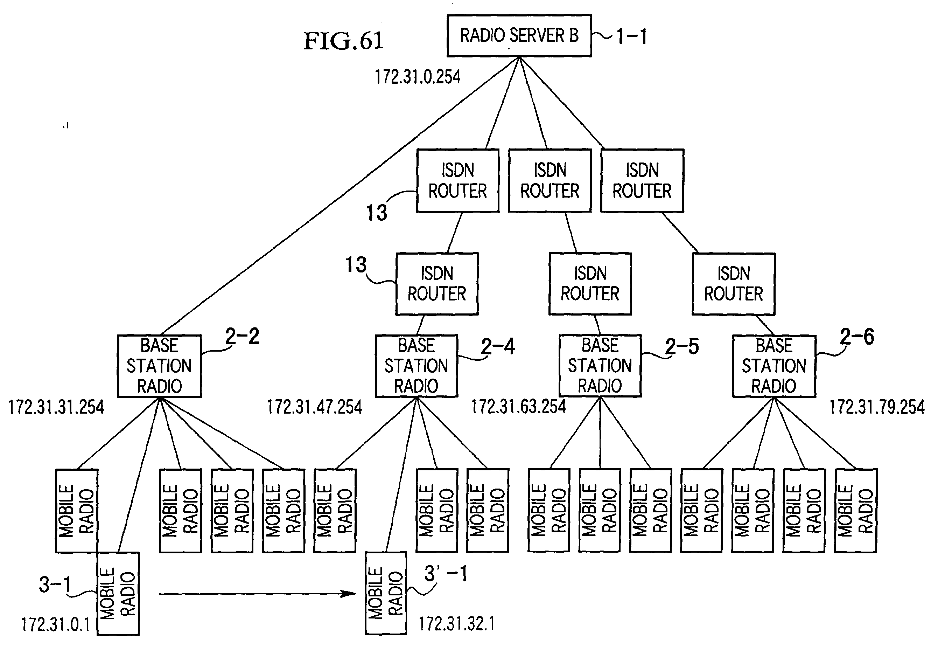

Next, the process of issuing an IP address from the radio server B1-2 will be explained with reference to Figures 59, 61. Figure 60 is a flowchart for the steps taken by the radio server B1-2.

First, the terminal connection section 130c in the radio server B1-2 receives an IP address request sent from the terminal device T by way of the base station radio 2-2 (step S101). The IP address request contains an identifier number to specify a mobile radio. At this time, the terminal device T broadcasts (meaning sending the same packet simultaneously to all the devices connected within the network) an IP address request. In response, the radio server B1-2 judges whether the IP address request is from the terminal device T, and if it is, the IP address request is accepted.

The IP address request packet includes the identifier ID for the mobile terminal 4-n that is sending the request. The identifier ID is a media access control (MAC) address belonging to the mobile terminal 4-n. A MAC address is an identifier number allocated to the hardware of the terminal device T.

Next, when the received packet is an IP address request from the terminal device T, the terminal connection section 130c forwards the received packet to the relay agent section 130b.

Then, the relay agent section 130b extracts from its contents the identifier ID of the terminal device T, and by referencing the contents of the home radio server defining section 130d, deduces an identifier ID to correspond to the mobile radio making the request (step S102).

The home radio server defining section 103d is provided with a table relating identifiers IDs of individual mobile radios 3-n and the IP addresses of the home radio servers having the identifier IDs of the terminal devices T. By consulting the table, the relay agent section 103b deduces the IP address of the home radio server for the terminal device T having the identifier ID received therein.

Next, the relay agent section 103b sends an IP address request packet on behalf of the terminal device T to the home radio server (radio server C3-3 in this case) from the network connection section 103a (step S103). At this time, the source address of the sending packet is the IP address of the radio server B1-2, and the destination address is the IP address of the deduced home radio server.

Next, the radio server C1 -3 receiving the IP address request packet sends an IP address request to the DHCP radio server 8-3. In response to the request, the DHCP radio server 8-3 issues an IP address presently available for use, and sends it to the radio server C1 -3. In response, the radio server C1 -3 sends the packet containing the IP address issued by the DHCP radio server 8-3 to the radio server B1-2 that sent the IP address request packet.

Next, the network connection section 103a receives the packet sent by the radio server C1-3 (step S104). The network connection section 103a judges whether the received packet is a response packet replying to the IP address request, and if it is the response packet, the packet is forwarded to the relay agent section 103b.

Next, the relay agent section 103b receiving the response packet from the network connection section 103a attaches the identifier ID of the terminal device T, and forwards the packet to the terminal connection section 130c.

Next, the terminal connection section 130c distributes the response packet to the terminal device T by broadcasting (step S105). Then, the terminal device T checks whether the identifier ID is included in the broadcast packet for the terminal device T, and if it is contained, the terminal device T extracts the IP address from the packet.

Here, if the identifier of the mobile radio 3-n does not exist in the home radio server defining section 130d, the IP address request is sent to a pre-determined radio server or to another radio server stored in memory from past records, and if the identifier ID of terminal device T is not found, this radio server inquires further to other radio servers. The radio server having the required identifier ID may send the response to the IP address request by taking a reverse route to the inquiry signal. By so doing, the radio server can obtain information for a mobile radio which is to become its home radio server, thereby improving the security.

Accordingly, in response to an IP address request from a terminal device T, an IP address can be obtained from a radio server even if the radio server is not its home server, it enables a terminal device T to connect to other radio servers without changing the settings of its IP address.

Also, normal broadcasting systems do not allow a terminal device to broadcast beyond its own network to other servers connected to other networks. However, the present broadcast system allows an IP address request to be made to a DHCP radio server connected to any network, because of the provision of a relay agent section for sending/receiving an IP address request packet on behalf of the terminal device.

Next, an address band system for the radio server B1-2, base station radios 4-2-2, 2-4~6 and the mobile radio 3-1 will be explained with reference to Figure 61. In Figure 61, IP address for the radio server B1-2 is assumed to be, for example, [172. 31. 0. 254], and the IP addresses for the base station radios 2-2, 2-4∼6 to be [172. 31. 31. 254], [172. 31. 47. 254], [172. 31. 63. 254] [ 172. 31. 79. 254], respectively.

Also, an IP address of one mobile radio 3-1 among the many mobile radios communicating with the base station radios 2-2, 2-4∼6 is assumed to be [172. 31. 0. 1].

An IP address is usually expressed in 32-bits and decimal notation, and each group of 8-bits is separated by a period [.].

In the following explanation, the numerals separated by [.] are referred to, from the left, as first numeral, second numeral, third numeral and fourth numeral.

The third numerals [31], [47], [63], and [79], in the base station radio 2-2, 2-4~6, are expressed so that the higher 4-bits are [0001], [0010], [0011], [0100] and all the lower four bits are [1111]. Also, the third and fourth numerals for all the base station radios are pre-selected for each device by the respective radio server. As an example, all the base station radios can be expressed as [11111110] (representing 254 in decimal notation). The lower 4-bits in the third numeral and the numeral [1111 1111 1110] represented by the fourth numeral indicate that this device is a base station radio, and the upper 4-bits in the third numeral distinguish individual base station radios.

Also, the first numeral and the second numeral represent the radio server B1-2 to which the base station radios 2-2, 2-4∼6 are connected.

Such designations by IP addresses allow to identify a radio server connected to each of the base station radios 2-2, 2-4∼6 as well as to identify the numerical order of these base station radios within a base station.

With respect to identifying the mobile radio 3-1, the lower 12-bits of the 32-bit IP address are assigned by the radio server B1-2. Therefore, it is possible to know to which base station radio the mobile radio 3-1 is connected, by selecting an IP address for the mobile radio 3-1 according to the IP addresses allocated to the radio server B1-2 and the base station radios 2-2, 2-4∼6.

Accordingly, by providing IP addresses to the base station radios also, and using integrated services digital network (ISDN) routers 13 for the communication between the radio server B3-2 and the wireless station device 4-3, communications can be carried out regardless of how far apart the radio server B1-2 is from the base station radio 2-4, without changing the configuration shown in Figure 61.

### [Pseudo-proxy]

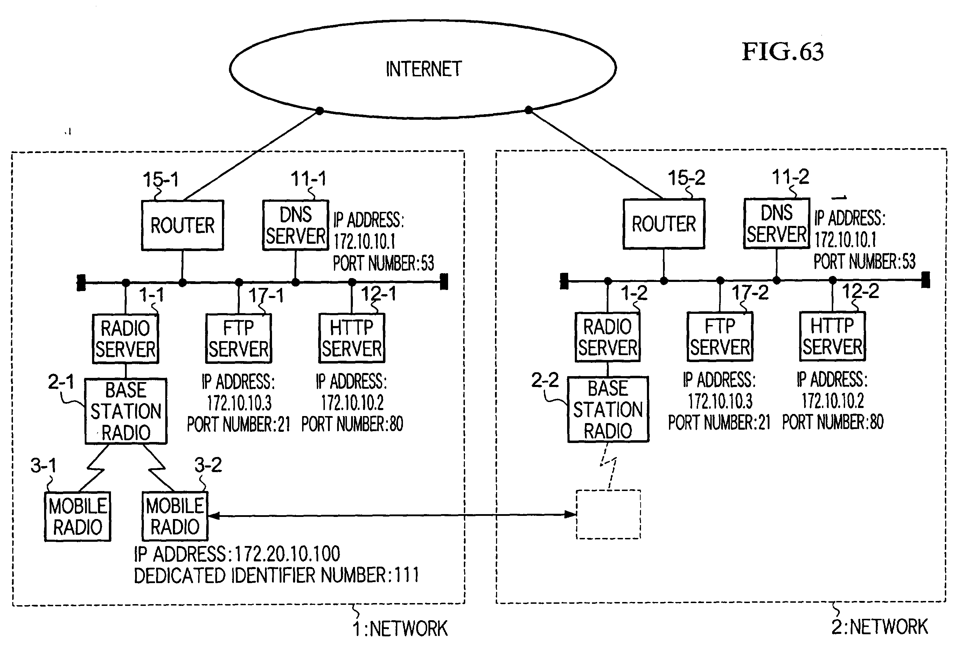

Figure 63 shows an embodiment of the system including the pseudo-proxy processing. In this system, two networks n (n=1, 2) are connected to the Internet by way of the routers 15-n (n=1, 2). Radio servers 1-n (n=1, 2) are assigned and connected to the network n (n=1, 2). Each network n (n=1, 2) is connected to functional servers such as DNS servers 11-n (n=1, 2), HTTP servers(n=1, 2), FTP servers (n=1, 2). In this embodiment, servers refer to these functional servers. The mobile radio 3-1 belong to network 1, and is connected to radio servers by way of the base station radio 2-1 by radio signals. The diagram in Figure 63 shows a case of a mobile radio 3-2 belonging to network 2 has moved into the operational district of network 1, and is connected to the radio server 1-1 belonging to network 1. In this case, two networks 1, 2 are shown but there is no limit to the number of networks that can be included in the system. Also, the number and type of mobile radios 3-n (n=1, 2) and various servers are not limited.

Figure 62 is a block diagram of the configuration of the radio server in this embodiment. It is assumed that a plurality of radio servers (n= 1, 2) are connected to the Internet. Also, it is assumed that the communication protocol is TCP/IP, but there in no limitation on the protocol that can be used in the system.

The radio server 1-n comprises: a registration authentication section 134-n; a conversion table preparation section 135-n; a processing section 131-n having an address conversion section 136-n; a memory section 132-n containing data including the address conversion table; an input/output section 133-n connected to the Internet and base station radio 2-n for data transfer.

The radio server 1-1 comprises: a registration authentication section 134-n, a memory section 132-n storing data containing the address conversion table; and an input/output section 133-n connected to the Internet and the base station radio 2-n for data transfer.

The registration authentication section 134-n judges, according to a registration authentication request sent from the mobile radio 3-n to the radio server 1-n, whether the mobile radio 3-n belongs to it or to other network. If it is judged that the mobile radio 3-n belongs to other network, the registration authentication section 134-n further carries out the following steps:
(1) when the mobile radio 3-n does not have IP addresses and port numbers of own and of various servers, the mobile radio 3-n requests the home radio server 1-n' to provide IP addresses and port numbers of various functional servers, and receives various data related to the IP address of the mobile radio 3-n, and the IP addresses and port numbers of the functional servers such as HTTP server, DNS server and mail server.
(2) when the mobile radio 3-n has information such as its own IP address and the IP addresses and port numbers for various servers, and receives various data related to the IP address of the mobile radio 3-n, and the IP addresses and port numbers of the functional servers such as HTTP server, DNS server and mail server.

The conversion table preparation section 135-n prepares an address conversion table n, based on the information received by the registration authentication section 134-from the home radio server 1-n' or the mobile radio 3-n. This address conversion table relates IP addresses of the various servers belonging to the home radio server to IP addresses of the various servers that belong to the same network as its own network, and relates IP addresses of the mobile radios 3-n in other networks to the IP address of its own radio.

When the mobile radio 3-n does not belong to its own network, the address conversion section 136-n, in response to a connection service to various servers from the mobile radio 3-n, converts IP addresses and port numbers of various servers and the mobile radio 3-n to match its own network, by referring to the address conversion table, thus enabling the mobile radio 3-n to access respective servers belonging to its own network.

Further, it is assumed that each network n has at least one radio server 1-n.

Also, the processing section 131-n is comprised by a memory and a CPU, and executes the process by loading various programs (not shown) for performing various functions by the processing section 131-n. The memory section 132 is comprised by non-volatile memories such as the electrically erasable programmable read-only memory (EEPROM), hard disc, opto-magnetic disc.

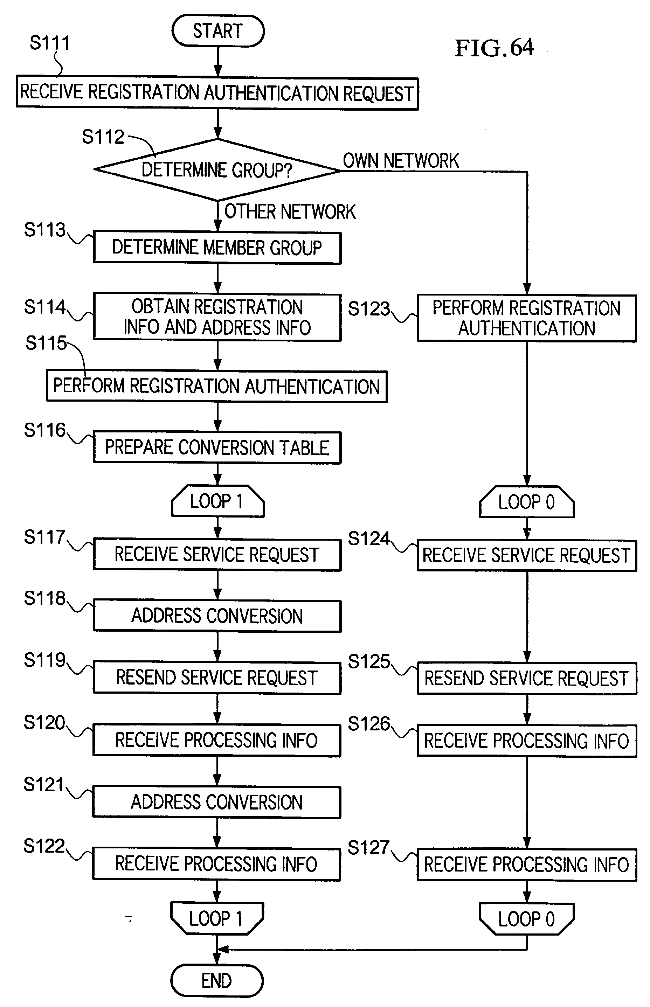

The operations of the radio server 1-1 and mobile radio 3-2 will be explained with reference to Figures 63 and 64. Figure 64 is a flowchart of the steps taken by the radio server 1-n (n=1, 2).

Here, the mobile radio 3-2 is under the control of the home radio server 1-2, and an input device and a display device as built-in devices or peripheral devices are connected to the mobile radio 3-n. In this case, input device includes input devices such as keyboard, mouse, touch panel. Display device refers to a cathode ray tube (CRT).

First, the mobile radio 3-2 accesses the radio server 1-1 by way of the base station radio 2-1 by radio signals, and sends a registration authentication request accompanied by registration information to the radio server 1-1, which receives this registration request (step S111). At this time, the mobile radio 3-2 does not recognize what network it is accessing. Also, a uniquely defined identifier and the like are sent to the mobile radio 3-2 as registration information.

The radio server 1-1 receives the registration information sent from the mobile radio 3-2, and the registration authentication section 134-1 judges whether the mobile radio 3-2 belongs to own network 1 (that is, under the control of the radio server 1-1) based on the registration information (step S112). Here, it is assumed that each radio server has network-related information (such as IP addresses and port numbers of radio server 1-n (n= 1, 2,...) belonging to each network) to correspond with the identifiers in the mobile radio 3-2.

The mobile radio 3-2 belongs to network 2, therefore, the registration authentication section 134-1 judges that the mobile radio 3-2 does not belong to its won network, and deduces that the mobile radio 3-2 belongs to network 2 according to the network-related information (step S113).

And, the registration authentication section 134-1 accesses the home radio server 1-2, and receives registration information and IP address of the mobile radio 3-2, and further, IP addresses and port numbers of the various servers belonging to network 2 (step S114).

The registration authentication section 134-1 carries out registration processing using the registration information obtained from the home radio server 1-2 (step S115). If the mobile radio 3-2 is judged to be approved for network access, according to this registration processing, radio connection between the mobile radio 3-2 and the radio server 1-1 is established. Here, the registration processing performed here has been separately determined. One example is to carry out the registration processing using the unique identifier of the mobile radio 3-2 contained in the registration information.

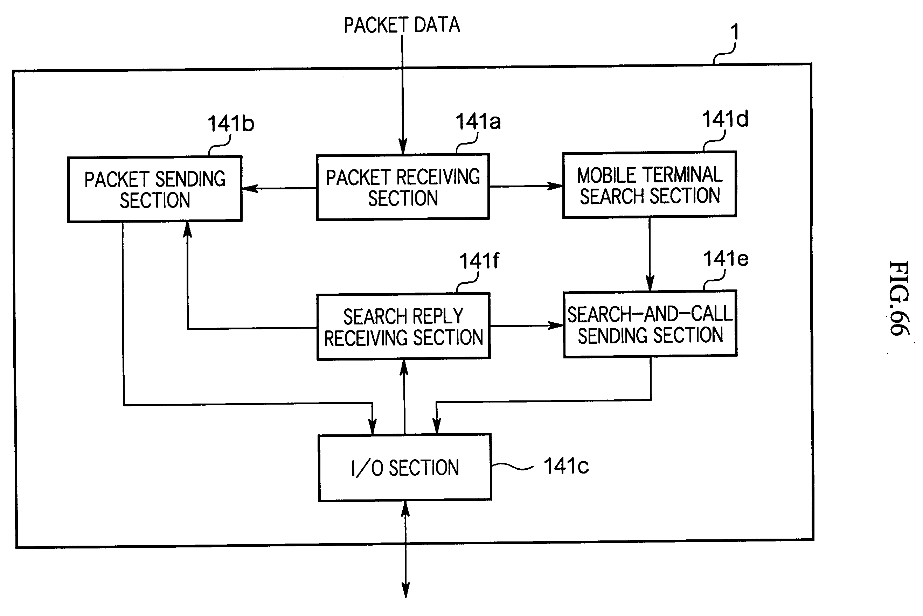

Next, the address conversion section 136-1 prepares an address conversion table correlating the IP address of the mobile radio 3-2 and IP addresses and port numbers of the DNS server/FTP server/HTTP server and the like belonging to network 2, received from the home radio server 1-2, with the IP addresses and port numbers of the DNS server/FTP server/HTTP server and the like belonging to network 1 (step S116). Figure 65 shows one such example of the address conversion table. In this example, the table is comprised by various fields containing IP addresses and port numbers under the control of home radio server, and IP addresses and identifier number under the control of the destination radio server.

Next, service requests sent to various servers from the mobile radio 3-2 are received by the radio server 1-1 by way of the base station radio 2-1 (step S117). At this time, as in the case of the mobile radio 3-2 accessing within network 2, requests are sent to the DNS server 11-2, HTTP server 12-2, FTP server 17-2 and others.

Next, the address conversion section 136-1 converts the IP address of the relevant servers in network 2 to IP addresses in network 1 for the DNS server 11-1, HTTP server 12-1, FTP server 17-1 and the like in network 2, based on the address conversion table stored in the memory section 132-1. The address conversion section 136-1 further converts the IP address of the mobile radio 3-2 to correspond with the addresses in network 1, and uses the data for the original sender (step S118). Also, port numbers are sometimes defined in duplicate, therefore, the mobile radio 3-2 may send the desired function information (HTTP, DNS, FTP and others), and the address conversion section 136-1 may use such function information for IP address correlation.

And, service requests containing converted IP addresses of the servers and the mobile radio 3-2 are sent to the servers in the network 1 having the same services (step S119).

The server receiving a service request sends a response containing the information results of requested processing, the IP address of the subject server as the original sender and the IP address of the mobile radio 3-2 as the receiver address. The radio server 1-1 receives this response (step S120).

The address conversion section 136-1 converts the IP address of the original sender address in the response being received from the server to a corresponding server address in the network 2, according to the address conversion table. Further, the IP address of the mobile radio 3-2 is convened to the IP address in network 2 (step S121).

And, the radio server 1-1 sends processed information to the mobile radio 3-2 by way of the base station radio 2-1 (step S122).

From this point on, steps in loop 1 are repeated, and when the mobile radio 3-2 disconnects from the radio server 1-1, the process is completed.

In the next case, the mobile radio 3-1 belonging to network 1 accesses the radio server 1-1 by way of the base station radio 2-1.

The mobile radio 3-1 sends a registration authentication request containing registration information to radio server 1-1, which receives this registration request (step S111). Here, the registration request contains the unique identifier for the mobile radio 3-1, for example.

The radio server 1-1, upon receiving the registration request from the mobile radio 3-1, the registration authentication section 134-1 judges whether the mobile radio 3-2 belongs to its own network (that is, network 1 under the control of radio server 1-1) (step S112).

Because the mobile radio 3-1 belongs to network 1, the registration authentication section 134-1 judges that it belongs to its own network, and the registration authentication section 134-1, using the registration information obtained from the mobile radio 3-1, carries out registration processing (step S123). If the access by the mobile radio 3-1 is deemed proper, radio connection between the mobile radio 3-1 and the radio server 1-1 is established.

Next, service requests sent to various servers from the mobile radio 3-1 are received by the radio server 1-1 by way of the base station radio 2-1 (step S124).

And, a service request packet containing the IP address of the server whose services are required by the mobile radio 3-1 and a service request containing the IP address of the mobile radio 3-1 are sent to the relevant server (step S125).

The server receiving the service request performs processing, and a response packet is sent, containing the processing results, the IP address of the server as the sender address, and the IP address of the mobile radio 3-1 as the destination address, and the packet is received by the radio server 1-1 (step S126).

And, the radio server 1-1 sends the processed information to the mobile radio 3-1 by way of the base station radio 2-1 (step S127).

From this point on, the process is repeated in the loop 0, and when the mobile radio 3-1 disconnects from the radio server 1-1, processing is completed.

The above embodiments related to the case of the mobile radio 3-n not having information such as its IP address, IP addresses and port numbers of various severs. But, when the mobile radio 3-1 has such information as its IP address, IP addresses and port numbers of various servers, such information can be contained in the registration request received by the radio server 1-1 in step S111, and the address conversion table can be prepared according to this information.

As explained above, the radio server 1-1 converts IP addresses, sent from the mobile radio 3-2, belonging to network 2 that are contained in the various requests to the servers to IP addresses of various equivalent servers belonging to network 1, and requests are then redirected. By so doing, the mobile radio 3-2 can receive the services of functional servers belonging to a different network, without changing any parameters of the environment of network 2.

### [Search-and-call]

Figure 66 is a block diagram of the configuration of the radio server 1, comprised by: a packet receiving section 141 a for receiving a packet sent to radio server 1; a packet sending section 141b for sending a packet received in the packet receiving section 141 a to the mobile radio 3 by way of the base station radio 2-n; an input/output section 141b for exchanging data between the base station radio 2-n; an input/output section 141c for data exchange with the mobile radio 3; a mobile terminal search section 141 d for searching for the mobile radio 3 so as to send the packet received in the packet receiving section 141 a; a search-and-call sending section 141e for sending a search-and-call packet for the mobile radio 3; and a call response receiving section 121f for receiving a response when the mobile radio 3 responds to the search-and-call.

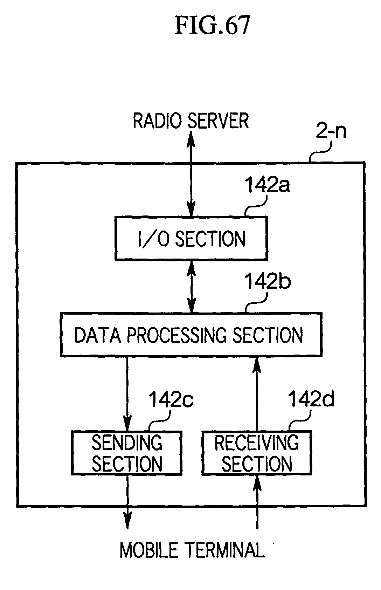

Figure 67 is a block diagram of the configuration of the base station radio 2-n comprised by: a input/output section 142a for exchanging data with the radio server 1; a data processing section 142b for processing the data send from the mobile radio 3; a packet sending section 142c for sending the packet to the mobile radio 3; and a packet receiving section 142d for receiving the packet sent from the mobile radio 3.

Next, the steps for sending the packet arriving in the radio server 1 to the mobile radio 3 though the network.

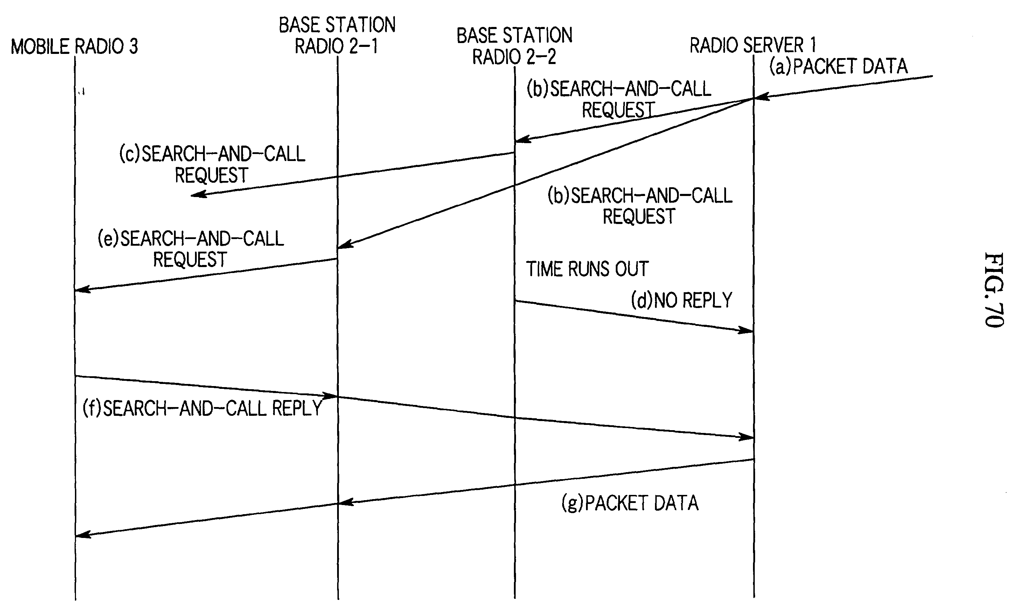

Figure 70 is a state transition diagram to show the operations of the radio server 1, base station radios 2-1~2 and mobile radio 3. In this case, the mobile radio 3 is assumed to be home radio server within the operating district of the base station radio 2-1.

First, the packet receiving section 141 a receives the packet by way of the network ((a) in Figure 70), and holds the packet in the packet receiving section 141a. A note is sent to the mobile terminal search section 141 d that a packet was received.

Next, the mobile terminal search section 141d receives the note, and obtains the address of the packet destination by analyzing the packet. The destination refers to the address of the mobile radio 3 to receive the packet.

Next, the mobile terminal search section 141 d forwards the receiver address obtained to the search-and-call sending section 141e. In response, the search-and-call sending section 141e broadcasts a search-and-call request packet containing the receiver address to all the base station radio 2-n from the input/output terminal 141c in order to search a mobile radio 3 having this address ((b) in Figure 70).

Next, the data processing section 142b provided in each base station 2-1∼2 receives the search-and-call request, and outputs it from the input/output section 142a to the sending section 142b. Then, the sending section 142c broadcasts the search-and-call request by radio signals ((c) and (e) in Figure 70).

Next, the data processing section 142b in the base station radio 2-2 waits for a given time period and examines whether a response has been received during the period from the mobile radio 3. In this example, the mobile radio 3 is not in the operational district of the base station radio 2-2, therefore, the result is that the waiting time runs out. When there is no response within a give period of time, the data processing section 142b of the base station radio 2-2 notifies the radio server 1 from the input/output section 142a that the called mobile radio 3 did not respond ((d) in Figure 70).

In the meantime, the mobile radio 3 is in the operational district of the base station radio 2-1, therefore, responding to the search-and-call request broadcast from the base station radio 2-1, the mobile radio 3 sends a call response to the base station radio 2-1 ((f) in Figure 70). Then, the receiving section 142d of the base station radio 2-1 receives the call reply, which is forwarded to the data processing section 142b.

Next, the data processing section 142b of the base station radio 2-1, responding to the call reply, sends a reply. The details of the reply to the radio server 1, address of the mobile radio 3 and the identifier of the base station radio 2-1 that controls this operational district, are contained in the packet. The packet constitutes a call reply.

Next, the call reply receiving section 141f of the radio server 1 receives the address of the mobile radio 3 sent by the base station radio 2-1. The reply receiving section 141f notifies the address of the mobile radio 3 contained in the reply packet and the identifier of the base station radio 2-1 currently controlling the mobile radio 3 contained in the call reply to the packet sending section 141b.

Next, the packet sending section 141b reads out the packet addressed to the mobile radio 3 in the notice sent from the call reply receiving section 141f from the packet receiving section 141a. And, the readout packet, and sends the packet according to the identifier of the base station radio contained in the packet sent from the reply section 141f from the input/output section 141c ((g) in Figure 70).

Next, the data processing section 142b of the base station radio 2-1 sends the packet sent from the radio server 1 to the mobile radio 3 from the sending section 142c.

Accordingly, even when it is not known where the mobile radio 3 is in the operational area of the base station radio 2-1, a search-and-call request is broadcast so that the packet can be sent reliably to the base station radio 2-n that responded to the search-and-call request.

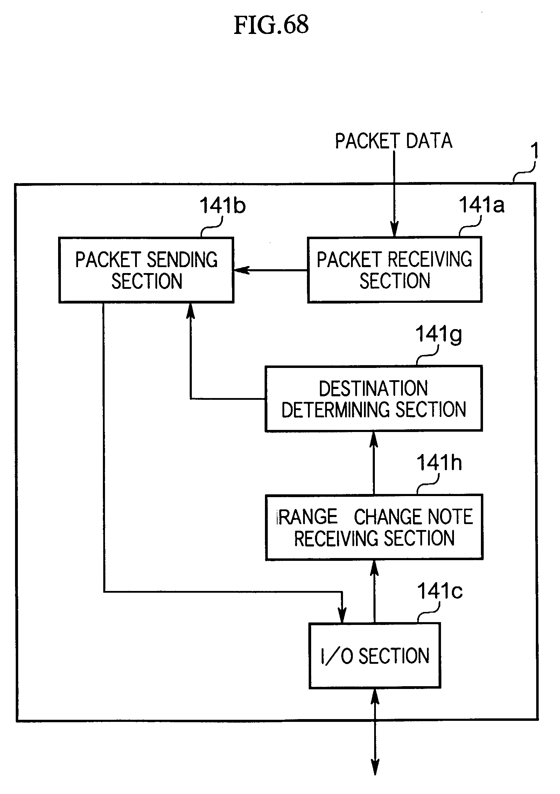

Next, another embodiment of the radio server 1-1 and the mobile radio 3 will be explained with reference to Figures 68, 69 and 71.

Figure 68 is a block diagram of the configuration of the radio server 1. The difference between the two radio server 1s shown in Figures 70 and 68 is that the mobile terminal search section 141d, the search-and-call sending section 141e and call reply receiving section 141f are replaced by a receiver determining section 141g and a district change receiving section 141h. The receiver determining section 141g decides the destination of the packet according to the notice from the district change receiving section 141h, which receives the notice sent from the mobile radio 3.

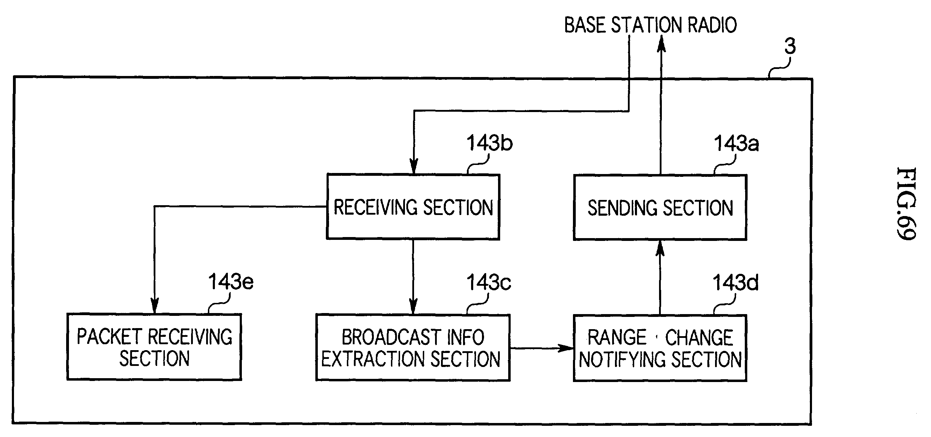

Figure 69 is a block diagram of another embodiment of the mobile radio 3, comprised by: a sending section 143a for sending a packet to the base station radio 2-n; a receiving section 143b for receiving the packet sent from the base station radio 2-n; a broadcast information extraction section 143c for extracting the information broadcast by the base station radio 2-n; a district change notifying section 143d for judging whether or not the operational district has been changed, and if the district has been changed, sending a district change notice, according to the information sent from the broadcast information extraction section 143c; and a packet receiving section for receiving packets sent by the users.

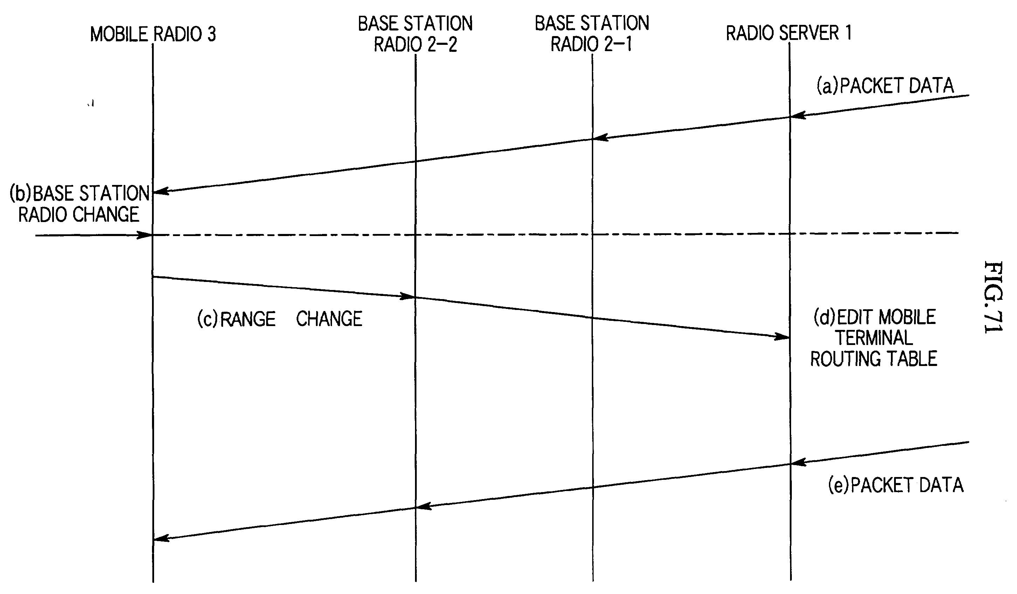

Figure 71 is a block diagram of the state transition diagram in another embodiment of the radio server 1, base station radios 2-1~2 and the mobile radio 3.

The operations of the radio server 1-1 and the mobile radio 3 will be explained. It is assumed that the mobile radio 3 is located inside the operational district of the base station radio 2-1. It is also assumed that the power has been turned on in the mobile radio 3 and registration has been completed with the radio server 1.

First, the packet receiving section 141a receives the packet sent by way of the network ((a) in Figure 71), and holds this packet in the packet receiving section 141a.

Next, the packet sending section 141b reads out the packet held in the packet receiving section 141a, and obtains the destination address of the packet. Then, the packet sending section 141b inquires the destination determining section 141g. and obtains the identifier of the base station radio 2-n registering the terminal of the mobile radio 3. In this case, it is the base station radio 2-1.

Then, the packet sending section 141b sends the packet on the basis of the obtained identifier of the base station radio 2-1 from the input/output section 141c. The packet is delivered to the mobile radio 3 by way of the base station radio 2-1.

The receiving section 143b provided in the mobile radio 3 receives the packet and forwards it to the packet receiving section 143e. The packet receiving section 143c performs various steps including displaying the received packet on the mobile terminal 4 connected to the mobile radio 3.

It is supposed that the mobile radio 3 relocates, at this time, from the operational district under the control of the base station radio 2-1 to the operations district of the base station radio 2-2 ((b) in Figure 71).

Next, the operation of the system will be explained when the operational district changes because of the movement of the mobile radio 3.

The receiving section 143b provided in the mobile radio 3 receives information broadcast from either the base station radio 2-1 or the base station radio 2-2 . The broadcast information is a packet containing the identifier of the base station, and packet is decided to be sent or not sent to the packet receiving section 143e on the basis of the header attached to the packet.

Next, if the received information is broadcast information, the receiving section 143b forwards the packet to the broadcast information extraction section 143c. The broadcast information extraction section 143c extracts the identifier name of the base station radio 2-n contained in the broadcast information. Then, it judges whether the identifier name is different than the identifier name held from the previous exchange. The results of the comparison indicates whether there has been a change in the district in which the mobile radio 3 is located.

Next, if the identifier name of the base station radio 2-n is different, the broadcast information extraction section 143c notifies the district change notifying section 143d that the operational district has been changed. Upon receiving this information, the district change notifying section 143c sends a base station change packet containing the address of the mobile radio 3 to the base station radio 2-2 ((c) in Figure 71). The base station radio 2-2 receives the packet and transfers it to the radio server 1.

Next, the district change notifying section 141h receives the packet from the input/output section 141c. Then, the address of the mobile radio 3 and the identifier name of the base station radio 2-1 contained in the base station change packet is forwarded to the destination determining section 141g.

Upon receiving the packet, the destination determining section 141g edits the mobile terminal routing table provided in the destination determining section 141 g ((d) in Figure 71). The mobile terminal routing table correlates the addresses of the mobile radios 3 with the base station radio 2-n controlling the districts in which the mobile radios 3 are located.

The packet sending section 141b refers to the mobile terminal routing table and determines to what base station radio 2-n the packet should be delivered.

Next, when a new packet arrives in the mobile radio 3 ((e) in Figure 71), the packet sending section 141b refers to the mobile terminal routing table provided in the destination determining section 141g, and deduces the base station radio 2-2 and sends the packet to the mobile radio 3 by way of the base station radio 2-2 .

Accordingly, every time the mobile radio 3 relocates from one operational district to another operational district, the mobile radio 3 notifies of the district change to the radio server 1, which edits the mobile terminal routing table upon each receiving of the notice, thereby enabling to deliver the packet reliably to the mobile radio 3 even if there is a change in the operational district in which the mobile radio 3 is located.

### [Time Correction]

The radio server 1 in this embodiment is connected to the base station radios 2, and the mobile terminal 4 is connected to the mobile radio 3. The radio server 1 uses radio signals to communicate with the mobile terminal 4 by way of the base station radio 2 and the mobile radio 3. And, the radio server 1 is connected to the Internet, and provides various services to the mobile terminal 4, and enables the mobile terminal 4 to connect to the Internet.

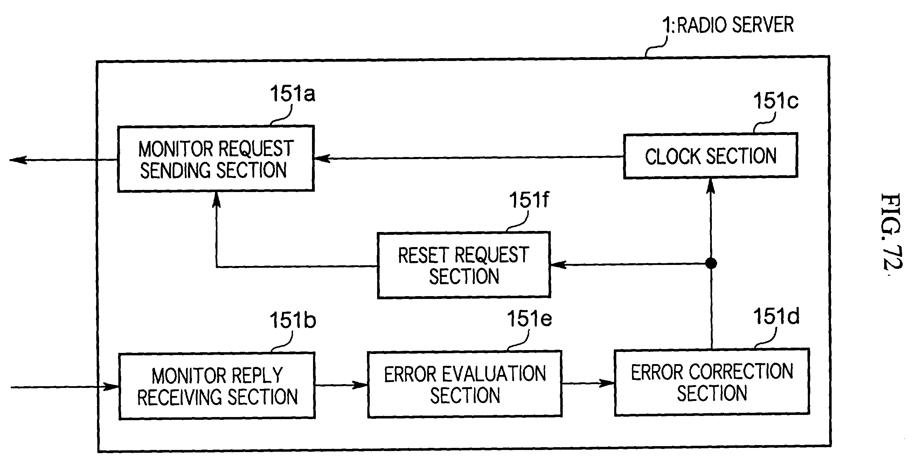

Figure 72 is a block diagram of the radio server 1 in this embodiment.

To correct time of the day, the radio server 1 is comprised by: a monitor request sending section 151a for sending a monitor request to monitor the movement of the base station radio 2; a monitor reply receiving section 151b for receiving a monitor reply (station state monitor reply); a clock section 151c; an error correction section 151d for correcting the time in the clock section 151c; and an error evaluation section 151e for evaluating the difference between the spent interval contained in the reply from the base station radio 2 and the spent interval measured by the clock section 151c.

Further, the station monitor request and the monitor reply are communicated periodically in order to monitor the operational state of the base station radio 2. Also, the monitor request sending section 151a, monitor reply receiving section 151b, error correction section 151d, error evaluation section 151e, reset request section 151f may be operated by dedicated hardwares, or may be executed by using suitable programs executed by microprocessor units (MPU).

Here, the monitor request sending section 151 a functions as the monitor request sending device 151a; the monitor reply receiving section 151b as the monitor reply receiving device 151b; the error evaluation section 151d as the error evaluating device 151d; the error correction section 151e as the error correcting device 151e; and the reset request section 151f as the reset requesting device 151f.

Next, the operation of the radio server 1 having the structure presented above will be explained. First, the operation of the radio server 1 from the step of resetting will be explained. Reset is invoked when the radio server 1 is powered on or re-started. When a reset request is output from the error correction section 151d, when the reset request section 151f detects a reset signal (not shown), it sends a command to the monitor request sending section 151 a so as to include a reset request to reset the spent time measurements in the station monitor request to be sent to the base station radio 2.

Next, the monitor request sending section 151a sends the station monitor request including the spent time reset request to the base station radio 2. Upon receiving the monitor reply, the monitor reply receiving section 151b, commands the error evaluation section 151e to measure the spent time from that point on.

Upon receiving the spent time measure command, the error evaluation section 151e obtains a current time of day from the clock section 151c.

The monitor request sending section 151a again sends a monitor request after a specific time has elapsed (for example, 15 min) to the base station radio 2.

Next, the monitor reply receiving section 151c receives a monitor reply containing the spent time of the base station radio 2 between the previous monitor request and the current monitor request from the base station radio 2, and forwards the spent time received to the error evaluation section 151e. Here, the base station radio 2 continues to monitor spent time between the first monitor request containing the reset command and the next monitor request containing the reset command.

Upon receiving the spent time from the monitor reply receiving section 151b by way of the base station radio 2, the error evaluation section 151e obtains the current time from the clock section 151c. Then, the difference in the spent time measured by the base station radio 2 and the spent time in the radio server 1 is computed, and it examines whether the difference is within a specified range (for example, five seconds). If the difference is not within the specified range, it sends a command (correction command) to correct the difference as well as a note to correct the clock section 151c to the error correction section 151d.

Upon receiving the correction command, the error correction section 151d corrects the time in the clock section 151c according to the time difference contained in the correction command. Then, a reset request sending command is sent to the reset request section 151f to send a reset request to the monitor reply receiving section 151a.

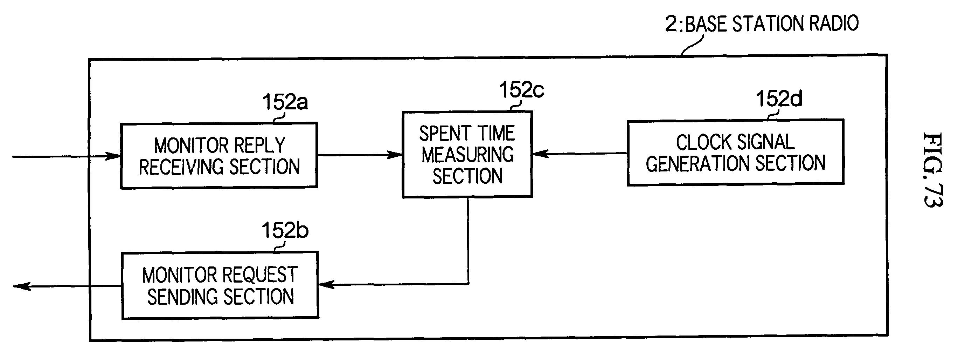

Next, the operation of the base station radio 2 will be explained in the following with reference to an embodiment of the base station radio 2 connected to a radio server 1 shown in Figure 73.

To correct the time in the radio server 1, the base station radio 2 comprises: a monitor request receiving section 152a for receiving a station monitor request output from the radio server 1; a monitor reply sending section 152b for sending a reply to the station monitor request; a spent time measuring section 152c for measuring the spent time; and a clock signal generation section 152d. Also, the spent time measuring section 152c is provided with a clock signal generation section 152d to measure spent time. Also, the spent time measuring section 152c measures spent time according to the clock signals generated by the clock signal generation section 152d. Also, the clock signal generation section 152d used in this embodiment includes a high precision oscillator provided in the base station radio 2. Therefore, the spent time measuring section 152c can measure spent time with high precision.

Also, the monitor request receiving section 152a, the monitor replay sending section 152b, the spent time measuring section 152c may be operated by dedicated hardwares, or MPU may be used to execute their functions. Also, the spent time measuring section 152c may be served by a counter.

Next, the operation of the base station radio 2 constructed as above will be explained.

Upon receiving a base monitor request containing the reset request for the spent time measuring device from the radio server 1, the monitor request receiving section 152a sends a spent time measuring command to the spent time measuring section 152c to start measurements of spent time from that point on, and if the monitor request does not contain a reset request, it sends a spent time monitor to the monitor reply receiving section 152b to forward the spent time from the previous reception of a monitor request containing a reset request to the current point in time.

Upon receiving the spent time measure command from the monitor request sending section 152a, the spent time measuring section 152c begins measuring time from the point in time of receiving the command (first point in time), and sends a command to the monitor reply sending section 152b to send the monitor reply to the radio server 1. Also, upon receiving spent time notice from the monitor reply sending section 152b, the spent time between the previous command of spent time measuring and the current spent time measuring command (second point in time) to the monitor reply sending section 152b, and the monitor reply to the radio server 1.

Upon receiving the monitor reply sending command from the spent time measuring section 152c to send the monitor reply to the radio server 1, the monitor reply sending section 152b sends a monitor reply containing or not containing the spent time to radio server 1.

Next, linked operation of the radio server 1 and the base station radio 2 will be explained in the following with reference to specific examples.

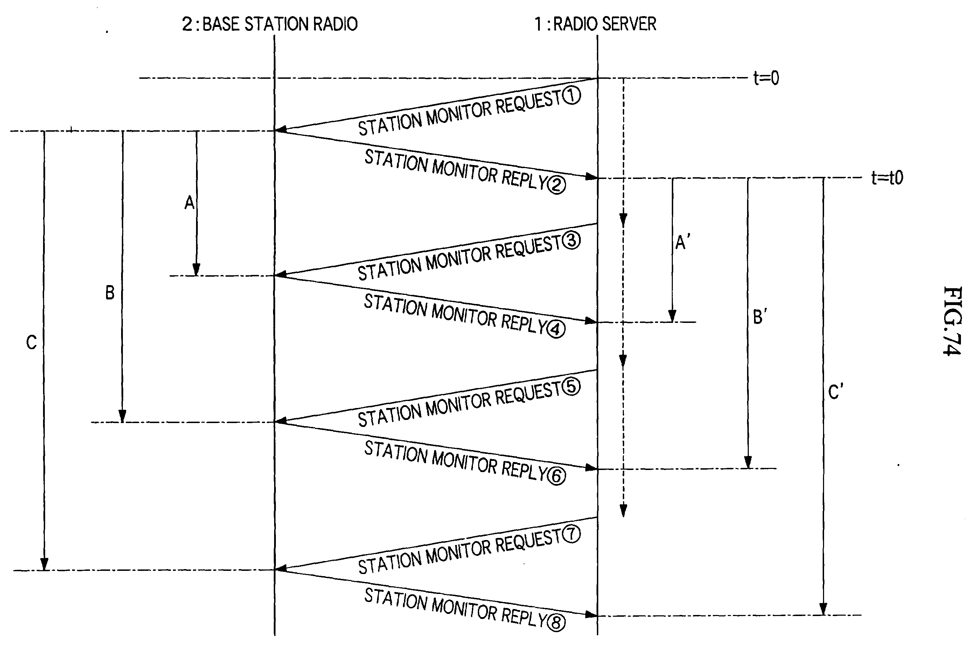

Figure 74 is a diagram to show the sequence of events between the radio server 1 and the base station radio 2 for correcting the time in the wire server 1.

First, the radio server 1 performs reset or time correction step, and sends a monitor request ① containing the spent time reset request to the nearest base station radio 2. This point in time is denoted by t=0. Also, the radio server 1 has location information on the base station radio 2 that is under its control, and performs time correction based on the time according to the nearest base station radio 2. The reason for this approach is to minimize the signal propagation delay between radio and base stations. However, if the base station radio 2 cannot be used for any reason, another base station closest to the base station radio 2 is selected to send the monitor request ①.

When the base station radio 2 receives the monitor request ① from the radio server 1, and if it contains spent time reset request (in this case, it contains such a request at this point in time), spent time counting is started, and sends a monitor reply ② to the radio server 1. The radio server 1 receives monitor request ① containing the reset request and when monitor reply ② is received immediately, it starts measuring from that point in time (t=0). Also, between the time of sending the monitor requests (①, ③, ...) and receiving the monitor replies (②, ④) depends on the distance of separation between the radio server 1 and the base station radio 2, but it is of the order of several tens of milli-seconds. The time interval between sending a monitor request and a monitor response to the same base station radio 2 may be considered to be substantially the same.

After a specific time interval has elapsed since sending the monitor request ①, the radio server 1 sends another monitor request ③ (that does not contain spent time reset) to the base station radio 2.

The base station radio 2 receives the monitor request ③ from the radio server 1, it sends a monitor reply ④ that contains spent time A to the radio server 1.

Upon receiving the monitor reply ④ from the base station radio 2, the radio server 1 computes a difference (A-A') between the spent time A contained in the monitor reply and the spent time A' measured in the radio server 1, so as to judge whether or not correction step by the clock section 151c is required.

If a correction by the clock section 151 c is necessary (for example A-A'=5 seconds), the clock section 151c is corrected and, after a specific time interval elapses, repeats the steps from the step of sending monitor reply ①. Here, if it is judges that the correction of the clock section 151c is not required, after a specific time interval elapses, a monitor request ⑤ is sent to the base station radio 2.

The base station radio 2 receives monitor request ⑤ from the radio server 1, and sends a monitor reply ⑥ containing the spent time B.

Upon receiving the monitor reply ⑥ from the base station radio 2, the radio server 1 computes a difference (B-B') between the spent time B contained in the monitor reply and the spent time B' measured in the radio server 1, and judges whether or not a time correction is required in the clock section 151c. If it is judges that the correction is required in the clock section 151c, the operation is the same as that when the monitor reply ④ was received. If the correction is not required, a monitor request ⑦ is sent to the base station radio 2, after the specific time interval elapses.

Upon receiving the monitor request ⑦ from the radio server 1, the base station radio 2 sends a monitor reply ⑧ containing spent time C to the radio server 1. Subsequent steps are the same as those described earlier.

According to the above explanation, the spent time reset request in the base station radio 2 is sent by including the reset request in the monitor request, after correcting the time in the radio server 1. But the timing of sending the reset request may be made immediately after time correction. In this case, the base station radio 2 sends a reset reply to the reset request, and the radio server starts measuring the spent time on the basis of this reset query. Also, reset requests may be sent in specific time intervals (for example, 15 min). Also, if the operation in the spent time measuring section 152c in the radio server 1 is not overburdened, only one request may be sent at the time of reset in the radio server 1 (power-on, re-start events). This method has an advantage that errors in measured time is not accumulated.

### [Remote Control]

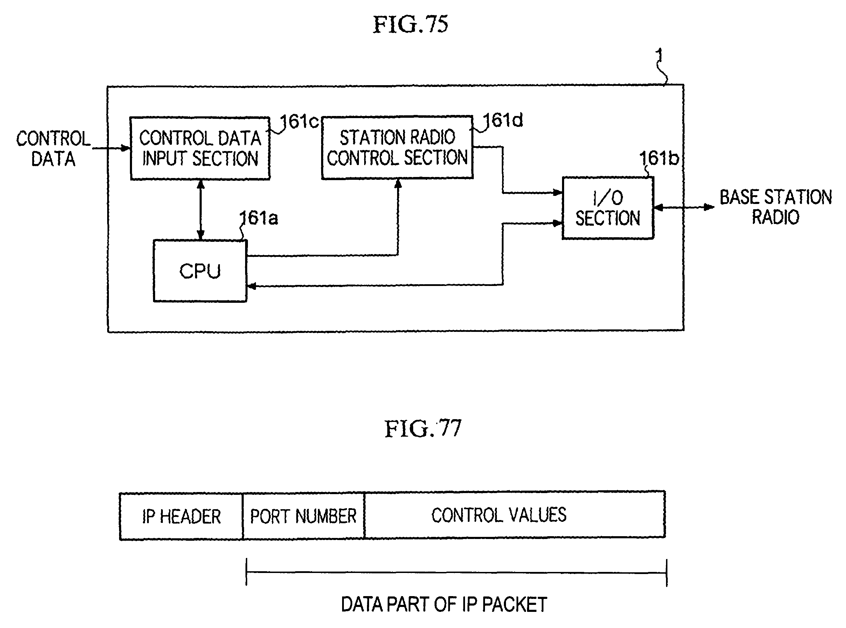

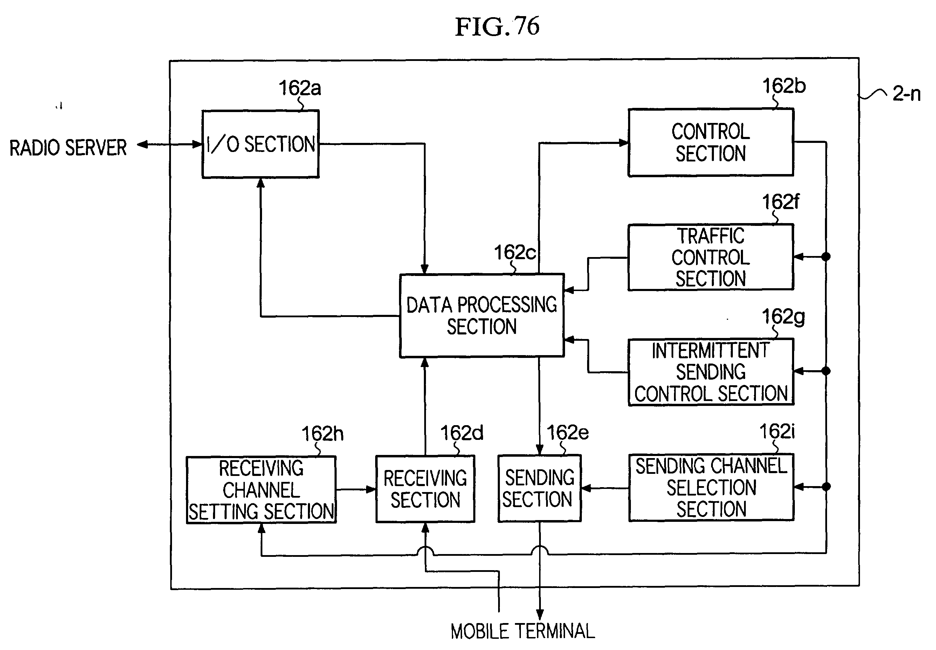

Figure 75 is a block diagram of the configuration of a radio server 1. Figure 76 is a block diagram of the configuration of a base station radio 2-n.

The radio server 1 in this embodiment comprises: a CPU 161a; a control data input section 161c; a station control section 161d; and an input/output section 161d. Also, the base station radio 2-n comprises: an input/output section 162a; a control section 162b, a data processing section 162c; a receiving section 162d; a sending section 162e; a traffic control section 162f; intermittent sending control section 162g; receiving channel control section 162h and sending channel selection section 162i.

Next, parameter selection for controlling the base station radio 2-n will be explained with reference to Figures 75, 76.

First, CPU 161a prompts an operator to input control data in the control data input section 161c. The operator enters control data from the data input section 161c provided in the radio server 1. A display apparatus device such as a monitor (not shown) and an inputting device such as a keyboard are connected to the control data input section 161c, and the operator follows the messages displayed on the monitor. The control data input relate to port numbers to identify an object and their values.

The control data input section 161c reads the control data input by the operator. Then, CPU 161 a accepts the control data input from the control data input section 161c, and forwards the data to the station control section 161d.

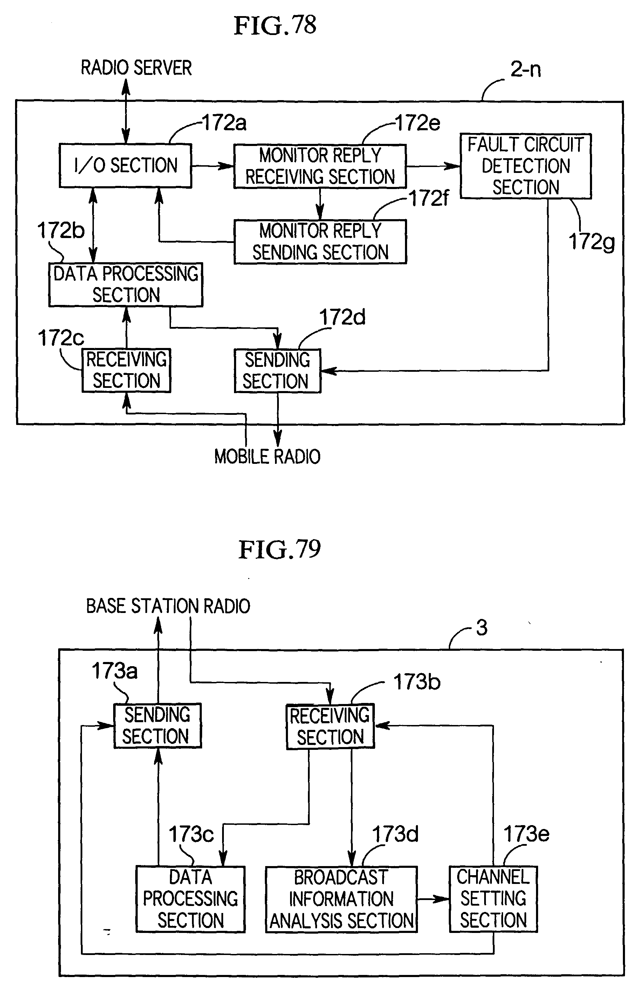

Next, the station control section 161d converts the control data received from CPU 161a to packet data. The packet data comprise an IP header and an IP data section(Fig.79). The IP data section is comprised by port numbers and control parameter values. The port numbers are number for relating the control objects. In this case, control data refer to IP packet data containing the control data entered by the operator. The control data are in the normal IP packet format.

Next, the station control section 161d forwards the control data from the input/output section 161b to the base station radio 2-n. The sending protocol is user datagram protocol/Internet protocol (UDP/IP). The UDP/IP protocol allows control data to be sent at high speeds.

Accordingly, because the radio server 1 sends control data in the IP packet format, there is no need for providing a dedicated circuit line for control purposes.

Next, the operation of the system using the control data sent from the radio server 1 to control the base station radio 2-n will be explained.

First, the data processing section 162c receives IP packet data from the input/output section 162a. Then, the data processing section 162c analyzes the IP packet data received, and judges whether the IP packet is control data sent from the radio server 1 according to whether or not the port numbers are included.

If the IP packet data are not control data but normal IP packet data, the data processing section 162c sends the data to mobile radio 3 from the data sending section 162e.

On the other hand, if the IP packet data contain port numbers, the data processing section 162c extracts port numbers and control data from the IP packet, and forwards them to the control section 162b.

The control section 162b holds the port numbers and control data received from the data processing section 162c in the control section 162b.

Next, the control section 162c specifies the control objects and passes the control data according to the port numbers held therein.

The objects for control include received channel selection section 162h, sending channel selection section 162i, intermittent sending control section 162g and traffic control section 162f.

Next, the following descriptions relate to the actions of various objects when the control parameters and control processes are imposed on these objects.

Upon receiving the control parameters from the control section 162b, the traffic control section 162f controls the data processing section 162c according to the control parameters to provide the traffic control described earlier.

Upon receiving control parameters from the control section 162b, the intermittent sending control section 162g controls the data processing section 162c according to the control parameters to provide the intermittent sending control described earlier.

Upon receiving control parameters from the control section 162b, the receiving channel control section 162h controls the receiving section 162d according to the control parameters to switch the receiving-channel. The receiving section 162 switches the operational channels according to the control parameters input from the receiving channel selection section 162h.

Upon receiving control parameters from the control section 162b, the sending control section 162f controls the sending section 162e according to the control parameters to switch the receiving-channel.

Accordingly, the base station radio 2-n is controlled by control parameters input remotely from the radio server 1.

Also, because of the remote control of the base station radio 2-n effected by the radio server 1, the need for the operator to travel to the site of the base station radio 2-n to carry out necessary tasks.

It should be noted that the communication protocol between the radio server 1-1 and the base station radio 2-n may be according to TCP/IP.

Figure 78 is a block diagram of the configuration of the base station radio 2-n, comprised by: an input/output section 172a; a data processing section 172b; a receiving section 172c for received data sent from the mobile radio 3; a sending section 172d for sending data to the mobile radio 3; a station monitor request receiving section 172e for receiving station monitor requests sent periodically from the radio server 1; monitor reply sending section 172f for replying to the monitor request; a circuit problem detection section 172g for detecting problems in the circuits by examining whether monitor requests are being sent periodically.

Figure 79 is a block diagram of the configuration of the mobile radio 3, comprised by: a sending section 173a for sending data to the base station radio 2-n; a receiving section 173b for received data sent from the base station radio 2-n; a data processing section 173c; a broadcast information analysis section 173d for analyzing broadcast information from the base station radio 2-n; a channel selection section 173e for selecting channels for the sending section 173a and the receiving section 173b.

Next, normal operations between the radio server 1-1 and the base station radio 2-n will be explained with reference to the diagrams. The base station radio 2-1 will be used as the typical case.

First, the operation of the radio server 1 to monitor the base station radio 2-1 will be explained.

The radio server 1 sends station monitor request to the base station radio 2-1. In response, the input/output section 172a inputs a station monitor request.

Next, the monitor request receiving section 172e judges whether or not the data input in the input/output section 172a relate to a station monitor request, and if it is a monitor request, the data are received. Then, the monitor request receiving section 172e sends the monitor request from the radio server 1 to the monitor reply sending section 172f, and reports that the data are received normally.

In response, the monitor reply sending section 172f reports to the radio server 1 that the monitor request has been sent normally from the input/output section 172a.

Accordingly, the radio server 1 checks whether the base station radio 2-n is operating normally by sending a monitor request and checking whether a monitor reply has been received.

Next, the data transfer operations between the radio server 1 and the mobile radio 3 will be explained.

First, the data sent from the radio server 1 are input in the input/output section 172a. Then, if the packet input in the input/output section 172a is normal packet, the data processing section 172b is accepted, and a header for the mobile radio 3-1 (receiver) is attached, and the packet is sent to the mobile radio 3-1 from the sending section 172d.

In response, the receiving section 173 of the mobile radio 3 receives the packet, and forwards the packet to the data processing section 173c. The data processing section 173c performs steps necessary such as display the data on a display device (not shown).

In the meantime, the data input from the input section (not shown) provided in the mobile radio 3 are convened to a packet in the data processing section and are sent from the sending section 173a to the base station radio 2-1.

In response, the receiving section 172c of the base station radio 2-1 receives the packet and forwards the packet to the data processing section 172b. The data processing section 172b converts the packet format to the format used for the radio server 1, and sends the packet from the input/output section 172a to the radio server 1.

Accordingly, data transfer operations are carried out between the radio server 1 and the mobile radio 3.

Next, the following explanation relates to a process for remedying circuit problems. In this example, it is assumed that a problem exists in the circuit 4-1 connecting the radio server 1 and the base station radio 2-1.

If communication between the radio server 1 and the base station radio 2-1 cannot be carried out because of the problem in the circuit 4-1, station monitor requests that are supposed to be sent to the base station radio 2-1 are not being sent.

The monitor request receiving section 172e waits for a given interval of time, but if the monitor request is not received, a notice is sent to the circuit problem detection section 172g that the monitor request cannot be received.

In response, the circuit problem detection section 172g broadcasts from the sending section 172d to terminals within the operating district that the circuit has a problem. The information broadcast from the base station radio 2-1 includes, in addition to report on the circuit problem, information on the operational channels used by the peripheral base station radio 2-n in the neighborhood of the base station radio 2-1 (in this example, it is base station radio 2-2).

The receiving section 173b in the mobile radio 3 receives this broadcast information. The broadcast information analysis section 173d analyzes the information received, and if the content indicates a circuit problem, operational channels used by the peripheral base stations contained in the broadcast information are extracted and notified to the channel selection section 173e.

The channel selection section 173e notifies the sending section 173a and the receiving section 173b to change the operational channel to one of the notified channels. In response, the sending section 173a and the receiving section 173b change the operating channel to a suitable channel, and attempt to communicate with the peripheral base station radio 2-n. If a line can be secured, this line is used in the normal manner.

Accordingly, by notifying circuit problems to the mobile radio 3, which attempts communication with the peripheral base station radio 2-n, a line can be secured.

Also, when attempting to establish communication with the peripheral base station radio 2-n, it is permissible to lower the threshold value for signal reception so as to facilitate re-establishing communication.

Also, when attempting to establish communication by switching from the base station radio 2-1 to base station radio 2-2, and if the base station radio 2-2 reports a circuit problem, it is highly probable that the problem may be with the radio server 1 so that base station radios connected to other radio servers may be tested.

The processes described above may be performed by recording application programs for performing the processes, and loading the programs in a computer system. Computer system, in this context, includes any operating systems (OS) and peripheral hardwares. Computer system may also include the use of world wide webs and home page portals. Computer readable recording media include portable media such as floppy disks, opto-magnetic disks, ROM, CD-ROM, as well as fixed devices such as hard disks housed in computer systems.

Computer-readable recording media further include short-term dynamic memories (transmission media inclusive of wave signals) used in transmitting applications through such means as networks such as Internet or telephone circuits, as well as other short-term memories such as volatile memories used in servers and client computer systems. Application programs may perform a part of the described functions, or may be operated in conjunction with pre-recorded programs stored in computer systems, so-called differential files (difference programs).

## Claims

1. A radio server( 1-n) to connect a mobile terminal (4-n) to the Internet (16) by establishing radio communication between a base station radio (2-n) that is connected to said radio server and a mobile radio (3-n) that is connected to said mobile terminal, comprising:
a backbone input/output section (1a) for exchanging packet data with the Internet;
a base station input/output section (1b) for exchanging packet data with said base station radio that communicates with said mobile radio by radio signals;
a connection processing section (1c) for connecting said mobile terminal to the Internet; and
a memory section (1d) for storing data required by said connection processing section.

2. A radio server according to claim 1, wherein said radio server is further provided with a route processing section (1e) for routing packet data exchanged between a mobile terminal and the Internet.

3. A radio server according to claim 1 or 2, wherein said radio server is further provided with a remote NAT processing section (1f) for converting addresses used by a host server (20) in communicating with a mobile terminal by way of the Internet.

4. A radio server according to one of claims 1 to 3, wherein said radio server is further provided with a DHCP relay agent processing section (1g), for processing an IP address request sent by a mobile terminal, by sending an IP address request packet, on behalf of said mobile terminal, to another radio server connected to a network different than a network to which said radio server is connected, and receiving a reply packet on behalf of said mobile terminal.

5. A radio server according to one of claims 1 to 4, wherein said radio server is further provided with a pseudo-proxy processing section (1h) for enabling to use functional servers of a mobile terminal without changing control parameters allocated to said mobile terminal, when said mobile terminal relocates from one operational district controlled by said radio server to another operational district controlled by another radio server.

6. A radio server according to one of claims 1 to 5, wherein said radio server is further provided with a cooperative algorithm processing section (1i) for selecting an operational frequency for a base station radio that does not interfere with an operational frequency being used by another base station radio.

7. A radio server according to one of claims 1 to 6, wherein said radio server is further provided with an authentication processing section (1j) for approving a connection for a mobile radio in response to a registration request sent by said mobile radio.

8. A radio server according to one of claims 1 to 7, wherein said radio server is further provided with a search-and-call processing section (1k) for broadcasting a search-and-call request containing an IP address for a mobile terminal to all base station radios, and sending packet data to said mobile terminal by way of a base station radio that responded to said search-and-call request.

9. A radio server according to one of claims 1 to 8, wherein said radio server is further provided with a time correction processing section (1m) for adjusting clock means provided in said radio server according to a query and a response exchanged between a base station radio and said radio server.

10. A radio server according to one of claims 1 to 9, wherein said radio server is further provided with a remote control processing section (1n) for controlling a base station radio remotely.

11. A radio server according to one of claims 1 to 10, wherein said radio server allocates an IP address for a mobile radio when authenticating a registration of said mobile radio.

12. A radio server according to claim 11, wherein said radio server allocates an IP address to a mobile radio so that said IP address is related to a pre-allocated IP address of a base station radio being connected to said radio server for communication with said mobile radio.

13. A base station radio (2-n) to connect a mobile terminal (4-n) to a radio server (1-n) by establishing radio communication with said mobile terminal, comprising:
a radio server input/output section (2a) for exchanging packet data with said radio server;
a mobile radio input/output section (2b) for exchanging packet data with said mobile radio by radio signals;
a connection processing section (2c) for connecting said mobile radio to said radio server; and
a memory section (2d) for storing data required by said connection processing section.

14. A base station radio according to claim 13, wherein said base station radio is further provided with a time correction processing section (2e) for notifying a time error of said radio server according to internal clock means provided in said base station.

15. A base station radio according to one of claim 13 or 14, wherein said base station radio is further provided with a remote control processing section (2f) for operating according to control data sent from said radio server.

16. A base station radio according to one of claims 13 to 15, wherein said base station radio is further provided with a malfunction processing section (2g) for detecting a line fault in a circuit communicating with said radio server according to whether or not periodic monitoring signals are being sent from said radio server.

17. A base station radio according to one of claims 13 to 16, wherein said base station radio is further provided with a packet processing section (2h) for analyzing an incoming packet containing first data and second data sent from a mobile radio, to obtain a data length contained in said second data so as to receive entire data contained in said incoming packet without interruption, and terminating data reception when a data volume defined by said data length has been received.

18. A mobile radio (3-n) for establishing radio communication with a base station radio (2-n) that is connected to a radio server (1-n) comprising:
a base station input/output processing section (3a) for exchanging packet data with said base station radio;
a mobile terminal input/output processing section (3b) for exchanging packet data with a mobile terminal;
a connection processing section (3d) for connecting said mobile terminal to said base station radio; and
a memory section (3d) for storing data required by said connection processing section.

19. A mobile radio according to claim 18, wherein said mobile radio is further provided with an authentication section (3e) for requesting an authentication for connecting to said radio server.

20. A mobile radio according to claim 18 or 19, wherein said mobile radio is further provided with an in-district search processing section (3f) for receiving an incoming packet containing first data followed by second data, sent from a current base station by radio signals; analyzing said first data to obtain a destination address; and if said packet is not addressed to said mobile radio, detecting and storing an electrical field strength of a sending channel of another base station radio whose operational range is adjacent to an operational district of said current base station radio, during a sending interval of said second data.

21. A mobile radio according to one of claims 18 to 20, wherein said mobile radio is further provided with a dual scan processing section (3g) so that, when a first base station radio is not available for a radio connection, a second base station radio is selected for radio communication from a plurality of available peripheral base station radios whose operational districts are adjacent to an operational district of said first base station radio.

22. A mobile radio according to one of claims 18 to 21, wherein said mobile radio is further provided with a roaming/handoff processing section (3h) for receiving operational frequencies sent from a base station radio, and selecting an up-frequency by successively switching received operational frequencies while referencing a priority table, so that only when an up-frequency received matches a permissible frequency for said mobile radio, a location registration is sent using said up-frequency.

23. A mobile radio according to one of claims 18 to 21, wherein said mobile radio is further provided with a packet transfer processing section (3i) for analyzing an incoming packet containing first data followed by second data sent from a base station radio to obtain a data length contained in said second data so as to receive entire data contained in said incoming packet without interruption, and terminating data reception when a data volume defined by said data length has been received.

24. A mobile radio according to one of claims 18 to 23, wherein said mobile radio is further provided with a dummy processing section (3j) for judging whether a mobile radio has moved from one operational district to other operational district according to broadcast information sent from a base station radio, and sending a district change notice to said radio server when said mobile radio has moved into said other operational district.

25. A mobile radio according to one of claims 18 to 24, wherein said mobile radio is further provided with an IP multicast information processing section (3k) for receiving multicast information distributed by said radio server.

26. A mobile radio according to one of claims 18 to 25, wherein said mobile radio is further provided with a broadcast information processing section (3m) for extracting only necessary data from broadcast information.

27. A mobile radio according to one of claims 18 to 26, wherein said mobile radio is further provided with a malfunction processing section (3n) for analyzing information received from a base station radio, and if said information is a broadcast information indicating a circuit malfunction, selecting an operational channel used by peripheral base station radios contained in said broadcast information, and establishing a communication circuit with a peripheral base station radio.
